# EUROPEAN PATENT APPLICATION

(11) **EP 3 849 217 A1**
(43) Date of publication of application: **14.07.2021**
(21) Application number: 20195983.0
(22) Date of filing: 14.09.2020
(51) Int. Cl.: H04W 4/021, H04W 28/02, H04W 36/32, H04W 48/18, H04W 88/06

(54) **MANAGEMENT OF A RELIABLE INDUSTRIAL CONTROL SYSTEM VIA DEDICATED CELLULAR NETWORK**

(30) Priority: 09.01.2020 US 202062959141 P; 24.04.2020 US 202063015269 P; 20.05.2020 US 202063027372 P; 26.08.2020 US 202017003157
(71) Applicant: MyOmega Systems GmbH, 90411 Nürnberg (DE)
(72) Inventor: Moeller, Bernd, 91239 Henfenfeld (DE)
(74) Representative: Freischem & Partner Patentanwälte mbB

(57) **Abstract**

Communicating between components that are part of an IP network and a control device includes coupling the IP network to a dedicated cellular network, the control device communicating directly with network components of the dedicated cellular network, and transferring data between the components and the control device at a quality of service levels that corresponds to a quality of service level provided for voice communications in a non-dedicated cellular network. The IP network may include a cloud having core services that provide control signals to the control device. Quality of service parameters may be prioritized by an ICS management component of the core services of the cloud. The ICS management component may provide cellular network services parameters that are used to control the core services of the cloud and the quality of service parameters. A subset of resources of the dedicated cellular network may be reserved for industrial control systems.

## Description

### CROSS-REFERENCE TO RELATED APPLICATION

This application claims priority to U.S. provisional patent application no. 62/959,141 filed on January 9, 2020 titled "SECURE IOT CONNECTOR" and U.S. provisional patent application no. 63/015,269 filed on April 24, 2020 titled "SECURE OPERATIONS FOR ICS", and on U.S. provisional patent application no. 63/027,372 filed on May 20, 2020 titled "SECURE OPERATIONS FOR ICS", all of which are incorporated by reference herein.

### TECHNICAL FIELD

This application is directed to the field of operational technology and industrial control networks, and more particularly to the field of secure monitoring and management of industrial control networks.

### BACKGROUND OF THE INVENTION

Operational Technology (OT) refers to computer technology employed to monitor, control and automate the physical state of a system, for example, the control system of an industrial site, power plant, power grid, communication network, factory, laboratory, transportation system, etc. Such a control system may be referred to herein as an industrial control system (ICS). An ICS may employ any of a variety of OT, including, for example, programmable logic controllers (PLCs), supervisory control and data acquisition (SCADA) technology, and any of a variety of known protocols, including, for example, PROFINET (Process Field Net), PROFIBUS (Process Field Bus), Ethernet/IP (Industrial Protocol) and OPC UA (Unified Architecture). An ICS would also include I/O capabilities.

An ICS may be part of, or locally connected to, a proprietary network of an entity, where the proprietary network employs information technology (IT) to provide organizational (e.g., corporate, governmental, academic) management of the ICS on behalf of the entity and/or affiliates thereof. Such a proprietary network may be referred to herein as an organizational management network (OMN).

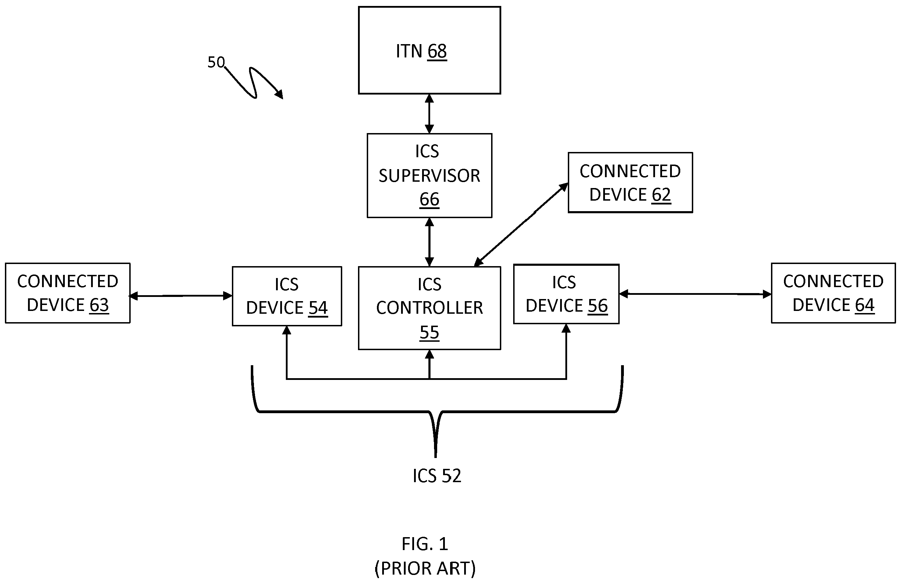

FIG. 1 illustrates an example of an OMN 50. The OMN 50 may include an ICS 52 having a plurality of ICS devices 54-56, such as PLCs, connected to, and monitoring and/or controlling, a plurality of connected devices 62-64, such as valves, actuators, pumps, tanks, switches, etc. As used herein, an "ICS device" or "control device" is a device on an ICS configured to control one or more connected devices and communicate with one or more other devices on the ICS in accordance with one or more OT and/or ICS protocols, including protocols described herein. Although only three ICS devices and other connected devices are shown in FIG. 1, it should be appreciated that an ICS may include more or less than three ICS devices connected to more or less than three connected devices. It should further be appreciated that each ICS device may be connected to, monitor and/or control multiple connected devices. The ICS device 55 may be an ICS controller, which may be configured (e.g., in accordance with PROFINET) to serve the additional role of monitoring and controlling other ICS devices on the ICS, such as the ICS devices 54, 56.

The ICS controller 55 may be communicatively coupled to an ICS supervisor 66 (e.g., a PROFINET supervisor), where the ICS supervisor 66 may be, or may include, software running on a computer (e.g., a non-PLC computer such as, for example, a laptop or desktop computer). The ICS supervisor 66 may be used by a system administrator to manage aspects of the ICS 52 by, for example, setting parameters on and monitoring information produced from the ICS devices 54-56. The ICS supervisor 66 may be configured in accordance with one or more protocols to perform SCADA (supervisory control and data acquisition) functionality for the ICS 52. The ICS supervisor 66 may serve as an interface between an information technology network (ITN) 68 of the OMN 50 and the ICS 52. For example, the ITN 68 may be an office network of the organization associated with the OMN 50. The ITN 68, via the ICS supervisor 66, may provide manufacturing executive-level functionality, enterprise resource-level functionality and other functionality for the ICS 52.

In some cases, the ICS supervisor 66 may be implemented on a relatively insecure system (e.g., compared to a PLC designed for an ICS), for example, a desktop (e.g., PC) or laptop computer. Because of security concerns, the ICS supervisor 66 may not be left continuously connected to the ICS 52, but rather, may be connected and employed as needed, for example, in response to an event or per a predefined schedule. Similarly, the ITN 68 and components thereof may not be as secure as the ICS 52 and the ICS devices 54-56. Furthermore, the ICS supervisor 66 (e.g., the SCADA functionality thereof) may be implemented with software from a vendor different from a vendor that provides other components, such as software on the ICS 52, manufacturing executive software, enterprise resource software, and/or other software on the ITN 68. Accordingly, much coordination may be required to implement workflow and business functionality between the ICS devices 54-56, the ICS supervisor 66 and components on the ITN 68, thus potentially causing inefficiencies, delays, and insecurities on the OMN 50.

Furthermore, the ICS 52 may be connected to public and private network clouds according to any of a variety of known architectures. Networks including a network cloud (public or private) connected to one or more ICSs, and which may include at least a portion of an OMN to which the ICS belongs, may be referred to herein as an ICS-cloud network (ICN). Connecting an ICS to a cloud network (as part of an ICN or otherwise) introduces further cybersecurity vulnerabilities. Some sources estimate that cyber-security breaches have resulted in at least ten major electrical outages, sixty nuclear power plant cyber incidents with more than fifteen resulting in reactor shutdowns, fifty cases involving significant environmental releases, one hundred cases involving physical equipment damage (excluding servers or other IT equipment), and more than thirty billion dollars in damages, including electric outages, pipeline failures, dam failures, bankruptcy of several companies as a result. Specific examples of cyber-security breaches of ICSs include the Stuxnet computer worm attack on uranium enrichment centrifuges in Iran, the Prykarpattya Oblenergo cyberattack on a Ukraine power grid and the DragonFly malware attack on ICSs in the US and Europe.

Existing ICNs offer limited cyber-security for the components of the ICS and the OT data generated thereby to protect against cyber threats. Some solutions encrypt OT data during transmission from an ICS to a public cloud, for example, using VPN tunnels and/or TLS-layer security, and rely on whatever protection is afforded by the cloud provider for the data at rest, such as encryption. Other security solutions include so-called demilitarized zones (DMZs), which are physically discrete sub-networks that serve as security buffers between an ICS and a remainder of an ICN, and which can provide firewalls and latency between the ICS and the remainder of the ICN.

However, existing security solutions for ICNs are lacking. None of the conventional solutions provide CC-EAL3 (Common Criteria-Evaluation Assurance Level 3) or better security protection. Furthermore, none of the ICN security solutions on the market today provide end-to-end encryption of OT data from an ICS (e.g., a PLC of the ICS) to the storage of the OT data on the cloud (e.g., on a server in the cloud). In addition, ICSs may not adequately protect the integrity of software running on ICS devices of an ICS.

What is desired is an ICS-cloud network with improved cybersecurity, including end-to-end protection of OT data, and communications thereof, from an ICS to cloud storage, for example, providing CC-EAL3 protection and meet the requirements of IEC-62443 or better. What is also desired in a more efficient and reliable way to communicate OT data from an ICS to a cloud and to record the OT data on the cloud.

### SUMMARY OF THE INVENTION

According to the system described herein, securely deploying a software component to a control device of an industrial control system includes generating a first validation credential, generating a second validation credential corresponding to the first validation credential, installing the second credential on the control device, generating a digital signature or a hash value using the first validation credential, associating the digital signature or the hash value with the software component, transmitting the software component and the digital signature or the hash value to the control device, validating the digital signature or the hash value using the second validation credential, and, in response to the digital signature or the hash value being valid, installing the software component on the control device. The first validation credential may be generated and stored within a hardware security module and may be inaccessible from outside of the hardware security module. Securely deploying a software component to a control device of an industrial control system may also include establishing a secure channel to the control device using a private communication credential that is stored within a secure component of the control device and is inaccessible from outside of the secure component and transmitting the software component to the control device over the secure channel. Securely deploying a software component to a control device of an industrial control system may also include establishing a public communication credential that corresponds to the private communication credential, the public communication credential being stored outside of the control device and useable for validating the private communication credential. Securely deploying a software component to a control device of an industrial control system may also include storing the public communication credential in the hardware security module and/or a cloud. Securely deploying a software component to a control device of an industrial control system may also include establishing a secure channel to the control device using a private communication credential that is stored outside of the control device, establishing a public communication credential that corresponds to the private communication credential, the public communication credential being stored inside the control device and useable for validating the private communication credential, and transmitting the software component to the control device over the secure channel. Securely deploying a software component to a control device of an industrial control system may also include storing the private communication credential inside a secure credential service and/or inside a hardware security module. The secure channel may be a TLS channel. Securely deploying a software component to a control device of an industrial control system may also include generating a master security credential within a secure component of the control device, where the master security credential is inaccessible from outside of the secure component, encrypting the second validation credential using the master security credential, and storing the encrypted second validation credential outside of the secure component on the control device. Validating the digital signature or the hash value using the second validation credential may include applying the master security credential to decrypt the second validation credential and verifying the digital signature or the hash value using the decrypted second validation credential. The secure component may implement a root of trust on the control device. The second validation credential may be derived from the first validation credential. Associating the digital signature or the hash value with the software component may include appending the digital signature or the hash value to the software component. The first validation credential may be a private key and the second validation credential may be a corresponding public key. The second validation credential may be provided in a digital certificate that is digitally signed by a trusted authority. The trusted authority may be a certification authority, a secure credential service and/or a hardware security module.

According further to the system described herein, a system for securely deploying a software component to a control device of an industrial control system includes one or more processors and a memory coupled to the one or more processors and having code thereon that, when executed by the one or more processors, generates a first validation credential, generates a second validation credential corresponding to the first validation credential, installs the second credential on the control device, generates a digital signature or a hash value using the first validation credential, associates the digital signature or the hash value with the software component, transmits the software component and the digital signature or the hash value to the control device, validates the digital signature or the hash value using the second validation credential, and, in response to the digital signature or the hash value being valid, installing the software component on the control device. The first validation credential may be generated and stored within a hardware security module and may be inaccessible from outside of the hardware security module. The memory may also have code thereon that, when executed, establishes a secure channel to the control device using a private communication credential that is stored within a secure component of the control device and is inaccessible from outside of the secure component and transmits the software component to the control device over the secure channel. The memory may also have code thereon that, when executed, establishes a public communication credential that corresponds to the private communication credential, the public communication credential being stored outside of the control device and useable for validating the private communication credential. The memory may also have code thereon that, when executed, stores the public communication credential in the hardware security module and/or a cloud. The memory may also have code thereon that, when executed, establishes a secure channel to the control device using a private communication credential that is stored outside of the control device, establishes a public communication credential that corresponds to the private communication credential, the public communication credential being stored inside the control device and useable for validating the private communication credential, and transmits the software component to the control device over the secure channel. The memory may also have code thereon that, when executed, stores the private communication credential inside a secure credential service and/or inside a hardware security module. The secure channel may be a TLS channel. The memory may also have code thereon that, when executed, generates a master security credential within a secure component of the control device, where the master security credential is inaccessible from outside of the secure component, encrypts the second validation credential using the master security credential, and stores the encrypted second validation credential outside of the secure component on the control device. Validating the digital signature or the hash value using the second validation credential may include applying the master security credential to decrypt the second validation credential and verifying the digital signature or the hash value using the decrypted second validation credential. The secure component may implement a root of trust on the control device. The second validation credential may be derived from the first validation credential. Associating the digital signature or the hash value with the software component may include appending the digital signature or the hash value to the software component. The first validation credential may be a private key and the second validation credential may be a corresponding public key. The second validation credential may be provided in a digital certificate that is digitally signed by a trusted authority. The trusted authority may be a certification authority, a secure credential service and/or a hardware security module.

According further to the system described herein, non-transitory computer readable media has software stored thereon that securely deploys software to a control device of an industrial control system. The software includes executeable code that generates a first validation credential, executeable code that generates a second validation credential corresponding to the first validation credential, executeable code that installs the second credential on the control device, executeable code that generates a digital signature or a hash value using the first validation credential, executeable code that associates the digital signature or the hash value with the software component, executeable code that transmits the software component and the digital signature or the hash value to the control device, executeable code that validates the digital signature or the hash value using the second validation credential, and executeable code that installs the software component on the control device in response to the digital signature or the hash value being valid. The first validation credential may be generated and stored within a hardware security module and may be inaccessible from outside of the hardware security module. The software may also include executable code that establishes a secure channel to the control device using a private communication credential that is stored within a secure component of the control device and is inaccessible from outside of the secure component and executable code that transmits the software component to the control device over the secure channel. The software may also include executable code that establishes a public communication credential that corresponds to the private communication credential, the public communication credential being stored outside of the control device and useable for validating the private communication credential. The software may also include executable code that stores the public communication credential in the hardware security module and/or a cloud. The software may also include executable code that establishes a secure channel to the control device using a private communication credential that is stored outside of the control device, executable code that establishes a public communication credential that corresponds to the private communication credential, the public communication credential being stored inside the control device and useable for validating the private communication credential, and executable code that transmits the software component to the control device over the secure channel. The software may also include executable code that stores the private communication credential inside a secure credential service and/or inside a hardware security module. The secure channel may be a TLS channel. The software may also include executable code that generates a master security credential within a secure component of the control device, where the master security credential is inaccessible from outside of the secure component, executable code that encrypts the second validation credential using the master security credential, and executable code that stores the encrypted second validation credential outside of the secure component on the control device. Validating the digital signature or the hash value using the second validation credential may include applying the master security credential to decrypt the second validation credential and verifying the digital signature or the hash value using the decrypted second validation credential. The secure component may implement a root of trust on the control device. The second validation credential may be derived from the first validation credential. Associating the digital signature or the hash value with the software component may include appending the digital signature or the hash value to the software component. The first validation credential may be a private key and the second validation credential may be a corresponding public key. The second validation credential may be provided in a digital certificate that is digitally signed by a trusted authority. The trusted authority may be a certification authority, a secure credential service and/or a hardware security module.

According further to the system described herein, communicating using an industrial control system includes storing a private communication credential within a secure component of a first control device of the industrial control system, the private communication credential being inaccessible from outside of the secure component, the first control device detecting information indicative of a state of one or more properties of a connected device of the industrial control system, the first control device creating a transaction record based on the information, the first control device establishing a secure communication channel with a component of a thing management network (TMN) using the private communication credential, the component being separate from the industrial control system, and transmitting the transaction record to the component over the secure communication channel. The private communication credential may be an asymmetric key pair and another key of the asymmetric key pair may be provided at the component of the TMN Communicating using an industrial control system may also include using another asymmetric key pair for establishing the secure channel, where a private key of the other asymmetric key pair is stored inside the component of the TMN and a corresponding public key is stored inside the control device and outside the secure component. The private key of the other asymmetric key pair may be stored inside a secure component and may be inaccessible from outside of the secure component. The secure channel may be a TLS channel. Communicating using an industrial control system may also include establishing a different secure communication channel between the first control device and a second control device of the industrial control system using secure credentials of the control devices. Establishing the different secure communication channel may use a symmetric key that is stored on the first control device and on a second control device of the industrial control system. The different secure channel may be a DTLS channel. There may be two communication directions and establishing the different secure communication channel may use at least one asymmetric key pair for each of the communication directions. The different secure channel may be a TLS channel. Communicating using an industrial control system may also include exchanging information between the control devices over the different secure communication channel. The second control device may transmit information to the first control device over the different secure communication channel in response to receiving information from a connected device of the TMN. Communicating using an industrial control system may also include storing a blockchain credential within the secure component or as an encrypted TPM object at the nonvolatile memory outside of the secure component and generating a hash value using the blockchain credential. During production of the first control device, the private communication credential and the blockchain credential may be installed in the secure component and the secure component may be locked against any external manipulation and outside access. Communicating using an industrial control system may also include a component of the TMN authenticating the transaction record that was generated as part of the blockchain transaction by the first control device, based on the authentication, providing a hash validation of the transaction record, and storing the transaction record on the TMN as part of a blockchain. Authentication of the transaction record may be done using a credential corresponding to the blockchain credential. During production of the first control device, the private communication credential may be installed in the secure component and the secure component may be locked against any external manipulation and outside access. Communicating using an industrial control system may also include implementing a root of trust on the first control device.

According further to the system described herein, a control device of an industrial control system includes an interface that couples the control device to a thing management network (TMN), a secure component having stored thereon a private communication credential that is inaccessible from outside of the secure component, one or more processors, and a memory coupled to the one or more processors and having code thereon that, when executed by the one or more processors, detects information indicative of a state of one or more properties of a connected device of the industrial control system, creates a transaction record based on the information, establishes a secure communication channel with a component of a thing management network (TMN) using the private communication credential, the component being separate from the industrial control system, and transmits the transaction record to the component over the secure communication channel. The private communication credential may be one of an asymmetric key pair and another key of the asymmetric key pair may be provided at the component of the TMN. The memory may also have code thereon that, when executed, uses another asymmetric key pair for establishing the secure channel, a private key of the other asymmetric key pair being stored inside the component of the TMN and a corresponding public key being stored inside the control device and outside the secure component. The private key of the other asymmetric key pair may be stored inside a secure component and may be inaccessible from outside of the secure component. The secure channel may be a TLS channel. The memory may also have code thereon that, when executed, establishes a different secure communication channel between the first control device and a second control device of the industrial control system using secure credentials of the control devices. Establishing the different secure communication channel may use a symmetric key that is stored on the first control device and on a second control device of the industrial control system. The different secure channel may be a DTLS channel. There may be two communication directions and establishing the different secure communication channel may use at least one asymmetric key pair for each of the communication directions. The different secure channel may be a TLS channel. The memory may also have code thereon that, when executed, exchanges information between the control devices over the different secure communication channel. The second control device may transmit information to the first control device over the different secure communication channel in response to receiving information from a connected device of the TMN. The memory may also have code thereon that, when executed, stores a blockchain credential within the secure component or as an encrypted TPM object at the nonvolatile memory outside of the secure component and generates a hash value using the blockchain credential. During production of the first control device, the private communication credential and the blockchain credential may be installed in the secure component and the secure component may be locked against any external manipulation and outside access. A component of the TMN may authenticate the transaction record that was generated as part of the blockchain transaction by the first control device and the memory may also have code thereon that, when executed, provides a hash validation of the transaction record based on the authentication and stores the transaction record on the TMN as part of a blockchain. Authentication of the transaction record may be done using a credential corresponding to the blockchain credential. During production of the first control device, the private communication credential may be installed in the secure component and the secure component may be locked against any external manipulation and outside access. The memory may also have code thereon that, when executed, implements a root of trust on the first control device.

According further to the system described herein, non-transitory computer readable media contains software that communicates using an industrial control system having a control device that stores a private communication credential within a secure component of the control device of the industrial control system. The private communication credential is inaccessible from outside of the secure component. The software includes executable code that detects information indicative of a state of one or more properties of a connected device of the industrial control system, executable code that creates a transaction record based on the information, executable code that establishes a secure communication channel with a component of a thing management network (TMN) using the private communication credential, the component being separate from the industrial control system, and executable code that transmits the transaction record to the component over the secure communication channel. The private communication credential may be one of an asymmetric key pair and another key of the asymmetric key pair may be provided at the component of the TMN The software may also include executable code that uses another asymmetric key pair for establishing the secure channel, where a private key of the other asymmetric key pair is stored inside the component of the TMN and a corresponding public key is stored inside the control device and outside the secure component. The private key of the other asymmetric key pair may be stored inside a secure component and may be inaccessible from outside of the secure component. The secure channel may be a TLS channel. The software may also include executable code that establishes a different secure communication channel between the first control device and a second control device of the industrial control system using secure credentials of the control devices. Establishing the different secure communication channel may use a symmetric key that is stored on the first control device and on a second control device of the industrial control system. The different secure channel may be a DTLS channel. There may be two communication directions and establishing the different secure communication channel may use at least one asymmetric key pair for each of the communication directions. The different secure channel may be a TLS channel. The software may also include executable code that exchanges information between the control devices over the different secure communication channel. The second control device may transmit information to the first control device over the different secure communication channel in response to receiving information from a connected device of the TMN. The software may also include executable code that stores a blockchain credential within the secure component or as an encrypted TPM object at the nonvolatile memory outside of the secure component and executable code that generates a hash value using the blockchain credential. During production of the first control device, the private communication credential and the blockchain credential may be installed in the secure component and the secure component may be locked against any external manipulation and outside access. A component of the TMN may authenticate the transaction record that was generated as part of the blockchain transaction by the first control device and the software may further include executable code that provides a hash validation of the transaction record based on the authentication and executable code that stores the transaction record on the TMN as part of a blockchain. Authentication of the transaction record may be done using a credential corresponding to the blockchain credential. During production of the first control device, the private communication credential may be installed in the secure component and the secure component may be locked against any external manipulation and outside access. The software may also include executable code that implements a root of trust on the first control device.

According further to the system described herein, securely executing software on a control device of an industrial control system includes receiving an instruction to execute a software component on the control device, the software component having a digital signature or a hash value associated therewith, accessing a validation credential on the control device, applying the validation credential to determine if the digital signature or the hash value is valid, and, if the digital signature or the hash value is valid, executing the software component on the control device. The validation credential may be one of an asymmetric key pair and a key used to create the digital signature may be another key of the asymmetric key pair. The validation credential may be provided in a digital certificate that is digitally signed by a trusted authority. The key used to create the digital signature may be generated in a certification authority or in a hardware security module and stored in the certification authority or in the hardware security module. The validation credential may be generated within a hardware security module and stored unprotected within nonvolatile memory of the control device. Boot code may be stored in a nonvolatile memory of the control device and locked as a last step for production of the control device and locking may include E-fusing of all debug-interfaces of the CPU and disabling all interfaces to download software with exception of a secure channel used for mutual authentication, the boot code using the validation credential to validate integrity of an operating system and other apps on the control device. A software update of the control device may require mutual authentication with a cloud that includes establishing a secure channel to the control device using a private communication credential and transmitting the software component to the control device over the secure channel. The secure channel may be a TLS channel. Securely executing software on a control device of an industrial control system may also include establishing a public communication credential that corresponds to the private communication credential, the public communication credential being stored outside of the control device and used for validating the private communication credential. The private communication credential may be stored within a secure component of the control device and may be inaccessible from outside of the secure component. The public communication credential may be stored in a hardware security module and/or the cloud. Securely executing software on a control device of an industrial control system may also include using an asymmetric key pair to establish the secure channel, where a private key of the asymmetric key pair is stored outside the control device and a corresponding public key is stored inside the control device. The private key of the asymmetric key pair may be stored using a secure credential service and/or a hardware security module. The public key of the asymmetric key pair may be stored inside the nonvolatile memory of the control device. A software update of the control device may require execution of a root of trust with execution of the boot code, presence of a secure component with a private communication credential, and execution of mutual authentication with uplink and downlink communication with a cloud. The validation credential may be stored in the control device in an encrypted form and may be decrypted using a master security credential within a secure component of the control device prior to applying the validation credential to determine if the digital signature or the hash value is valid. The master security credential may be inaccessible from outside the secure component. The validation credential may have been encrypted on the control device using the master security credential during production of the control device prior to deployment of the control device in the industrial control system. The secure component may implement a root of trust on the control device. The validation credential may be a symmetric key that was used to create the digital signature or the hash value.

According further to the system described herein, a system for securely executing software on a control device of an industrial control system includes one or more processors and a memory having code thereon that, when executed by the one or more processors, receives an instruction to execute a software component on the control device, the software component having a digital signature or a hash value associated therewith, accesses a validation credential on the control device, applies the validation credential to determine if the digital signature or the hash value is valid, and, if the digital signature or the hash value is valid, executes the software component on the control device. The validation credential may be one of an asymmetric key pair and a key used to create the digital signature may be another key of the asymmetric key pair. The validation credential may be provided in a digital certificate that is digitally signed by a trusted authority. The key used to create the digital signature may be generated in a certification authority or in a hardware security module and stored in the certification authority or in the hardware security module. The validation credential may be generated within a hardware security module and stored unprotected within nonvolatile memory of the control device. Boot code may be stored in a nonvolatile memory of the control device and locked as a last step for production of the control device and locking may include E-fusing of all debug-interfaces of the CPU and disabling all interfaces to download software with exception of a secure channel used for mutual authentication, the boot code using the validation credential to validate integrity of an operating system and other apps on the control device. A software update of the control device may require mutual authentication with a cloud that includes establishing a secure channel to the control device using a private communication credential and transmitting the software component to the control device over the secure channel. The secure channel may be a TLS channel. The memory may also have code thereon that, when executed, establishes a public communication credential that corresponds to the private communication credential, the public communication credential being stored outside of the control device and used for validating the private communication credential. The private communication credential may be stored within a secure component of the control device and may be inaccessible from outside of the secure component. The public communication credential may be stored in a hardware security module and/or the cloud. The memory may also have code thereon that, when executed, uses an asymmetric key pair to establish the secure channel and a private key of the asymmetric key pair may be stored outside the control device and a corresponding public key may be stored inside the control device. The private key of the asymmetric key pair may be stored using a secure credential service and/or a hardware security module. The public key of the asymmetric key pair may be stored inside the nonvolatile memory of the control device. A software update of the control device may require execution of a root of trust with execution of the boot code, presence of a secure component with a private communication credential, and execution of mutual authentication with uplink and downlink communication with a cloud. The validation credential may be stored in the control device in an encrypted form and may be decrypted using a master security credential within a secure component of the control device prior to applying the validation credential to determine if the digital signature or the hash value is valid. The master security credential may be inaccessible from outside the secure component. The validation credential may have been encrypted on the control device using the master security credential during production of the control device prior to deployment of the control device in the industrial control system. The secure component may implement a root of trust on the control device. The validation credential may be a symmetric key that was used to create the digital signature or the hash value.

According further to the system described herein, non-transitory computer-readable media have software stored thereon that securely executes software on a control device of an industrial control system. The software includes executable code that receives an instruction to execute a software component on the control device, the software component having a digital signature or a hash value associated therewith, executable code that accesses a validation credential on the control device, executable code that applies the validation credential to determine if the digital signature or the hash value is valid, and executable code that executes the software component on the control device if the digital signature or the hash value is valid. The validation credential may be one of an asymmetric key pair and a key used to create the digital signature may be another key of the asymmetric key pair. The validation credential may be provided in a digital certificate that is digitally signed by a trusted authority. The key used to create the digital signature may be generated in a certification authority or in a hardware security module and stored in the certification authority or in the hardware security module. The validation credential may be generated within a hardware security module and stored unprotected within nonvolatile memory of the control device. Boot code may be stored in a nonvolatile memory of the control device and locked as a last step for production of the control device and locking may include E-fusing of all debug-interfaces of the CPU and disabling all interfaces to download software with exception of a secure channel used for mutual authentication, the boot code using the validation credential to validate integrity of an operating system and other apps on the control device. A software update of the control device may require mutual authentication with a cloud that includes establishing a secure channel to the control device using a private communication credential and transmitting the software component to the control device over the secure channel. The secure channel may be a TLS channel. The software may also include executable code that establishes a public communication credential that corresponds to the private communication credential, the public communication credential being stored outside of the control device and used for validating the private communication credential. The private communication credential may be stored within a secure component of the control device and may be inaccessible from outside of the secure component. The public communication credential may be stored in a hardware security module and/or the cloud. The software may also include executable code that uses an asymmetric key pair to establish the secure channel, where a private key of the asymmetric key pair is stored outside the control device and a corresponding public key is stored inside the control device. The private key of the asymmetric key pair may be stored using a secure credential service and/or a hardware security module. The public key of the asymmetric key pair may be stored inside the nonvolatile memory of the control device. A software update of the control device may require execution of a root of trust with execution of the boot code, presence of a secure component with a private communication credential, and execution of mutual authentication with uplink and downlink communication with a cloud. A validation credential may be stored in the control device in an encrypted form and may be decrypted using a master security credential within a secure component of the control device prior to applying the validation credential to determine if the digital signature or the hash value is valid. The master security credential may be inaccessible from outside the secure component. The validation credential may have been encrypted on the control device using the master security credential during production of the control device prior to deployment of the control device in the industrial control system. The secure component may implement a root of trust on the control device. The validation credential may be a symmetric key that was used to create the digital signature or the hash value.

According further to the system described herein, communicating with an industrial control system includes storing a private communication credential within a secure component of a control device of the industrial control system, the private communication credential being inaccessible from outside of the secure component, the control device using the private communication credential to establish a secure communication connection to a cloud that is accessible by an organizational management network that is separate from the industrial control system, a component of the organizational management network establishing a secure communication connection to the cloud, and the component exchanging information with the control device using the secure connections. The industrial control system may be controlled at least in part by the organizational management network. The organizational management network may include a supervisory component that supervises the industrial control system and the first control device may be controlled using instructions from the supervisory component. Information transmitted between the industrial control system and the organizational management network may be communicated in accordance with a first methodology specified by the organizational management network and information transmitted between a thing management network (TMN) and the industrial control system may be communicated in accordance with a second methodology different from the first methodology and independent of the organizational management network. The private communication credential may be a symmetric key and the symmetric key may also be provided at the cloud. The private communication credential may be one of an asymmetric key pair and another key of the asymmetric key pair may be provided at the cloud. The other key of the asymmetric key pair may be provided in a digital certificate that is digitally signed by a trusted authority. Communicating with an industrial control system may also include using another asymmetric key pair for establishing the secure channel, where a private key of the other asymmetric key pair is generated by a certification authority and stored inside the cloud and a public key of the other asymmetric key pair is generated by the certification authority and stored inside nonvolatile memory of the control device. A blockchain credential, separate from the private communication credential, may be used by the control device to create a blockchain transaction. The authentication of a transaction record may be done in the cloud using a credential corresponding to the blockchain credential. Quality of service may be controlled using the control device that communicates with the cloud.

According further to the system described herein, an industrial control system includes a secure component of a control device of the industrial control system having a private communication credential stored therein, the private communication credential being inaccessible from outside of the secure component, a control device that uses the private communication credential to establish a secure communication connection to a cloud that is accessible by an organizational management network that is separate from the industrial control system, and a component of the organizational management network that establishes a secure communication connection to the cloud, the component exchanging information with the control device using the secure connections. The industrial control system may be controlled at least in part by the organizational management network. The organizational management network may include a supervisory component that supervises the industrial control system and the first control device may be controlled using instructions from the supervisory component. Information transmitted between the industrial control system and the organizational management network may be communicated in accordance with a first methodology specified by the organizational management network and information transmitted between a thing management network (TMN) and the industrial control system may be communicated in accordance with a second methodology different from the first methodology and independent of the organizational management network. The private communication credential may be a symmetric key and the symmetric key may also be provided at the cloud. The private communication credential may be one of an asymmetric key pair and another key of the asymmetric key pair may be provided at the cloud. The other key of the asymmetric key pair may be provided in a digital certificate that is digitally signed by a trusted authority. Another asymmetric key pair may be used for establishing the secure channel and a private key of the other asymmetric key pair may be generated by a certification authority and stored inside the cloud and a public key of the other asymmetric key pair may be generated by the certification authority and stored inside nonvolatile memory of the control device. A blockchain credential, separate from the private communication credential, may be used by the control device to create a blockchain transaction. The authentication of a transaction record may be done in the cloud using a credential corresponding to the blockchain credential. Quality of service may be controlled using the control device that communicates with the cloud.

According further to the system described herein, non-transitory computer readable media have software that communicates with an industrial control system having a control device with a private communication credential within a secure component that is inaccessible from outside of the secure component. The software includes executable code that uses the private communication credential to establish a secure communication connection to a cloud that is accessible by an organizational management network that is separate from the industrial control system, executable code that establishes a secure communication connection to the cloud, and executable code that causes the component to exchange information with the control device using the secure connections. The industrial control system may be controlled at least in part by the organizational management network. The organizational management network may include a supervisory component that supervises the industrial control system and the first control device may be controlled using instructions from the supervisory component. Information transmitted between the industrial control system and the organizational management network may be communicated in accordance with a first methodology specified by the organizational management network and information transmitted between a thing management network (TMN) and the industrial control system may be communicated in accordance with a second methodology different from the first methodology and independent of the organizational management network. The private communication credential may be a symmetric key and the symmetric key may also be provided at the cloud. The private communication credential may be one of an asymmetric key pair and another key of the asymmetric key pair may be provided at the cloud. The other key of the asymmetric key pair may be provided in a digital certificate that is digitally signed by a trusted authority. Another asymmetric key pair may be used for establishing the secure channel and a private key of the other asymmetric key pair may be generated by a certification authority and stored inside the cloud and a public key of the other asymmetric key pair may be generated by the certification authority and stored inside nonvolatile memory of the control device. A blockchain credential, separate from the private communication credential, may be used by the control device to create a blockchain transaction. The authentication of a transaction record may be done in the cloud using a credential corresponding to the blockchain credential. Quality of service may be controlled using the control device that communicates with the cloud.

According further to the system described herein, communicating between components that are part of an Internet Protocol (IP) network and a control device includes coupling the IP network to a dedicated cellular network, the control device communicating directly with network components of the dedicated cellular network, and transferring data between the components and the control device at a quality of service levels that corresponds to a quality of service level provided for voice communications in a non-dedicated cellular network. The IP network may include a cloud having core services that provide control signals to the control device. Quality of service parameters may be prioritized by an ICS management component of the core services of the cloud. The ICS management component may provide cellular network services parameters that are used to control the core services of the cloud and the quality of service parameters. A subset of resources of the dedicated cellular network may be reserved for industrial control systems. Communicating between components that are part of an IP network and a control device may also include reserving communication and network resources for communication between the control device and the cloud. Communicating between components that are part of an IP network and a control device may also include combining redundant network resources for communication between the control device and the cloud. The redundant network resources may include base stations of the dedicated cellular network. The redundant network resources may create redundancy for existing wired networks. The redundant network resources may include at least one other control device. The redundant network resources may include base stations of the dedicated cellular network. Communicating between components that are part of an IP network and a control device may also include using a blockchain to provide an audit trail of settings of the network components, where the settings are for a redundancy network, resource capacity settings, and/or quality of service parameters used in the dedicated cellular network. The quality of service levels may include quality of service levels for the dedicated cellular network and separate quality of service levels for the IP network that are harmonized with the quality of service levels for the dedicated cellular network. Security credentials used by the dedicated cellular network may include an operator code, an operator code credential, a cryptographic authentication key, and/or SIM card data. The cryptographic authentication key may be used in a cellular mobile device that accesses the dedicated cellular network. The SIM card data may include an integrated circuit card ID, a mobile station international subscriber directory number, and/or an international mobile subscriber identity.

According further to the system described herein, a system for communicating between a control device and components that are part of an Internet Protocol (IP) network that is coupled to a dedicated cellular network includes one or more processors and a memory having code thereon that, when executed by the one or more processors, causes the control device to communicate directly with network components of the dedicated cellular network and transfers data between the components and the control device at a quality of service levels that corresponds to a quality of service level provided for voice communications in a non-dedicated cellular network. The IP network may include a cloud having core services that provide control signals to the control device. Quality of service parameters may be prioritized by an ICS management component of the core services of the cloud. The ICS management component may provide cellular network services parameters that are used to control the core services of the cloud and the quality of service parameters. A subset of resources of the dedicated cellular network may be reserved for industrial control systems. Communication and network resources may be reserved for communication between the control device and the cloud. Redundant network resources for communication between the control device and the cloud may be combined. The redundant network resources may include base stations of the dedicated cellular network. The redundant network resources may create redundancy for existing wired networks. The redundant network resources may include at least one other control device. The redundant network resources may include base stations of the dedicated cellular network. A blockchain may be used to provide an audit trail of settings of the network components and the settings may be for a redundancy network, resource capacity settings, and/or quality of service parameters used in the dedicated cellular network. The quality of service levels may include quality of service levels for the dedicated cellular network and separate quality of service levels for the IP network that are harmonized with the quality of service levels for the dedicated cellular network. Security credentials used by the dedicated cellular network may include an operator code, an operator code credential, a cryptographic authentication key, and/or SIM card data. The cryptographic authentication key may be used in a cellular mobile device that accesses the dedicated cellular network. The SIM card data may include an integrated circuit card ID,a mobile station international subscriber directory number, and/or an international mobile subscriber identity.

According further to the system described herein, non-transitory computer readable media have software that communicates between a control device and components that are part of an Internet Protocol (IP) network coupled to a dedicated cellular network. The software includes executable code that causes the control device to communicate directly with network components of the dedicated cellular network and executable code that transfers data between the components and the control device at a quality of service levels that corresponds to a quality of service level provided for voice communications in a non-dedicated cellular network. The IP network may include a cloud having core services that provide control signals to the control device. Quality of service parameters may be prioritized by an ICS management component of the core services of the cloud. The ICS management component may provide cellular network services parameters that are used to control the core services of the cloud and the quality of service parameters. A subset of resources of the dedicated cellular network may be reserved for industrial control systems. Communication and network resources may be reserved for communication between the control device and the cloud. Redundant network resources may be combined for communication between the control device and the cloud. The redundant network resources may include base stations of the dedicated cellular network. The redundant network resources may create redundancy for existing wired networks. The redundant network resources may include at least one other control device. The redundant network resources may include base stations of the dedicated cellular network. A blockchain may be used to provide an audit trail of settings of the network components, where the settings may be for a redundancy network, resource capacity settings, and/or quality of service parameters used in the dedicated cellular network. The quality of service levels may include quality of service levels for the dedicated cellular network and separate quality of service levels for the IP network that are harmonized with the quality of service levels for the dedicated cellular network. Security credentials used by the dedicated cellular network may include an operator code, an operator code credential, a cryptographic authentication key, and/or SIM card data. The cryptographic authentication key may be used in a cellular mobile device that accesses the dedicated cellular network. The SIM card data may include an integrated circuit card ID, a mobile station international subscriber directory number, and/or an international mobile subscriber identity.

According further to the system described herein, a user device accesses a dedicated cellular network by providing the user device with a first mode corresponding to the user device communicating via a non-dedicated cellular network,providing the user device with a second mode corresponding to the user device communicating via the dedicated cellular network and the user device switching from the first mode to the second mode in response to the user device being in proximity of the dedicated cellular network. Each of the modes may correspond to a separate profile provided with the user device. The user device may be presented to an NFC reader to signify being in proximity to the dedicated cellular network. A dedicated cellular network may be provided as part of an industry campus having a plurality of other devices that provide industrial control functionality. In the second mode, the user device may exchange data with at least some of the other devices. Exchanging data may use a cloud or other networks. The user device may provide approvals for components of the industry campus. The dedicated cellular network may use Time Division Duplex communication and the non-dedicated cellular network may use Frequency Division Duplex communication.

According further to the system described herein, a user device that accesses a dedicated cellular network includes one or more processors and a memory having code thereon that, when executed by the one or more processors, provides the user device with a first mode corresponding to the user device communicating via a non-dedicated cellular network, provides the user device with a second mode corresponding to the user device communicating via the dedicated cellular network and causes the user device to switch from the first mode to the second mode in response to the user device being in proximity of the dedicated cellular network. Each of the modes may correspond to a separate profile provided with the user device. The user device may be presented to an NFC reader to signify being in proximity to the dedicated cellular network. A dedicated cellular network is provided as part of an industry campus having a plurality of other devices that provide industrial control functionality. In the second mode, the user device may exchange data with at least some of the other devices. Exchanging data may use a cloud or other networks. The user device may provide approvals for components of the industry campus. The dedicated cellular network may use Time Division Duplex communication and the non-dedicated cellular network may use Frequency Division Duplex communication.

According further to the system described herein, non-transitory computer readable media have software that causes a user device to access a dedicated cellular network. The software includes executable code that provides the user device with a first mode corresponding to the user device communicating via a non-dedicated cellular network, executable code that provides the user device with a second mode corresponding to the user device communicating via the dedicated cellular network, and executable code that causes the user device to switch from the first mode to the second mode in response to the user device being in proximity of the dedicated cellular network. Each of the modes may correspond to a separate profile provided with the user device. The user device may be presented to an NFC reader to signify being in proximity to the dedicated cellular network. A dedicated cellular network may be provided as part of an industry campus having a plurality of other devices that provide industrial control functionality. In the second mode, the user device may exchange data with at least some of the other devices. Exchanging data may use a cloud. Exchanging data may use other networks. The user device may provide approvals for components of the industry campus. The dedicated cellular network may use Time Division Duplex communication and the non-dedicated cellular network may use Frequency Division Duplex communication.

### BRIEF DESCRIPTION OF THE DRAWINGS

FIG. 1 is a block diagram showing a conventional organizational management network.
FIG. 2A is a block diagram illustrating a thing management network including an industrial control system, according to embodiments of the system described herein.
FIGs. 2B, 2C and 2D are block diagrams illustrating secure industrial control systems, according to embodiments of the system described herein.
FIG. 3 is a block diagram illustrating a secure ICS interface device, according to embodiments of the system described herein.
FIG. 4A is a block diagram illustrating a sequence of communications between secure ICS interface devices, gateways and a server, according to embodiments of the system described herein.
FIG. 4B is a block diagram illustrating using a secure transaction record to communicate and store information on a thing management network, according to embodiments of the system described herein.
FIG. 5 is a block diagram illustrating a security module of a device, according to embodiments of the system described herein.
FIG. 6A is a block diagram illustrating a data object used in connection with managing a thing management network, according to embodiments of the system described herein.
FIG. 6B is a block diagram illustrating a data structure of a data object used in connection with managing a thing management network, according to embodiments of the system described herein.
FIG.s 7A-7H illustrate examples of data objects, according to embodiments of the system described herein.
FIG. 8 is a flowchart illustrating configuring an ICS device for secure operation, according to embodiments of the system described herein.
FIG. 9A is a flowchart illustrating securely installing a software module on an ICS device, according to embodiments of the system described herein.
FIG. 9B is a flowchart illustrating securely executing a software module on an ICS device, according to embodiments of the system described herein.
FIG.s 10A and 10B are flowcharts illustrating securely communicating information between an ICS and a cloud on a thing management network, according to embodiments of the system described herein.
FIG. 11 is a timing diagram illustrating a sequence of communications involving an ICS on a thing management network, according to embodiments of the system described herein.
FIG. 12 is a flowchart illustrating an ICS device communicating information, according to embodiments of the system described herein.
FIG. 13 is a schematic diagram showing an industry park and a plurality of cellular base stations for a dedicated cellular network according to embodiments of the system described herein.
FIG. 14 is a schematic diagram showing a dedicated cellular network, a cloud, and other networks according to embodiments of the system described herein.
FIG. 15 is a flowchart illustrating a user device changing modes to access a dedicated cellular network according to embodiments of the system described herein.

### DETAILED DESCRIPTION OF VARIOUS EMBODIMENTS

Described herein is a system for providing improved cybersecurity for an Information Cloud Network (ICN) and/or for an industrial control system (ICS) that is independent of a cloud. The system may include a device configured to serve as a secure interface between an ICS and a network cloud, where the ICS and the network cloud may be part of an ICN and/or between an ICS and other components that may not include a cloud. Such a device may be referred to herein as a secure ICS interface device (SIID). The ICN may be a network for managing connected devices, referred to herein as a thing management network (TMN), where the TMN or a portion thereof may be considered part of the Internet of Things (IoT).

An SIID may serve any of a variety of roles in an ICS, including an ICN controller or a security module, and may be part of, or serve in place of, a programmable logic controller (PLC). In some embodiments, the SIID may be, or may include, an MYNXG® Sense device provided by MyOmega Systems GmbH having offices in Nuremberg, Germany (hereinafter "MyOmega") and/or its affiliates or may include one or more components and/or functionality thereof. In some embodiments, the SIID may act as a security module. Alternatively, the SIID may include or be locally coupled to a security module and/or a secure component (described in more detail elsewhere herein), which may include a trusted platform module (TPM) or secure element (SE), that provides a secure platform having stored therein at least one blockchain credential enabling the SIID to implement blockchain transactions that may be authenticated by other components of a TMN Components/devices may be locally coupled by either being directly physically connected to (e.g., plugged into) or within a distance that enables wireless communication using Bluetooth (BT) and/or near field communication (NFC) technology. For example, the security module and/or secure component may be contained within a portable component (e.g., dongle, stick, card) that is locally coupled to the mobile user device or the security module may be a combination out of two or more TPMs distributed in two or more ICS devices.

The SIID also may include a private communication credential stored within the security module, where the private communication credential enables the establishment of secure communication channels with other components of a TMN, including other devices on an ICS. The SIID also may include other credentials stored within the security module or derived from and/or encrypted with credentials stored within the security module, which may be used to validate software (including firmware) before deploying the software and/or executing the software on the SIID.

The SIID may be configured to enable communication with a gateway or cloud server independent of an ICS supervisor and/or other components of an organizational management network (OMN) of an entity. An ICS may be monitored and/or controlled by TMN cloud components independent of the ICS supervisor and/or other components of the OMN of the entity. Such independent monitoring and/or control may avoid security vulnerabilities and inefficiencies associated with the ICS supervisor and the OMN

The system described herein may include one or more management components remotely located from the SIID and communicatively coupled to communicate via blockchain transactions with the SIID. For example, the one or more management components may be, or may be included within, one or more centralized servers, and/or gateways (i.e., edge devices/servers) serving as intermediaries between the centralized server(s) and the SIID, where the gateways may provide edge computing and other functionality. The one or more management components may include one or more data structures that define a plurality of entities associated with ICSs, for example, a person, a site, a company, a process, connected devices, or correlated data, and may associate one or more attributes with the one or more entities corresponding to management of the ICS. Management of the ICS may be based on the one or more data structures defining entities and attributes thereof, and information communicated by the SIID to the one or more management components. Such information may be communicated in one or more blockchain transactions authorized using the at least one blockchain credential stored in the secure component.

One or more contractual relationships between parties (e.g., companies, a company and a person) may be defined using blockchain transaction records as smart contracts, which are described in more detail elsewhere herein. Furthermore, one or more contractual transactions between parties per the contractual relationships may be recorded as smart contracts. For example, the acceptance of terms and conditions by an entity with respect to a TMN, ONM or ICS may be recorded as a smart contract. Furthermore, one or more rules (e.g., with respect to a person, company, site, connected device, ICS, TMN, OMN, process or other object) may be recorded as part of a smart contract.

Illustrative embodiments of the system described herein will now be explained in relation to the drawings. It should be appreciated that the system described herein is not limited to the following illustrative embodiments, as other embodiments, including variations and combinations of the following illustrative embodiments, are possible and intended to fall within the scope of the invention

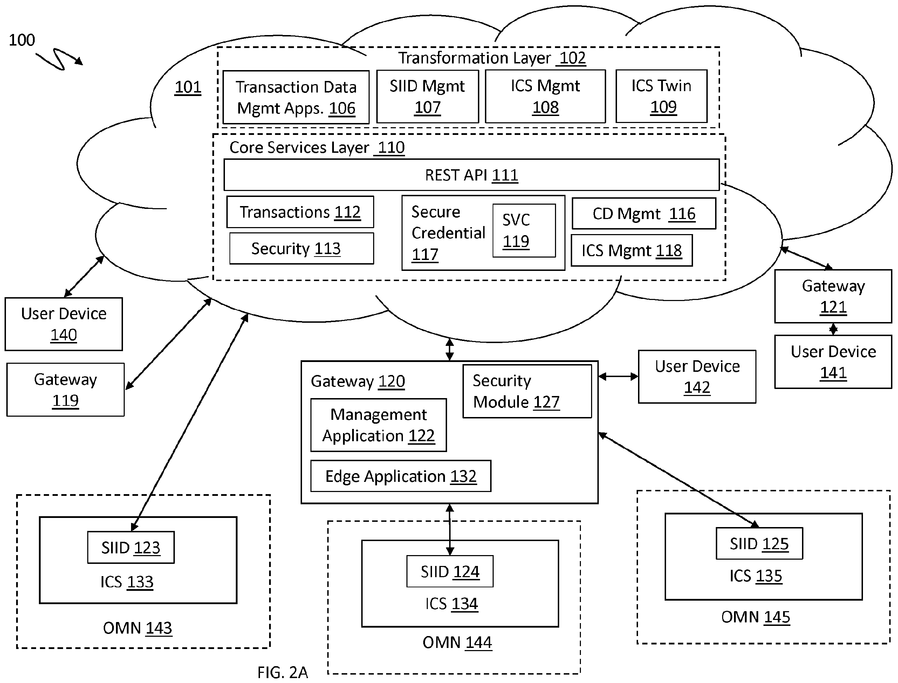

FIG. 2A is a block diagram illustrating a TMN 100, according to embodiments of the system described herein. Other embodiments of a TMN, including variations of the TMN 100, are possible and are intended to fall within the scope of the invention. The TMN 100 may manage any of a variety of connected devices, including tangible (i.e., physical) and/or intangible items and connected devices commonly controlled by an ICS, as described in more detail elsewhere herein. The TMN 100 may include secure ICSs 133-135 which may include SIIDs 123-125 and be part of OMNs 143-145, one or more gateways (i.e., edge devices/servers) 119-121, one or more user devices 140-142, a transformation layer 102, a core services layer 110 and other components in a cloud 101, other components, or any suitable combination of the foregoing. In some embodiments, only portions (e.g., the ICSs 133-135) of the OMNs 143-145 are part of the TMN 100, whereas other portions of the OMNs may be independent of the TMN 100, such as being part of a proprietary network of an organization. It should be appreciated that, while only three gateways, three user devices, three ICSs, three OMNs and three SIIDs are shown in FIG. 2A, the invention is not so limited, as any number of gateways, user devices, ICSs, OMNs, and SIIDs may be used, taking into consideration feasibility based on the fiscal and management costs of network, compute and storage resources, etc.

Each of the gateways 119-121 may communicate directly with the cloud 101 and to a plurality of SIIDs. For example, the gateway 120 may communicate directly with the SIIDs 124, 125. Each of the gateways 119-121 may couple one or more SIIDs to the cloud 101, which may include one or more servers. In some embodiments, one or more SIIDs, e.g., the SIID 123, may communicate with the cloud 101. In such embodiments, the SIID 123 may be configured with any of the gateway functionality and components described herein, and may be handled like a gateway, at least in some respects, by the cloud 101.

In some embodiments, one or more gateways, such as the gateways 120, 121, may couple one or more user devices, such as the user devices 142, 141, to the cloud 101. In some embodiments, one or more user devices, such as the user device 140, may communicate directly with the cloud 101. In such embodiments, the user device 140 may be configured with any of the gateway functionality and components described herein, and handled like a gateway, at least in some respects, by the cloud 101.

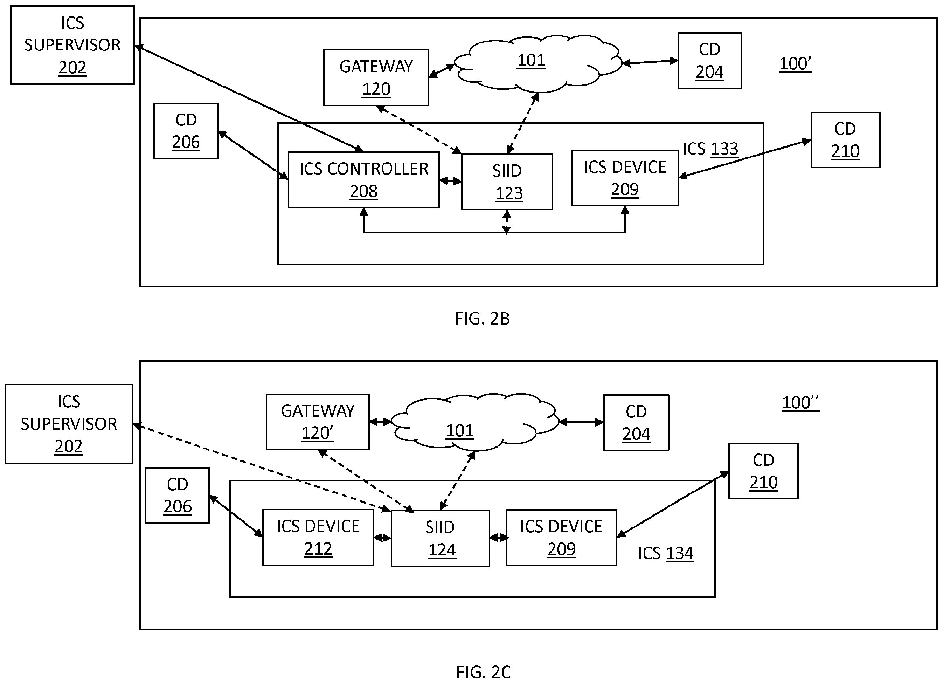

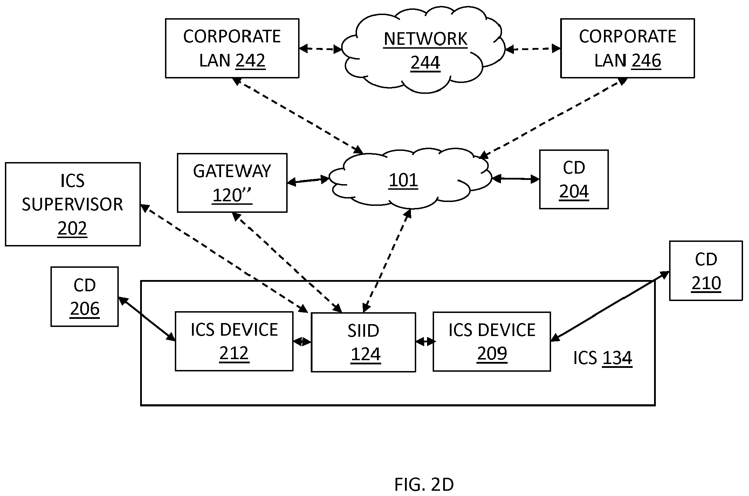

Each of the gateways 119-121 may be configured with one or more capabilities of a gateway and/or a controller as described in U.S. Patent No. 9,509,628, titled "Managing Devices in a Heterogeneous Network," issued November 29, 2016, to Bernd Moeller (hereinafter the '628 patent), which is incorporated by reference herein, including capabilities described in relation to FIGs. 1 and 2 (and elsewhere) of the '628 patent. Each of the gateways 119-121 may be any of a plurality of types of devices configured to perform the gateway functions defined herein, such as, for example, a general-purpose computer, a more specialized device such as an MYNXG® gateway or controller available from MyOmega and its MYNXG® affiliates (e.g., MYNXG® Edge devices provided by MyOmega and the MYNXG® affiliates), any of variety of other devices, or any suitable combination of the foregoing.

Each gateway may include a security module (e.g., in a hardware layer of a controller described in the '628 patent), which may be used to perform any of a variety of data security operations, including encrypting portions of communications from/to SIIDs or other devices to/from gateways, encrypting portions of such information received at a gateway in an unencrypted form, or any of a variety of other functions described herein. For example, the gateway 120 may include a security module 127 having a trusted platform module (TPM) or secure element (SE) and/or other components, as described in more detail elsewhere herein. The security module 127 also may be employed for other data security operations used in various embodiments of the system described herein, including generating a one-way hash (or another type of hash) of a transaction record, or providing secure communications between components of the TMN 100, e.g., between the cloud 101, gateways, SIIDs and/or end user devices. For example, the security module 127 and/or other components of the TMN 100, may be configured to implement Transport Layer Security (TLS) for HTTPS communications and/or Datagram Transport Layer Security (DTLS) for Constrained Application Protocol (CoAP) communications, as described, for example, in the '628 patent. Furthermore, one or more security credentials associated with any of the foregoing data security operations may be stored on the security module 127.

Each of the gateways 119-121 may be configured to process device status information received from one or more SIIDs, as well as other sensors, monitoring devices and user devices of the TMN 100. Such processing may include analyzing detected physical properties and other information that may have been generated by an SIID or another device of an ICS and providing instructions to the SIID for the SIID itself and/or another device of the ICS, as described in more detail elsewhere herein. For example, each of the gateways 119-121 may be configured with one or more connected device management applications 122 encapsulating such capability. Furthermore, each of the gateways 119-121 may include one or more edge applications 132 that may provide additional functionality to that of the one or more connected device management applications 122, where such additional functionality may be primarily directed to edge computing aspects of a gateway. It should be appreciated that certain connected device management functions may be shared between one or more connected device management applications 122 and edge applications 132. Each of the gateways 119-121 may include one or more components for implementing the one or more connected device management applications 122, the one or more edge applications 132, or combinations thereof. The one or more connected device management applications 122 and/or edge applications 132 may be configured to perform some or all of the analysis and/or control some or all of the actions described herein, for example, in implementing one or more defined states of a connected device lifecycle. Each gateway may be configured to implement any of the network communication technologies described herein, e.g., in relation to SIIDs, so that the gateway may remotely communicate with, monitor and manage SIIDs and other devices of an ICS.

Each of the SIIDs 123-125 may also include one or more connected device management applications (not shown), having some or all of the same capabilities of the one or more connected device management applications 122. Each of the SIIDs 123-125 may include one or more components for implementing the one or more connected device management applications 122. By performing such processing at one or more gateways, and/or at the SIIDs themselves, as opposed to in a more centralized fashion on one or more servers in the cloud 101, the TNM 100 may implement and enjoy the benefits of more distributed edge-computing techniques.

The user devices 140-142 may be any of a plurality of devices (e.g., desktop computers, laptop computers, tablets, personal digital assistants (PDAs), cellular (e.g., smart) phones, other devices, or any suitable combination of the foregoing that enable a user to interact with other components (e.g., gateways, servers, SIIDs) of the TMN 100. Each of the user devices 140-142 may be configured with any of the functionality described in the '628 patent with respect to the UEs 54-56 of the '628 patent, including any user equipment functionality described in relation to FIG.s 2 and 3 of the '628 patent. In some embodiments, one or more gateways may be configured with user device functionality and/or one or more user devices may be configured with gateway functionality. Functionality described herein may be provided using software provided by MyOmega and the MYNXG® affiliates, including software provided under the name MYNXG® SMART.

In some embodiments, each of one or more user devices (e.g., the user devices 140-142) may include a security module having the same or similar capabilities as the security module 127 of the gateway 120. A TPM may be used and may be integrated inside a user device, or the TPM functionality may reside inside a chip (system on chip) or the TPM may be coupled temporarily as a dongle or another device to the user device. Furthermore, one or more user devices may include one or more connected device management applications, or portions thereof, as described in more detail elsewhere herein.

The performance and security of the system described herein, including SIIDs, user devices, gateways and servers in the cloud 101, may be improved using security modules like the security module 127 and/or other security modules described herein. A security module may be implemented within any of the gateways (e.g., MYNXG® Edge devices provided by MyOmega and the MYNXG® affiliates), SIIDs (e.g., MYNXG® Sense devices provided by MyOmega and the MYNXG® affiliates), monitoring devices (e.g., MYNXG® Sense devices provided by MyOmega and the MYNXG® affiliates), user devices (e.g., UE devices with MYNXG® SMART functionality provided by MyOmega and the MYNXG® affiliates) or servers (e.g., MYNXG® Flow and MYNXG® Core provided by MyOmega and the MYNXG® affiliates) in the cloud 101, for example, during production, and may be used to personalize any such components. The personalization that occurs during production may include the creation of various secure credentials described herein. One or more of the security modules 127 and/or other security modules described herein may be integrated into an SIID. Such gateways, user devices, SIIDs and/or servers may be configured (e.g., during manufacture or later) to implement a Public Key Infrastructure (PKI) for the management of keys and credentials. Other cryptographic technologies, including symmetric keys, private hash keys, public hash ledgers, etc., may be used. Security modules are described in more detail elsewhere herein.

The core services layer 110 may provide one or more services, which may be consumed by applications in the transformation layer 102 (which also may be referred to as an application layer or flow layer). The services may include services for managing ICSs, ICS devices and/or connected devices. For example, the services may include transaction services 112, connected device management services 116, ICS management services 118, security services 113, secure credential services 117, other services corresponding to connected devices, one or more databases and/or database management systems corresponding to any of the foregoing, and/or any suitable combination of the foregoing. The core services layer 110 also may include a REST API 111 that provides programmatic interoperability, including network communications, between the core services layer 110 and other components of the TMN 100, including the transformation layer 102, gateways, SIIDs, user devices, monitoring devices and other components of the TMN 100. One or more services of the core services layer 110 may provide one or more data structures of objects, as described in more detail elsewhere herein.

The connected device management services 116 may include data about connected devices managed by the TMN 100. Any of the data included in any of the transaction service 112, the connected device management service 116 and the ICS management service 118 may include information also stored on an SIID (e.g., SIIDs 123-125) and/or a user device.

The transaction service 112 may include one or more transaction records, for example transaction blocks of a blockchain, involving ICS and/or connected devices managed by the TMN 100. For example, the blockchain may serve as a secure transaction register (e.g., a distributed ledger) for the TMN 100 or one or more defined subsystems thereof. Transactions may include smart contracts or any other commercial transaction involving one of the managed ICSs or connected devices, and also may include information, for example status information, relating to one or more ICSs or connected devices, that is not associated with a commercial transaction, as described in more detail elsewhere herein. Furthermore, the data stored within each of the other services, including the services 116, 118 within the core services layer 110, may be stored as one or more transaction records (e.g., transaction blocks within a blockchain), and may be part of the transaction register for the TMN 100 or one or more defined subsystems thereof. The core services layer 110 may be implemented using one or more servers in the cloud 101 (i.e., "cloud servers" or "TMN cloud servers").

The secure credential service 117 may serve as a certificate authority and may generate and store one or more secure credentials to be used in accordance with embodiments of the system described herein. These secure credentials may include a secure validation credential (SVC) 119, which may be used to validate software downloaded to SIIDs, connected devices, user devices, monitor devices or other components on the TMN 100. For example, the SVC 119 may be a private encryption key generated by the secure credential service 117 to sign software downloaded to SIIDs and other components. The secure credential service 117 may include a hardware security module (HSM) and may provide a highly secure environment in which keys are created, credentials are derived and/or signatures/hashes of software may be generated from the SVC 119 or a multiple of such keys from the SVC 119 or other sources or some combination thereof, for example, an environment meeting the requirements of the ISO/IEC 27001 information security standard. In some embodiments, all software downloaded to SIIDs and other components on the TMN 100 may be digitally signed and/or encrypted and/or hashed using the SVC 119 or a multiple of such keys from the SVC 119 or other sources or some combination thereof.

As described elsewhere herein, an SIID and/or other device may be configured with a credential (e.g., a public key) corresponding to keys created, credentials derived and/or signatures/hashes of software generated from the SVC 119 or a multiple of such keys from the SVC 119 or other sources or some combination thereof, which can be used to validate software received from the cloud 101 (e.g., directly from a server or through a gateway). That is, the credential may be used to verify that the software came from a trusted server of the TMN 100. Furthermore, the secure credential service 117 may serve as a certificate authority to verify the owner of a credential used by the SIID or other component to validate the downloaded software, and the secure credential service 117 may issue digital certificates accordingly. For example, the secure credential service 117 may issue digital certificates in accordance with one of more standards and/or protocols, e.g., an X.509 standard. In some embodiments, the secure credential service 117 implements an HSM and/or the SafeNet KeySecure key management platform made available from Gemalto, having offices in Amsterdam, Netherlands or from Thales, having offices in Paris/France, or any comparable source.

The secure credential service 117 creates a Private blockchain credential 422 which is, during production of the PLC, within the production step "personalization" loaded into the TPM while the last step of the production is the locking of the TPM. The Secure credential service 117 creates a certificate (blockchain certification credential, PUBLICK_BLOCKCHAIN_CERT) which includes the Public blockchain credential corresponding to the Private blockchain credential 422. The TPM inside the SIID signs the data with the Private blockchain credential 422. The secure credential service 117 (Blockchain controller) validates the authenticity (PoA) and the signature as Prof of work (PoW) with the Public blockchain certificate.

The security service 113 may be configured to validate data received from an ICS, for example, originating from an SIID and sent directly to a cloud server or through a gateway. For example, for a transaction record that originated from an SIID, the security service may use a blockchain certification credential (PUBLIC BLOCKCHAIN_CERT) corresponding to a private blockchain credential of the SIID to verify the transaction record was indeed produced by the SIID.

The security service 113 also may be configured to decrypt and encrypt data stored and/or transferred within the core services layer 110. The data may have been received from the transaction service 112 in response to the transaction service receiving data (e.g., in the form of blockchain records as described in detail elsewhere herein) from gateways, SIIDs, connected devices, or user devices, as well as data generated in the cloud 101 itself, e.g., in the core services layer 110 or the transformation layer 102. The security service 113 may unpackage data received from gateways, SIIDs, connected devices and user devices, decrypt the received data, and then repackage the data and encrypt the re-packaged data if the received data had been decrypted. Data may be repackaged to present the data to applications in the transformation layer in a format that reduces (e.g., minimizes) accessing and processing times of the data by the applications. Thus, in some embodiments, the security service 113 may be configured to decrypt data (e.g., received from a gateway, an SIID, connected device or user device), process the decrypted data (e.g., including repacking the data), and encrypt the processed data. The encrypted data then may be provided by the security service 113 to the transactions service 112 and/or other components of the core services layer 110.

To decrypt data (e.g., blockchain records), the secure service 113 may employ a blockchain credential (e.g., a cryptography key) corresponding to a private blockchain key employed by the SIID or other component that originally encrypted the data, as described in more detail elsewhere herein.

The transformation layer 102 may be implemented using one or more cloud servers. The transformation layer 102 may include one more applications, such as cloud- or web-based applications, that utilize information and services related to ICSs and/or connected device management, including any of the information and services made available from the core services layer 110. For example, the transformation layer 102 may include one or more transaction data management applications 106, one or more ICS-related applications, including, for example, one or more SIID management applications 107, one or more ICS management applications 108, an ICS digital twin 109, digital twins of connected devices (not shown), an inventory application (not shown), an order management application (not shown), one or more other applications or any suitable combination of the foregoing.

The one or more transaction data management applications 106 may be configured to provide access to any transaction data (e.g., smart contracts, connected device status, visitor status) described herein, for example, within a secure transaction register. One or more of these applications also may be involved in processing (e.g., generating and storing) blockchain transaction records, and participating in blockchain communications with other components of the TMN 100, as described in more detail elsewhere herein. For example, one or more transaction data management applications 106 may be configured to participate in a streamlined blockchain communication sequence, as described in more detail elsewhere herein.

One or more SIID management applications 107 may be configured to provide functionality to manage and control SIIDs remotely, including, for example, defining what data is reported by SIIDs, and how (e.g., the format) and when (e.g., periodically, in response to certain events, etc.) such data is reported. One or more ICS management applications 108 may be configured to manage ICSs, including monitoring data generated thereby, collating and presenting information to users (e.g., via a dashboard or the like), providing controls to users of the dashboard to manage aspects of ICSs, translating user input received through the dashboard (or other GUI) into control information, and initiating the sending of control information to the ICS to implement the specified control.

In some embodiments, for one or more ICSs on the system, a significant amount of information corresponding to the ICS, or components thereof (e.g., an SIID, ICS device or connected device being monitored or controlled), may be maintained in the transformation layer 102 (or in the core services layer 110). In some embodiments, the information maintained for an ICS or component thereof may present such a complete state of the ICS or component thereof that the information may be considered a virtual representation thereof, e.g., a digital twin such as, for example, the ICS twin 109. The state of the ICS or component thereof reflected in the ICS twin 109 or component twin (e.g., an SIID twin) may be updated at such a frequency as to be considered a real-time digital virtualization of the ICS or the component.

The inventory application may provide an inventory of connected devices managed within the system (e.g., the TMN 100 or a defined subsystem thereof), including properties (e.g., characteristics) about each connected device in the system and collective information about connected devices in the system, including, for example, the current state of a connected device (e.g., within a connected device lifecycle as described in further detail elsewhere herein), various numbers of connected devices (e.g., number of connected devices purchased, numbers of connected devices in a particular state, number of connected devices at a particular locations, etc.), physical properties of the connected device (e.g., dimensions, weight), age of a connected device, current location of a connected device (e.g., one or more network identifiers for a mobile telephony network, Wi-Fi network, ISM network or other), operational status of the connected device, and any other properties corresponding to a connected device described herein. The inventory of connected devices may be a group (e.g., "fleet") of connected devices owned, leased, controlled, managed, and/or used by an entity, for example, a connected device producer, OEM, transporter or consumer, another type of entity, or any suitable combination of the foregoing.

The order management application may manage connected device orders of customers, for example, all customers of an entity, e.g., an OEM. The order management application may maintain information about all past and current connected device orders for customers of an entity and may process the orders. The order management application may be configured to automatically order connected devices for an entity (e.g., a customer or OEM) based on connected device status information received from SIIDs coupled to connected devices (e.g., via one or more gateways or directly from the SIID itself), or information received from a user device about the connected device. For example, the order management application may have one or more predefined thresholds, e.g., of number of connected devices currently in use, number of damaged connected devices, etc., for which, upon being reached or surpassed, additional connected devices should be ordered. It should be appreciated that the inventory application and the order management application are described for illustrative purposes, and the transformation layer 102 may include one or more other applications 108 of any of a variety of types, for example, a value-add and/or business application, related to the management of connected devices. The one or more transaction data management applications 106, the one or more SIID management applications 107, the one or more ICS management applications 108, the inventory application, order management application and one or more other application may be configured (e.g., via one or more APIs or other interfaces) to interact with other applications within the transformation layer 102, including each other. The applications or portions thereof may be programmed into gateways, Web browsers, SIIDs, user devices and/or SIIDs of the TMN 100 as well. One or more applications of the transformation layer 102 may be provided as all or part of a Web client browser app, as a hybrid of a Web client browser app and native device applications or as native device applications. The applications may reside, or be programmed or downloaded into gateways (e.g., the MYNXG® Edge devices), SIIDs (e.g., the MYNXG® Sense devices); monitoring devices (e.g., the MYNXG® Sense devices) or user devices (e.g., user devices with MYNXG® SMART functionality provided by MyOmega and the MYNXG® affiliates).

FIG. 2B illustrates in more detail the secure ICS 133 described elsewhere herein. Other embodiments of a secure ICS, including variations of the secure ICS 133, are possible and are intended to fall within the scope of the invention. The ICS 133 may include an ICS controller 208, the SIID 123, described above, and an ICS device 209, each of which may be directly physically connected or wirelessly coupled to connected devices 204, 206, 210. While FIG. 2B illustrates only three devices included in the ICS 133, each coupled to a connected device, it should be appreciated that the invention is not so limited. More or less than three devices may be included in the ICS 133, and more or less than three connected devices may be included. Furthermore, it should be appreciated that there also may be a one-to-many relationship between a component of the ICS 133 (e.g., an SIID, ICS controller and/or ICS device) and a connected device (i.e., one device directly coupled to multiple connected devices) or a many-to-one relationship between a component of the ICS 133 and a connected device (i.e., multiple devices coupled to one connected device). It should also be appreciated that a connected device may be any type of connected device that may be managed by a TMN, including, but not limited to, any type of connected device described herein.

The ICS 133 may be a part of a TMN 100' that also includes the gateway 120 and the cloud 101, through which the devices within the ICS 133 and the connected devices coupled thereto may be monitored and/or managed, as described in more detail elsewhere herein. For example, the SIID 123 may be configured to serve as an interface between the ICS 133 and the cloud 101, either through the gateway 120 or directly communicating with a server, as described in more detail elsewhere herein.

The ICS controller 208 and the ICS device 209 may each be a PLC and may be configured to implement one or more ICS protocols, for example, PROFINET IO. The SIID 123 may, in this case, also be configured as an ICS device and may be configured to implement one or more ICS protocols, for example, PROFINET IO, e.g., offering full PROFINET RT (real-time)/IRT (isochronous real-time) capabilities in accordance with at least PROFINET conformance classes A, B and C, as well as providing non-real-time (NRT) (e.g., TCP/IP) capabilities. NRT communication may be sufficient for non-time-critical information with transmission times in the range of 100 ms. RT communications may be required to have cycle times of ten ms or less, whereas IRT communications may be required to have cycle times of one ms or less.

In the embodiment of FIG. 2B, the SIID 123 also may be configured to implement one or more ICS protocols. The ICS controller 208 may be configured (e.g., in accordance with PROFINET) to serve the additional role of monitoring and controlling the ICS device 209 and the ICS-specific aspects of the SIID 123, which, in the embodiment of FIG. 2B, does not serve the role of an ICS controller. The ICS controller 208 may be communicatively coupled to an ICS supervisor 202, e.g., outside of the TMN 100' but part of an OMN, where the ICS supervisor 202 may include software running on a non-PLC computer (e.g., a laptop or desktop computer), and may be used by a system administrator to manage aspects of the ICS, e.g., set parameters on and monitor information produced from one or more devices of the ICS, for example, in accordance with one or more SCADA technologies.

As described above, in FIG. 2B, the SIID 123 may serve as an interface between the ICS 133 and the cloud 101, but may not serve the role of an ICS supervisor. Even though the SIID 123 is not serving as an ICS supervisor, and thus does not control or manage ICS-specific communications (e.g., in accordance with PROFINET or PROFIBUS) with other devices on the ICS 133, the SIID 123 may still monitor some or all such communications as part of fulfillment of a role of the SIID 123 as an interface between the ICS 133 and the cloud 101. That is, the SIID 123 may monitor such communications, and communicate information obtained or derived therefrom to the cloud 101, for example, using blockchain communications as described herein and/or using other secure mechanisms.

In some embodiments, an SIID may serve both as such an interface to a TMN cloud and as an ICS controller interfacing to an ICS supervisor, or the ICS supervisor function may be implemented as part of the core services layer 110, for example, as illustrated in Fig. 2C. An SIID serving as an ICS controller may be referred to herein as a controller SIID. FIG. 2C shows in more detail the secure ICS 134 according to an embodiment of the system described herein. Other embodiments of a secure ICS, including variations of the secure ICS 134, are possible and are intended to fall within the scope of the invention. In contrast to the SIID 123 of FIG. 2B, the SIID 124 of the ICS 134 may be a controller SIID that, in addition to being an interface to the cloud 101, serves as an ICS controller having controller capabilities described in relation to the ICS controller 208. In such an embodiment, rather than using the ICS controller 208 (e.g., a PLC configured with PROFINET IO Controller capabilities), the SIID 124 provides controller functionality. For example, in place of the ICS controller 208, the ICS 134 may have an ICS device 212 configured with the same or similar ICS capabilities as the ICS device 209, described above.

FIG. 2D shows an embodiment in which a corporate LAN 242 (IT network) is coupled to the cloud 101. The cloud 101 may be coupled to a gateway 120" (or other edge device) to exchange data therewith, including data for controlling an ICS and receiving information from an ICS. The gateway 120" provides similar functionality to the gateway 120, described elsewhere herein. The corporate LAN 242 may also be coupled to a network 244, such as the Internet or possibly another network, including a cellular network, a private corporate network, or a combination of different types of networks. Another corporate LAN 246 (IT network) may also be coupled to the network 244. The corporate LANs 242, 246 may be coupled to the cloud 101 to exchange data therewith, including data for controlling an ICS and receiving information from an ICS. The corporate LANs 242, 246 may communicate via the network 244. In an embodiment herein, the corporate LANs 242, 246 may be geographically disperse, although in other embodiments the corporate LANs 242, 246 may be logically separated LANs (or VLANs) in the same geographic location. The corporate LANs 242, 246 may be part of different organizational management networks.

In some embodiments, it is possible for a component of the corporate LAN 246 to securely communicate with the ICS 134 to provide ICS commands thereto and to receive relevant information. The component may be a user device, such as a desktop or laptop computer. The communication would be through the cloud 101 and may use any appropriate protocol, such as SSL, TLS, or similar. Alternatively, the component may communicate using an Edge device (not shown) that is part of the corporate LAN 246 and through the cloud 101. The ICS 134 and/or the cloud 101 may include a secure component having a private communication credential that allows secure communication therewith, as described in more detail elsewhere herein. It is also possible for a component of the corporate LAN 242, such as a desktop or laptop computer, to exchange data and control information with the ICS 134. The communication between the corporate LAN 242 and the ICS 134 could be through the cloud 101 and the gateway 120" (edge device) and may use SSL, TLS, or similar and a private communication credential that allows secure communication.

It should be appreciated that, regardless of whether a controller SIID is employed, an ICS may be monitored and/or controlled by a combination of an OMN and a TMN. For example, in some embodiments, the OMN may control the ICS (e.g., through an ICS supervisor independent of the TMN) and the TMN may simply monitor and record information (e.g., blockchain transactions). In other embodiments, the TMN may control the ICS (e.g., through a gateway configured to serve as an ICS supervisor) and the OMN may simply monitor and record information. In yet other embodiments, both the TMN and the OMN may control certain aspects of an ICS, which may require coordination between administrators affiliated with the TMN and OMN to ensure complimentary control and avoid conflicting control.

In some embodiments, rather than the ICS supervisor 202 communicating with a separate ICS controller of the ICS 134, a gateway 120' may be configured to provide the same or similar ICS supervisor capabilities as described in relation to the ICS Supervisor 202. In such embodiments, the SIID 124 may serve not only as an interface to the cloud 101 with respect to the connected device management aspect of a TMN 100", but also as an interface between the gateway 120', in a role of the gateway 120' as an ICS supervisor, and a network of the ICS 134. The SIID 124 may communicate directly with the cloud 101 as the interface between the cloud 101 and the ICS 134 and/or through the gateway 120'.

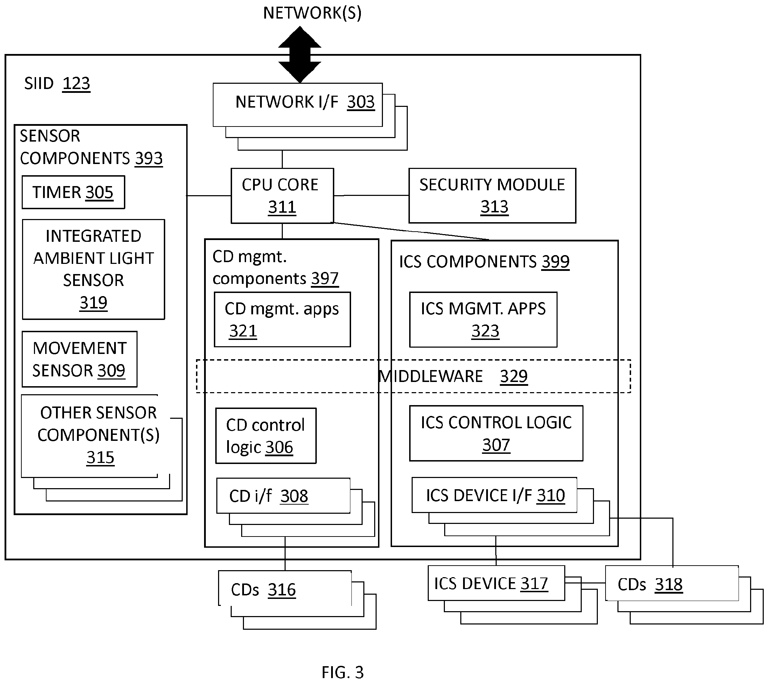

FIG. 3 is a block diagram illustrating in more detail the SIID 123, described elsewhere herein. Other embodiments of an SIID, including variations of the SIID 123 and the SIID 124, are possible and are intended to fall within the scope of the invention. For example, a sensor device not having the ICS-related components and functionality described herein, which may be locally coupled to a connected device, may be configured with some or all of the non-ICS-related functionality and/or components as described herein for the SIID 123.

The SIID 123 may include a CPU core 311, a security module 313, sensor components 393, a network interfaces 303, an application framework 329, management components 397 and ICS components 399. The SIID 123 also may include one or more operating systems (not shown), one or more of which may be implemented as part of the security module 313 in some embodiments, as described in more detail elsewhere herein. The sensor components 393 may include a plurality of components primarily directed to sensor functions or basic operational functions of the SIID 123, and may include a timer 305, an integrated ambient light sensor 319, a movement sensor 309, other sensor components 305 (e.g., climate sensors), or any suitable combination of the foregoing.

One or more components of the SIID 123, such as the CPU 311, the one or more network interfaces (i/f) 303, the integrated ambient light sensor 319, the movement sensor 309, one or more other sensor components 335, the security module 313 and the timer component 305, may be implemented as part of an intelligent processing unit (IPU) which may be implemented using one or more software components, including an operating system of an MYNXG® Edge sensor platform made available by MyOmega and the MYNXG® affiliates. The SIID 123 may be implemented as part of, or include a connected device of, an MYNXG® Sense product made available from MyOmega and MYNXG® affiliates.

The CPU core 311 may include one or more CPUs, including, for example, an ARM CPU or other type of CPU, and may be configured with one or more of the following: required processing capabilities and interfaces for the other components of the SIID 302 described herein, an ability to be interrupted by the timer component 305 and by the movement sensor 309, random access memory, and nonvolatile memory (e.g., FLASH) for storage. In some embodiments, the CPU 311 may be implemented using an Arm Cortex M7 core like STM32F767/777 line CPU or a similar CPU made available by ST Microelectronics or another manufacturer. The timer component 305 may provide a clock for the CPU core 311 and for other components of the SIID 123. The timer component 305 may be configured to provide the clock at any of a variety of frequencies, for example, at 32KHz or lower. The frequency of the clock may be selected to balance a variety of factors, including, for example, cost, resource consumption (including power consumption) and highest desired frequency of operation.

The one or more network interfaces 303 may include a plurality of types of network interfaces, each interface configured to implement one or more particular technologies to enable communications with one or more types of networks. For example, the one or more network interfaces 303 may include one or more cellular communication interfaces enabling communications with cellular networks, and may be configured with technologies such as, for example, Long-term Evolution (LTE) and derivatives thereof like LTE narrowband (5G) and 5G capabilities including the capability to provide dedicated QoS channels and network resources and/or LTE FDD/TDD (4G), HSPA (UMTS, 3G), EDGE/GSM (2G) or CDMA technologies. Cellular communications may be used as one possible form of communication to enable an SIID to communicate with one or more other devices of a TMN, such as systems described elsewhere herein, to perform any of a variety of functions. Such functions may include detection of geographic location of a connected device (e.g., to which a SIID is affixed or otherwise coupled), including detecting a change in location from one cell of a cellular network to another cell, and a relative location of a connected device within a cell, for example, a radial distance from the cell phone base station. The connected device may be any of a variety of types of connected devices in any form, including, for example, an actuator, a switch, a latch, a door, a centrifuge, a turbine, an engine, a motor, a transmission, a valve, a heating element, a pallet, a container (e.g., an IBC), a tank, a c-level management container or fixed assets such as locks for pipes and doors within a cell, other connected devices, and suitable combinations of any of the foregoing. The one or more cellular communication interfaces may be, or may include or be part of, a cellular modem.

The one or more network interfaces 303 providing cellular communication in accordance with 5G may enable the SIID 123 to create local networks, for example, an industry campus as defined by the Bundesnetzagentur for Germany, which is a private network that allows the reservation of bandwidth through dedicated bandwidth and system resources, including non-shared spectrum resources, and allows the provisioning of dedicated, highly reliable real-time services as may be required by an ICS network. The one or more network interfaces 303 may be configured to implement GPS technology, which in some embodiments may be integrated with cellular technology as part of a cellular modem. The network interfaces 303 also may be configured to implement UWB technology if accuracy of indoor location on the order of centimeters is desired, for example using one or more MYNXG® gateways (e.g., the MYNXG® Edge FCR Industrial or the MYNXG® Edge FCO Eco) available from MyOmega and MYNXG® affiliates. The network interfaces 303 further may be configured to implement Wi-Fi technology, e.g., in accordance with one or more 802.11 standards, which may save communication cost. The cost savings may be more desirable for larger fleets of connected devices, for example. The Wi-Fi technology may be used to connect with hotspots at various locations and during various states of a lifecycle of a connected device, described in more detail elsewhere herein, and may serve as an option for establishing a communication path within a TMN, for example, as an alternative, or in addition to, a cellular communication path.

The one or more network interfaces 303 may be configured to implement Industrial, Scientific and Medical (ISM) band technology (also known as EU Sub 1 GHz Bands), e.g., 6LoWPAN, ZigBee, Lora and or Sigfox, to establish Wide Area Low Power links, having a range of, for example, 3000 meters, or perhaps more or less. In some embodiments, an ISM technology may be employed with 802.15.4 PHY, 6LoWPAN Layer 2 and MAC and CoAP protocol via ISM band.

The movement sensor 309 (e.g., an accelerometer) may be configured to detect and measure three-dimensional (e.g., relative to three axes) acceleration movement, and may use an optional gyroscope or artificial horizon, to detect the movement of a connected device and/or the SIID itself. That is, the movement sensor 309 may be configured to detect relatively abrupt movement, e.g., as a result of a sudden acceleration, in contrast to a more general change in geographic location. Such a movement may occur, for example, as a result of a sudden stop, an accident, falling from a shelf, installation or deinstallation of devices in electrical cabinets, tipping over, being manually jostled, a hole in a road, a deformation of a railroad rail, wind turbulence impacting an airplane, stormy seas, etc. The movement sensor 309 may be used in combination with interrupt functionality of the CPU 311 to implement a deep sleep mode of operation, as described in U.S. Published Patent Application No. 2019/0272495, titled "Intelligent Container Management" by Bernd Moeller, published on September 5, 2019 (the '495 application), the contents of which are incorporate by reference herein. The movement sensor may be especially be realized to, together with the ambient light sensor, create a minimum tamper evidence.

The one or more other sensor components 315 may include climate sensors, which may be configured to measure any of a variety of climate conditions of the SIID 123, e.g., inside a cavity of the SIID or inside a housing containing one or more components (e.g., an IPU) of the SIID 123. Such climate conditions may include temperature, air humidity, air pressure, other climate conditions and/or any suitable combination thereof. While climate conditions may be measured inside a housing or cavity within the SIID 123, in some embodiments the SIID 123 may include a pressure compensation membrane (e.g., a climate pressure equalization gasket), and measurement cycles may be ultra-short such that the measured climate conditions are valid for an environment in an immediate vicinity of (e.g., surroundings) the SIID 123 as well. Climate sensors may be linked to an IPU of the SIID 123 through one or more M12.8 connector-based digital and/or analog interfaces, and may measure any of a variety of climate conditions, including but not limited to: temperature, humidity and pressure or other climate conditions of a connected device, the contents or loads carried thereon (e.g., liquid, solid, air) and/or ambient air external to the connected device.

The integrated ambient light sensor 319 may serve to ensure the integrity of a cavity, housing and/or electronics of the SIID 123, including providing mechanical dust and water detection. The sensor 319 may enable detection of evidence of tampering and potential damage, and thus provide damage control to protect electronics of the SIID 123. The security module 313 may include at least one TPM (or SE), and may be implemented as, or include one or more components and/or functionality of, the security module 127 described in relation to FIG. 2A and/or other security modules described elsewhere herein.

Middleware 329 may serve as middleware between the connected device management applications 321 and ICS management applications 323 on the one hand and the connected device control logic 306 and ICS management logic 307, respectively, on the other hand. The middleware 329 may provide an application framework that includes an API that exposes functionality of the connected device control logic 306 and ICS management logic 307 to the connected device management applications 321 and ICS management components 323, respectively. This functionality may include functionality to configure and manage connected devices, ICSs, the SIID 123 itself and component thereof, security (e.g., blockchain communication, software validation), communications, other items, or any suitable combination of the foregoing. The management components 397 may include connected device management applications 321, connected device control logic 306, connected device interfaces 308, other components, or any suitable combination of the foregoing. The connected device interfaces 308 may include a variety of hardware components, in some cases configured with software, to implement physical interfaces between the SIID 123 and connected devices 316 that are connected to, and managed by, the SIID 123, for example, any of the types of connections described herein.

The connected device control logic 306 may include logic implementing core control elements of connected device management (e.g., independent of ICS aspects of such management) including any of the connected device management functionality describe herein. In some embodiments, connected device management may include implementing state machines for one or more connected devices being managed by the SIID 123, for example, based on predefined states of a connected device lifecycle and current status information of the connected device, e.g., as described in the '495 application.

The connected device management applications 321 may implement any of a variety of aspects of connected device management, e.g., any of the aspects described herein. The connected device management applications 321 may use executable relatively high level language code (e.g., Java, C++ or C) that utilizes the middleware 329 to access elements of the connected device control logic 306. The connected device management applications 321 and/or connected device control logic 306 may include software components and functionality provided by one or more applications and/or services of the transformation layer 102 and/or core services layer 110, for example, connected device management services 116. Such components and functionality may have been installed during production of the SIID 123 or after production, for example, after the SIID 123 is installed in an ICS, in which case, the secure communication and software validation techniques described in more detail elsewhere herein may be employed. Furthermore, updates to such components and functionality may be received after production using such secure communication and software validation techniques.

The ICS components 399 may include ICS device interfaces 310, IC control logic 307, ICS management applications 323, other components, or any suitable combination of the foregoing. The ICS device interfaces 310 may include any of a variety of hardware and software for providing a physical ICS interface between the SIID 123 on the one hand and ICS devices 317 and/or connected devices 318 on the other hand. For example, the other ICS devices 317 may be other devices on a same ICS network as the SIID 123. The ICS device interfaces 310 may be configured in accordance with PROFINET and or PROFIBUS protocols, and may include one or more ethernet ports, slots, modules and/or submodules. It should be appreciated that ICS interfaces 310 may be integrated with and/or share physical connections and other hardware with the connected device interfaces 308.

The ICS control logic 307 may include lower layer ICS control logic and upper layer ICS control logic. The lower layer ICS control logic may include fieldbus hardware and firmware for synchronization and jitter control for communications with connected devices and/or other ICS devices, for example, for RT, IRT and NRT (e.g., TCP/IP) communications in accordance with PROFINET and/or PROFIBUS protocols. The upper layer ICS control logic may be a software stack for supporting one or more ICS protocols, for example, a PROFINET stack implementing one or more conformance classes of PROFINET (e.g., PROFINET CC-A, CC-B, CC-C or CC-D).

The ICS management applications 323 may include applications for implementing functionality to manage aspects of an ICS and/or a role of the SIID 123 as an interface between the ICS and a cloud of a TMN. The functionality may include validating messages received on the SIID 123, for example, from other components of the TMN (e.g., gateway, user device or cloud server), another device on the ICS of the SIID 123 or a device directly connected to the SIID 123, validating the data included in such messages, selecting information received in communications from connected devices and other devices on the ICS for transmission (e.g., as a blockchain record as described in more detail elsewhere herein) to the TMN cloud, controlling how the selected information is formatted, packaged and transmitted, controlling when the information is transmitted, other functionality, or any suitable combination of the foregoing. Selecting the information to be transmitted may be done on a device-by-device (on the ICS) basis, and may include selecting RT, IRT and NRT communication elements, and selecting the protocol elements and messaging, including, for example, diagnostic data (e.g., associated with an IO path on the ICS), logbook entries, including records of alarms and diagnostic information for devices and/or connected devices on the ICS, and information to identify devices and aspects thereof. In some embodiments, the ICS management applications include an ICS communication selection application (not shown) that selects and controls how and when information received from devices on an ICS are formatted, packaged and transmitted to a cloud of a TMN

The ICS management applications 323 and/or the ICS control logic 307 may include software components and functionality provided by one or more applications and/or services of the transformation layer 102 and/or core services layer 110, for example, the SIID management applications 107, ICS management applications, and ICS management services 118. Such components and functionality may have been installed during production of the SIID 123 or after production, for example, after the SIID 123 is installed in an ICS, in which case, the secure communication and software validation techniques described in more detail elsewhere herein may be employed. Furthermore, updates to such components and functionality may be received after production using such secure communication and software validation techniques.

The SIID 123 or an IPU included in the SIID 123 may include digital and/or analog interfaces, which may utilize an M12.8 connector to communicate with the one or more sensors, for example, external to the SIID 123 or internal thereto (e.g., one or more of the other sensor components 315). Such interfaces also may utilize I²C busses as well. Such interfaces may include ModBus and or FieldComm Hart Bus and may use plug-and-play connectors of any of a variety or types, for example, PCB terminal blocks and PCB connectors e.g., a Phoenix contact. The one or more other sensor components 315 may include pressure sensors that are used to detect pressure imposed on a connected device (e.g., by a load of goods borne by the connected device or liquid/solid contents of the connected device), temperature array sensors to identify temperature profiles (e.g., the Melexis MLX 90621 Infrared sensor array made available from Melexis of Belgium, which provides 16x4 pixels), strain gauge sensors to identify forces imposed on a connected device (e.g., by measuring the strain imposed by a load on the monitoring device affixed atop the connected device, between the load and the connected device), for example, to determine a weight of contents of a connected device or a load borne by a connected device, RFID readers to read signals transmitted by RFID tags/transponders on a connected device or a load or contents (e.g., packaged goods) of a connected device, optical code readers to read one- or two-dimensional bar codes (e.g., Quick Response Codes (QRCs) or the like) labeling a connected device or contents or load of a connected device, other types of sensors, or any suitable combination of the foregoing. For simplicity of reference, the term "RFID/QRC reader" or "reader" may be used herein to mean an RFID reader and/or an optical reader, which could be a QRC reader. That is, an RFID/QRC reader may include an RFID reader, a QRC reader, another type of optical code reader, or any combination of the foregoing. In some embodiments, the QRC/RFID labels on connected devices and/or load items include a QRC code and/or serial numbers. In some embodiments, one or more RFID (UHF and NFC) readers may be implemented using an integrated circuit (IC) made available from NXP semiconductors, for example, the SLS3S4011_4021 model for RFID (UHF). The coding and communication of RFID/QRC information can be done in many forms, including, for example, using one or more of: ISO 18.000 part 6-compliant RFID tags, UHF EPC Global Generation-compliant communications, GS1-compliant bar codes, and GS1-compliant QRC codes.

In some embodiments, the SIID 123 or an IPU included therein may be extended with RFID (NFC) technology that may be connected via I²C interfaces or any other interface to connect the one or more sensor components 315, which might be an RFID (NFC) reader IC, for example, the NXP semiconductors PN7462 family, to provide access technology implementations. Such implementations may read and exchange data with NFC Access Cards like Mifare /Mifare DES and/or exchange information with User Devices (User Equipment) like smartphones and use the smartphone-based NFC technology for access purposes. In some embodiments, a component of the SIID 123 (e.g., included in an IPU) may be configured to correct interference, for example, g-forces, caused by movement, and thereby avoid taking unnecessary action (e.g., waking up from an idle state, as described in more detail elsewhere herein).

In some embodiments, the CPU core 311 may communicate through the connected device interface 308 with connected devices 316. Such a communication may be done via RS485 Modbus and/or RS485 OSDP Protocols with RFID NFC Readers and the readers may communicate with user equipment via RFID NFC interfaces. In particular, such RFID NFC readers may be provided by Deister Electronic GmbH. In such a combination, the RFID NFC technology may be used to grant access to electrical cabinets in which the SIID and/or the ICS devices are installed. In particular such RS485 Modbus may be used to communicate with fans such as devices provided by ebm-papst to climatize electrical cabinets in which the SIID and/or the ICS devices are installed.

Although not illustrated in FIG. 3, the SIID 123 or an IPU therein also may include one or more mobile phone vibrators or the like and microphones, which may be used for detection of damage to a connected device to which the SIID 123 is connected or to the SIID 123 itself, and, in combination with logic (e.g., hardware, firmware and/or software) within the SIID 123, to determine system health of the connected device and/or SIID 123 by analyzing resonances and frequencies of impact sound on the connected device using, for example, Detailed Sampling Mode (DSM) techniques available from MyOmega and the MYNXG® affiliates or any other appropriate technique, including conventional techniques for analyzing resonances and frequencies of impact sound. For example, a microphone may be connected via digital/analog M12.8 connectors to the SIID 123 and/or integrated within the SIID 123 (e.g., within the IPU therein). Sound waves may be caused by acoustic stimulation of the connected device, and DSM techniques may be employed to sample and analyze the sound waves.

Although not illustrated in FIG. 3, the SIID 123 also may include one or more cameras, which may be used to monitor and record the current load or contents of a connected device to which the SIID 123 is connected, where such information may be used by image-processing logic, e.g., within an IPU therein and/or a gateway, server or other elements of a TMN described herein to control the loading or unloading of items onto/from the connected device, and/or the filling or emptying of the connected device. The SIID 123 may include, within an IPU or otherwise, one or more batteries or accumulators, for example, a Lithium ion battery, and/or interfaces thereto and may be energy buffered using, for example, a gold cap capacitor and/or a battery, powered to store status transitions if the supply voltage is off for a time period. The SIID 123 may also include one or more interfaces that enable the battery or accumulator to be charged, and/or other interfaces, for example, one or more interfaces for display devices, e.g., an e-Paper interface.

One or more components of the SIID 123 may be implemented in hardware, firmware, software or a combination thereof, for example, on a printed circuit board (PCB). In such embodiments, the PCB may be affixed to one or more M12.8 connectors, for example, a male and female M12.8 connector. A battery or accumulator of the SIID 123 may be charged via an M12.8 connector, and external components may communicate with components of the SIID 123 via one or more M12.8 connectors as described elsewhere herein. The SIID 123 may include one or more antennas corresponding to the one or more communication technologies that may be included in the SIID 123 as described elsewhere herein. Each antenna may be integrated, if suitable, within a PCB in embodiments including a PCB, for example, in an IPU, or may be physically connected to the PCB and/or a housing thereof. For example, one or more antennas may be implemented as an integrated foil antenna, glued to the PCB or a housing of one or more components of the SIID 123.

Returning to FIG. 2A, connected device information may be communicated between components of the TMN 100, including SIIDs, other ICS devices, monitoring devices, user devices, gateways and components of the cloud 101, in any of a variety of ways. Such techniques may involve the transmission of connected device information in transaction records (e.g., blocks) of a blockchain or the like (e.g., using cryptographic techniques), and/or the storage of such records or information therein as part of blockchains or the like, for example, as part of a transaction register/ledger, as described in more detail elsewhere herein. Such transaction records may include public information and private information, where public information may be made more generally available to parties, and more sensitive information may be treated as private information made available more selectively, for example, only to certain connected device producers, OEMs and/or particular customers. For example, the information in the transaction record may include private data that may be encrypted using a private key specific to a connected device and/or an SIID and may include public data that is not encrypted. For example, the private data may be encrypted using a private symmetric key or an asymmetric key or similar of the security module 313.

The public data also may be encrypted to protect the value of the data and to enable trading of the data, for example, as part of a smart contract. The distinction between public data and private data may be a matter of degree. For example, both public data and private data may be proprietary to a party, but the private data may be deemed more sensitive, e.g., more of a secret, and thus protected as such. For example, the public data may be basic specifications associated with a connected device or a load or contents thereof, which a party is willing to share with any customer or potential customer, whereas the private data may be data the party is only willing to share with a technology or business partner, for example, for a payment or license fee. Accordingly, public data may not be encrypted at all, enabling any party given access to the transaction record access to the public data, or may be encrypted using a different credential (e.g., key) than the private data, so that a party may be more selective in enabling access to the private data; i.e., only give credentials associated with the private data to parties of certain contracts. Encrypted data, whether public or private, may be accessible only to those parties having a key corresponding to the private key, for example, the private key itself in a case in which symmetric cryptography is employed, or a corresponding asymmetric key in a case in which asymmetric cryptography is employed. In this manner, parties owning information corresponding to a connected device, SIID or other device may make some portions of the information public and other portions private to only select parties, for example, according to a smart contract, as described in more detail elsewhere herein.

In some embodiments, information may be collected from one or more of the SIIDs 123-125 over a predetermined period of time and may be grouped into a single secure transaction record. The secure transaction record may be sent from one or more of the gateways 119-121 to a server, possibly residing within the cloud 101. Furthermore, in embodiments in which an SIID communicates directly with one or more servers in the cloud, the SIID itself may group information that the SIID has detected or determined over time about one or more connected devices, and/or received from one or more other devices on an ICS into a single secure transaction record that the SIID transmits to the server. In some embodiments, user devices may transmit one or more secure transaction records to gateways and/or directly to one or more servers in the cloud.

Each secure transaction record may include a one-way hash of, and a reference (e.g., link or pointer) to an immediately preceding secure transaction record for the overall system (e.g., ICS or other network) for which information is being tracked. A hash of a secure transaction record is an output of a mathematical function, algorithm or transformation (hereinafter "hash function") applied to the secure transaction record. The hash function may be configured to produce a hash value that can be represented by a data structure (e.g., a string) of uniform size or range of sizes. In some embodiments of the system described herein, the hash is a one-way hash in that the hash function that produced the hash value is infeasible to invert (e.g., a cryptographic hash function). By including the one-way hash as part of the next (i.e., current) secure transaction record, it can be determined if an immediately preceding record has been altered by determining if the one-way hash generated from the altered secure transaction matches what is stored in the next transaction in the chain.

Furthermore, in embodiments of the system described herein, each secure transaction record includes a one-way hash of, and a reference (e.g., link or pointer) to an immediately preceding secure transaction record, forming a continuingly growing temporal list of records referred to herein as a record chain (e.g., a blockchain). Altering any secure transaction record in the record chain will have a cascading effect of changing the expected one-way hash of every future secure transaction record, such that the source altered record can be determined. Thus, using a one-way hash function (or mathematical asymmetric hash function) enables, along with other features described herein, reliable tracking of connected device information in a system. Any of a variety of cryptographic one-way hash functions may be used, for example, MD4, MD5, SHA-1, SHA-2 and SHA-256.

In some embodiments, a record chain may be implemented using a blockchain, each secure transaction record of the record chain being implemented using a transaction block of the blockchain (also known as a block-chain or block chain). A blockchain is a continuously growing list of records, called blocks, which are linked and secured using cryptography. Each block contains transaction data or information and may contain a hash pointer as a link to a previous block (i.e., an immediately preceding block in the chain), and a time stamp. By design, blockchains are inherently resistant to modification of the data. Blockchains may be considered an open, distributed ledger that can record transactions between two parties efficiently and in a verifiable and permanent way. For use as a distributed ledger, a blockchain may be managed by a peer-to-peer network collectively adhering to a protocol for validating new blocks. Once recorded, the data in any given block cannot be altered retroactively without the alteration of all subsequent blocks, which requires collusion of a network majority. Blockchains are considered secure by design and may be considered an example of a distributed computing system with high Byzantine fault tolerance.

Although various embodiments of the system described herein use blockchains, the invention is not so limited. Other appropriate technologies may be employed to record transactions herein or to implement a record chain, where such technologies are inherently resistant to modification of the data and can record data in a verifiable and permanent way that preserves temporal relationships between the data blocks so that, for example, deletion/removal/modification of any block(s) in the chain may be detected. Once the data is recorded in any block, such data cannot be altered retroactively without the alteration of all subsequent blocks in the block-chain.

It may be desirable to engage in commercial transactions involving connected devices, for example, purchases, leases, licenses and other types of transactions, and blockchains may be used as part of contractual transaction between transacting parties. For example, the purchase or lease may include the seller providing the buyer access to and/or control of a transaction register of one or more connected devices; e.g., in the form of a blockchain. Going forward from the time of the transaction, the buyer may continue to grow the blockchain, and at later date provide access to or control of the blockchain to a future buyer or other transacting party. In some embodiments, the contractual transaction itself is implemented using blockchains or the like. That is, a blockchain may be used to implement a "smart contract" between parties, for example, by defining the rules (i.e., terms) of the contract (including payment terms, access to information, timing, etc.), enforcing the rules of the contract, and recording the execution of the contract and/or transactions under the contract as transaction blocks of a blockchain. For example, a blockchain may define a license scheme (e.g., one-time fee, installment payments, pay-per-use, etc.) involving a fleet of connected devices or subcomponents (e.g., parts) thereof as described herein, and record transactions under such a contract as transaction blocks of a blockchain. In some cases, the smart contract may define the rules for the exchange of information related to a fleet of connected devices or parts thereof, or a subset thereof.

Such smart contracts may define rules governing the exchange of public and private data/information as described herein and record the results of a transaction in relation to the same. For example, a smart contract may define the rules by which a first party, e.g., a customer, is allowed access to public or private information of an OEM, e.g., the proprietary specification for a connected device, user device, SIID or combination thereof, in exchange for public or private information of the customer for the connected device, user device, SIID or combination thereof, or perhaps in exchange for currency, e.g., bitcoins, or another asset. Proprietary information may include, for example, internal designs, proprietary interfaces, benchmarking results, other test data, manufacturing reliability data, customer lists, price lists, source code, etc. A smart contract may be defined to provide a party to the contract one or more keys (e.g., a private and/or public encryption keys) or other credential(s) that provides access to encrypted public or private information, for example, in response to a payment made by the party, performance of an action, or in exchange for some other form of consideration. The use of smart contracts may be applied to the management of a connected device lifecycles as described herein and commercial transactions in relation thereto.

Components of the TMN 100 may be configured to reduce (e.g., minimize) the number of communications therebetween, which in some embodiments may include communicating transactions (e.g., connected device status information) to servers within the cloud 101 according to a predefined schedule, in which gateways are allotted slots within a temporal cycle during which to transmit transactions (e.g., report connected device status information) to one or more servers. Each transaction transmitted from a gateway to a server may include connected device information received from one more SIIDs, user devices and/or other device in one or more communications (e.g., status reports) sent from the SIIDs and/or user devices since a last such transaction was sent to the server, and may in some embodiments include only changes to information since a last transaction. Connected device information may be collected, stored and managed in a computationally efficient and secure manner that ensures the integrity of the connected device to a high degree of certainty.

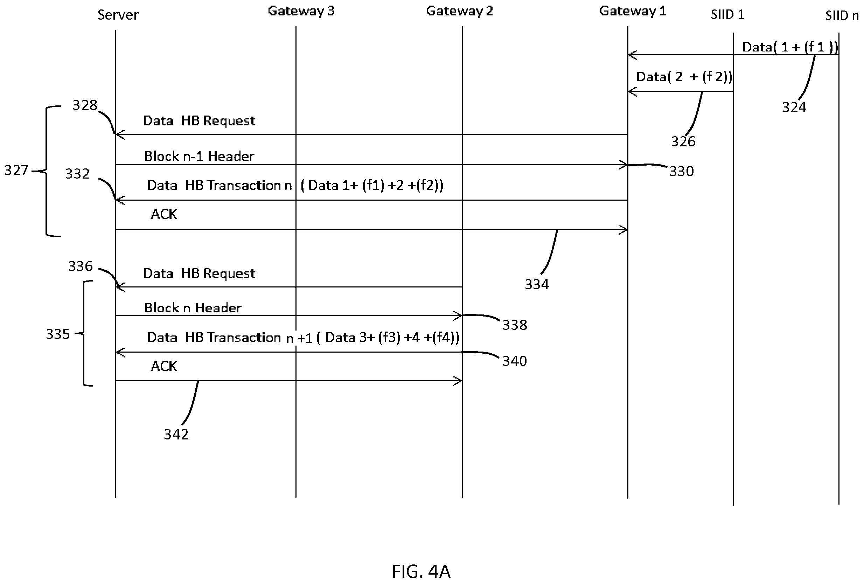

FIG. 4A is a sequence diagram illustrating a sequence of communications between SIIDs, gateways and a server to efficiently and reliably track device information on a network according to embodiments of the system described herein. Other embodiments of a sequence of communications between SIIDs, gateways and a network cloud to efficiently and reliably tracking device information on a network, including variations of the sequence shown in the diagram, are possible and are intended to fall within the scope of the invention. The sequence may be implemented using components of the system described herein, including, for example, components of the TMN 100 and a security module. Although the sequence is illustrated with communications between gateways and SIIDs, it should be appreciated that, in some embodiments, the same or similar communications may be made between one or more user devices and monitoring devices on the one hand (e.g., the user device 142) and a gateway on the other hand. The same or similar communications are also possible between an SIID and a server.

A communication 324, including public data "1" and private data "(f1)" may be transmitted from SIID n to Gateway 1, and then a communication 326, including public data "2" and private data "(f2)" may transmitted from SIID 1 to Gateway 1. At some later point in time, such as during an allotted time slot, Gateway 1 may transmit a transaction transmission request 328, e.g., a Data Heartbeat (Data HB) Request, to the Server. In response, the Server may send a one-way hash 330 of an immediately preceding transaction record, n-1, e.g., from a header of a transaction block n-1, to Gateway 1. Gateway 1 then may send a transaction record 332, e.g., Data HB transaction n, including the public and private information from the communications 324, 326, and the Server may respond with an acknowledgment (ACK) 334. Gateway 2 then may transmit a transaction transmission request 336, e.g., a Data HB Request, to the Server, for example, during an allotted time slot for Gateway 2. In response, the Server may send a one-way hash 338 of an immediately preceding transaction record, n (i.e., the transaction record 332) from a header of a transaction block n, to Gateway 2. Gateway 2 then may send a transaction record 340, e.g., Data HB transaction n+1, including public information "3" and "4" and private information "(f3)" and "(f4)" received, for example, in communications from one or more user devices coupled to Gateway 2, and the Server may respond with an acknowledgment (ACK) 342.

It should be appreciated that the sequence includes two sub-sequences of communications between a gateway and a server including a sequence 327, which includes the four communications 328, 330, 332, 334, and a sequence 335, which includes the four communications 336, 338, 340, 342. Each of the sequences 327, 335 may be considered a streamlined blockchain communication sequence. A streamlined blockchain communication sequence makes efficient use of network resources and may be considered to create a minimum amount of communication overhead necessary to properly implement a transaction chain (e.g., blockchain). In alternative, non-streamlined embodiments, every gateway may receive a blockchain update every time a gateway submits a transaction record to the server. In contrast, using the streamlined blockchain communication sequence, a gateway only receives an update to the blockchain in response to making a data heartbeat request (e.g., the request 328 or the request 336), thus making more efficient use of network resources. Considering that the device information of the transaction record may be transmitted, and an acknowledgement received, in any scheme in which transaction information is recorded, the only additional communication overhead included in a streamlined blockchain communication sequence is the sending of the transaction transmission request, the receipt of the one-way hash of the previous transaction, and the inclusion of the one-way hash of the transaction in the transaction record. That is, for n transactions between gateways and a server of a system, the message overhead (compared to a system not using a transaction chain) is only 2*n messages.

For example, assume a thing management system in which 30 SIIDs, user devices and/or other devices report transactions through a given gateway. In such an example, twelve bytes of information may be produced per such device, a one-way hash of a transaction may have a length of 256 bits (32 bytes), and a communication header for any transaction communication may have a length of 64 bytes. With these assumptions, the number of bytes consumed for each submission of a transaction record from a gateway, and the communication overhead associated therewith, may be calculated as follows:
- Transaction transmission request = communication header = 64 Bytes
- Response from server = communication header + one-way hash = 64 + 32 = 96 Bytes
- Transaction record = communication header + one-way hash + device information = 64 + 32 + 12^{∗}30 = 456 Bytes.
- ACK message = communication header = 64 Byte.
- Total transaction record bytes = 64 + 96 + 456 +64 = 680 Bytes
- Total transaction record overhead = transaction transmission request + response from server + one-way hash of the transaction record = 192 Bytes, which is approximately 25% of the total transaction record bytes.

The percentage of overhead decreases as a number of SIIDs, user devices and/or other devices reporting to a gateway increases. For example, if there are 500 such devices, the overhead percentage may be smaller than 3%.

Although the streamlined blockchain communication sequence is described in relation to communications between a gateway and a server, it should be appreciated that the invention is not so limited. The streamlined blockchain communication sequence may be used to communicate transaction records between any two components of a TMN, including any of the components described herein. It should further be appreciated that, in some embodiments, an SIID, user device and/or other device may communicate directly with a server without use of a gateway, and in such embodiments such a device may communicate information to one or more servers using the streamlined blockchain communication sequence. In some embodiments, an SIID may initiate a sequence directly with the cloud 101. In such cases, the SIID may contain one or more security modules such as the security modules described in more detail elsewhere herein. Furthermore, in some embodiments, an SIID itself may serve the role of a gateway in the communication sequence, and one more of the SIIDs may not be SIIDs, but rather ICS devices (e.g., PLCs) that are not SIIDs, including ICS controllers and other ICS devices.

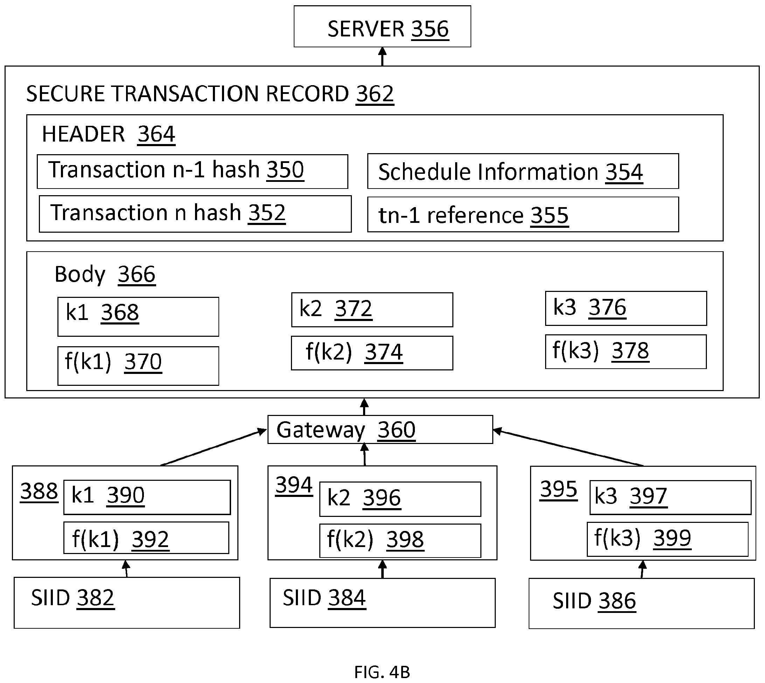

FIG. 4B is a block diagram illustrating using a secure transaction record 362, such as a transaction block of a blockchain, to communicate and store connected device-related information on a TMN according to embodiments of the system described herein. Other secure transaction record formats, including variations of the secure transaction record 362, are possible and are intended to fall within the scope of the invention. While the illustrative embodiment of FIG. 4B describes communicating secure transaction records between SIIDs and gateways, or directly from SIIDs to servers, it should be appreciated that the invention is not so limited. Secure transaction records, as described in relation to FIG. 4B and elsewhere herein, also may be communicated between user devices or other devices (e.g., the user device 141) and gateways or directly from user devices or other devices (e.g., the user device 140) to a server. Furthermore, such secure transaction records may be transmitted between ICS devices of an ICS, including ICS controllers to an SIID serving as an interface to one or more components of a TMN, such as a gateway or TMN server.

A plurality of SIIDs 382, 384, 386 may send (e.g., transmit) communications 388, 394, 395, respectively, to a gateway 360 concurrently or at different times, for example, in accordance with a predefined schedule, in response to an event (e.g., a determined change in property and/or state of a connected device) or in response to user input (e.g., a data request). Each of the communications 388, 394, 395 may include public information elements 390, 396, 397, respectively, and private information elements 392, 398, 399, respectively, described in more detail elsewhere herein. It should be appreciated that one or more of the communications received by the gateway 360 may have been transmitted by one or more SIIDs in accordance with a predefined schedule, in response to an event or in response to user input.

The gateway 360 may generate the secure transaction record 362 and may send the secure transaction record 362 to a server 356 that is possibly in the cloud 101. The secure transaction record 362 may include a transaction header 364 and a transaction body 366. The transaction body 366 may include public information elements 368, 372, 376 corresponding to the public information elements 390, 396, 397, respectively, and private information elements 370, 374, 378 corresponding to the private information elements 392, 398, 399, respectively.

The transaction header 362 may include a one-way hash 350 of an immediately preceding secure transaction record, tₙ₋₁, a reference 355 (e.g., link or pointer) to the immediately preceding secure transaction record, tₙ₋₁, a one-way hash 352 of a current secure transaction record, tₙ, and schedule information 354. The one-way hash of tₙ₋₁ may have been obtained from the server 356 in response to a request, or, in another embodiment, in an update from the server 356 in response to submission of another secure transaction record to the server 356. In some embodiments, information included in the record transaction body 366 may include only information corresponding to a connected device that has changed since a last transaction. In some embodiments, information unchanged since a last transaction is included in the transaction record body 366, and there is a mechanism for indicating which information has changed. The transmission of secure transaction records from gateways to a server (or directly from an SIID or other device to a server) may be scheduled using predetermined time slots within a cycle. The transmission schedule may be defined, stored and/or under control of the server to which record transactions are transmitted, and may be implemented using any of a variety of technologies, including a cloud-based scheduler. The schedule information 354 may specify a predetermined time slot within a cycle for transmission of the secure transaction record 362 to one or more servers in the cloud 101.

The secure transaction records transmitted from gateways to servers (e.g., the secure transaction record 362) may be stored on the server as part of a transaction chain for the gateway, i.e., a transaction chain corresponding to a thing management system associated with (i.e., specific to) the gateway. The server also may store the transaction record as part of a transaction chain corresponding to a thing management system at the server/cloud level, for example, for which thing management systems at the gateway level are subsystems. For example, one or more servers in the cloud 101 may store a transaction chain that includes transaction records corresponding to the gateways 119-121, as well as transaction chains corresponding to SIIDs or other devices directly connected to one or more servers in the cloud 101 or to user devices. While FIG. 4B has been described primarily in relation to communicating information from SIIDs through gateways to servers in the cloud, it should be appreciated that the invention is not so limited. In some embodiments of the system described herein, an SIID may collect connected device information over time (e.g., from connected devices coupled thereto and/or other from devices on an ICS) and transmit a secure transaction record like that described herein directly to one or more servers in the cloud without use of a gateway.

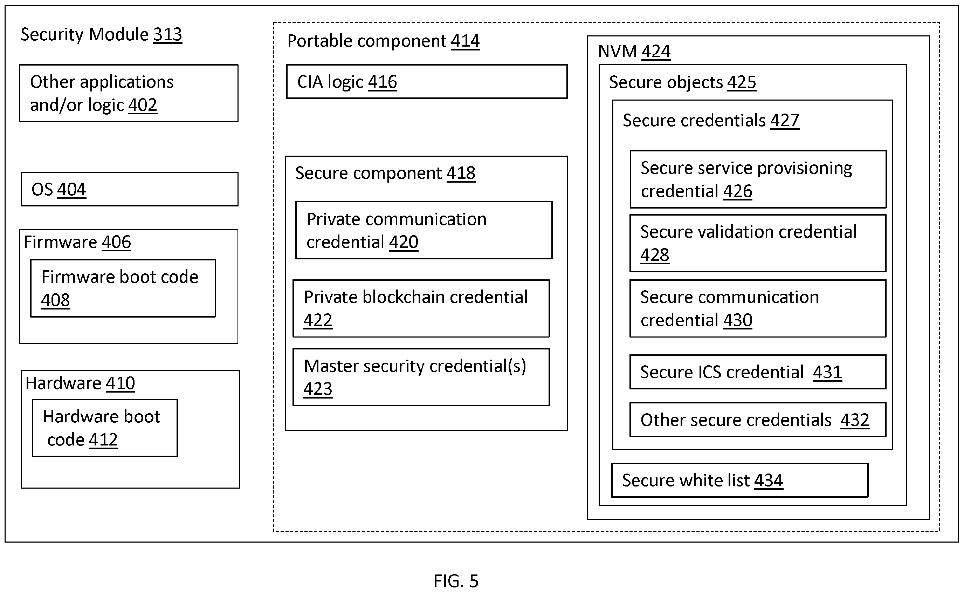

FIG. 5 is a block diagram that illustrates in more detail the security module 313 that contains a secure component 418 which could be a TPM. The security module 313 includes a subset of the functions of the SIID 123, described elsewhere herein. The security module 313 may also be used for a gateway or a user device, according to embodiments of the system described herein. Other security modules, including variations of the security module 313 or the security module 127, are possible and are intended to fall within the scope of the invention. It should be appreciated that the security module 313 may build upon or extend existing security platforms. For example, the security module may be implemented as a trusted compute base of a PLC including all security relevant functions. It is possible that such a security module is an outdated TPM 1.2 within a PLC system.

In another case, the security module 313 may be a subset of a PLC extension implemented with MYNXG® technology, as shown in the SIID 123 in Fig. 3. It is possible that such a PLC extension that contains the security module 313 and further functionalities of the SIID 123, as described elsewhere herein, may serve as a security master for systems with older/outdated security technology and/or a PLC system with limited security capabilities acting as a security slave. The security master and slave relation may be established and validated via cryptographic principles such as mutual authentication and/or TLS handshakes.

The security module 313 may include hardware 410, firmware 406, an operating system (OS) 404, certification, integrity and authentication (CIA) logic 416, the secure component 418, a non-volatile memory (NVM) 424, other applications and/or logic 402, other components, or any suitable combination of the foregoing. The security module 313 may implement a root of trust (RoT), serving as a trusted computing base (TCB), including providing hardware and firmware based security including cryptography for a corresponding device (e.g., SIID, gateway, user device or monitoring device) in which the RoT is embedded. The security module 313 may provide compute resources that are dedicated exclusively for such security and may be physically secure against access by external components and processes.

In some embodiments, an RoT may be implemented by the security module 313 as follows. The hardware 410 may include hardware boot code 412, such as an Intel Atom-based hardware start-up code and/or boot loaders of ARM CPU families, which, when triggered, may implement a ROM-based boot sequence. The sequence may verify (e.g., using a boot partition key pair) the firmware (FW) boot code 408 (including external firmware interface (EFI) code inside the basic input-out system (BIOS)) of the firmware 406. An initial version of the firmware boot code 408 may be initially provided to the security module 313 and/or the secure component 418 during manufacture within a secure production environment. The initial firmware boot code 408 may ensure that an initial boot of the system is secure. Subsequent versions of the boot code 408 may rely on the initial version as a basis for validation. After being verified as part of implementing the RoT, the FW boot code 408 then may verify software modules within the OS 404, for example, kernel and kernel objects of the OS 404, e.g., a Linux OS, a C/C++ Kernel, a JAVA implementation on top or in combination with a Linux OS, etc. After being verified, the OS 404 may call the secure component 418, which may be (or may include) a TPM and/or an SE. The secure component 418 may be implemented on a single chip using hardware and firmware, and in some cases may include additional software.

The secure component 418 may be configured to validate the CIA logic 416, which may be implemented in software, firmware and/or hardware. In some embodiments, the CIA logic 416 may be, or may include, the MYNXG® Cipher Suite™ made available from MyOmega and/or MYNXG® affiliates. Validating the CIA logic 416 may include use of one or more private credentials, for example, a private communication credential 420 and a private blockchain credential 422, each of which may be a cryptographic key having, for example, a length of 256 bytes, stored within the secure component 418. In an embodiment herein, a private key may be created by and used at the secure credential service 117 and a corresponding public key may be provided in the SIID 124/123 and used to validate downloaded software. A different private key may be used for TLS communication and the mutual authentication with the cloud 101. After successful mutual authentication, any software download can take place, hence the existence of the private key is a security condition that is fulfilled before any software download because software is downloaded using TLS communication.

In addition to the private communication credential 420 and private blockchain credential 422, the secure component 418 may include one or more master security credentials 423. Master security credentials are additional keys stored inside the secure component 418 (e.g., a TPM), tamper evident non-volatile memory inside the secure component. The secure component 418 may create a secure ICS credential 431 which may be stored in NVM 424 to provide the secure objects 425 and the secure credential 427. The principle of such objects is that a key is used to encrypt the objects and only the secure component 418 is able to decrypt the objects and to use the objects for communication. The NVM 424 may be any flash memory without any specific security features. Using the NVM 424 may be done to save a high cost memory and capacity inside the secure component 418.

An additional master security credential may be a private key which is used to generate software verification after each reset using mutual Authentication between the security master implemented with MYNXG® technology and a security slave implemented with existing PLC technology. The security slave PLC may be a legacy PLC and may contain a private key that must be programmed/changed within the legacy PLC. Communication may be provided between a security master and a security slave by using a public key of the master to encrypt data transmitted from the master to the slave and using a public key of the slave to encrypt data transmitted from the slave to the master. Each of the master and slave would have a private key for a corresponding one of the public keys for decrypting and the private keys would not be shared.

In an embodiment herein, the private communication credential 420, the private blockchain credential 422 and the one or more master security credentials 423 are embedded in the secure component 418 at the time of manufacture (i.e., production) and are never transmitted outside of the secure component 418. In some embodiments, one or more of the credentials 420, 422, 423 may be initially generated inside the cloud 101 using, for example, a hardware security module (HSM) in the cloud 101, e.g., an HSM within the secure credential service 117 of the core services layer 110. The private communication credential 420 may be used, for example, by the CIA logic 416 to establish a secure channel for uplink communications, e.g., from an SIID to a gateway or directly to a cloud server. For example, the private communication credential 420 may be used to establish a TLS communication channel, including initiating a symmetric key exchange (e.g., as part of a TLS handshake) and employing elliptic curve and/or RSA based mutual authentication to facilitate encrypted communication between an SIID (or other device) and another device.

The private blockchain credential 422 may be used for creating and verifying blockchain hash values, and to implement secure transaction records, for example, as described in more detail elsewhere herein, e.g., in relation to FIG. 2A and FIG 4. The one or more master security credentials 423 may be used to encrypt secure objects 425, such as TPM objects, at the time of manufacture of the SIID (or other time), and to decrypt as necessary, as described in more detail elsewhere herein. The master security credential(s) 423 may have been generated via random generators and/or hardware inside the secure component 418 during production.

The secure component 418 may be configured to protect against a possibility of reading data therefrom when locked. Such locking may occur as a last step of producing (i.e., manufacturing) the secure component 418, the security module 313 and/or a device (e.g., SIID) in which the secure component 418 is embedded. The secure component 418 may be certified by the German Bundesamt für Sicherheit in der Informationstechnik (BSI) and may provide Common Criteria (CC) Evaluation Assurance Level 5, i.e., CC_EAL5 security.

Validating the CIA logic 416 also may include utilizing one or more of the secure objects 425, including secure credentials 427 (e.g., secrets) and a secure whitelist 434, which may be stored in encrypted form in the NVM 424, which may be flash memory. Each secure object 425 may be created during production of the security module 313 and/or the secure component 418 and encrypted using one of the one or more master security credentials 423. The secure credentials 427 may include, for example, a secure service provisioning credential 426, a secure validation credential 428, a secure communication credential 430, a secure ICS credential 432, and perhaps other secure credentials 432. The secure validation credential 428 may be created, encrypted and stored within the security module 313 during production, as described in more detail elsewhere herein.

The secure service provisioning credential 426 may be used for service provisioning on a gateway, monitoring device, user device or other device of a TMN. The secure communication credential 430 may be used to establish secure communication channels with other components of a TMN (e.g. a gateway or cloud server), for example, in accordance with TLS. The secure communication credential 430 may be derived from and/or correspond to the private communication credential 420. For example, the secure communication credential 430 may be a symmetric key corresponding to (possibly equal to) the private communication credential 420.

In an embodiment herein, a service layer private key is stored at the secure credential service 117 and a service layer public key (and possibly corresponding certificate) are stored in a component of a TMN (e.g., an MYNXG® Edge or Sense device or PLC connector provided by MyOmega and the MYNXG® affiliates). The service layer private key and the service layer public key may be used for downlink communication to the component of the TMN. A controller private key (e.g., the private communication credential 420) may be stored inside the component of the TMN and a controller public key (and possibly corresponding certificate) may be stored in the cloud 101 (or other communication endpoint). The controller private key (e.g., the private communication credential 420) and the controller public key may be used for uplink communication from the component of the TMN. After a reset of an Edge/Sense component (including an SIID), a mutual TLS authentication takes place using the keys.

The CIA logic 416, after being validated (e.g., utilizing the implemented RoT based on the production methods (initial boot) and the credentials stored inside the secure component), may use the secure validation credential 428 to validate signatures (or possibly hashes) of one or more software modules on a device (e.g., an SIID), including, for example, one or more modules of the OS 404 (e.g., a virtual machine (VM) and/or activity manager thereof), the binary code of the CIA logic 416, the binary code of loadable user space modules of the OS 404, the binary code of one or more other applications and/or logic 402, any software modules in the SIID 123, and other software modules. For example, the secure validation credential 428 may be used to validate a digital signature of one or more of the foregoing software modules. In some instances, a digital signature may be provided by using a private key of a public/private cryptographic key pair where the digital signature may be validated using the secure validation credential 428 (or similar) as the public key. In some cases, a digital signature may be provided using a one-way hash and the secure validation credential 428 (or similar) may be used in connection with validating the one-way hash.

The software modules may be signed by private keys within a secure part of the cloud 101, for example, an HSM of the secure credential service 117. The software modules may have been signed using the SVC 119, which may use a credential that together with the secure validation credential 428 constitutes a credential pair (e.g., key pair) of a cryptography scheme. For example, one or more of the software modules may have been produced by MyOmega and/or MYNXG® affiliates and signed according to the MYNXG® Public Key Infrastructure made available by MyOmega, e.g., in a highly secure environment in accordance with an ISO 27.001 certified set of rules of the MYNXG® Public Key Infrastructure. The digital signature(s) generated by the producer for one or more software modules may be included in the one or more software modules and accessed by the CIA logic 416 to perform the validation using the secure validation credential 428

The CIA logic 416 also may use the secure validation credential 428 (e.g., as part of implementing an RoT) to determine whether one or more software modules (e.g., any of those described above in relation to verifying signatures) installed on a device (e.g., an SIID, ICS device, gateway, user device, or monitoring device) are members of a whitelist of software modules (e.g., applications and other types of software modules) that are permitted to be installed on the device. For example, the producer of an SIID or other device may store an encrypted list of permitted software modules, the secure whitelist 434, within the NVM 424. The CIA logic 416 may be configured to determine whether one or more of the software modules on the device are also included on the secure whitelist 434 by decrypting the secure whitelist 434 using the corresponding master security credential 423, and comparing the name (or other identifier, e.g., a hash) of the software module to the decrypted names or other identifiers of the software modules included in the secure whitelist 434. If the software module matches one of the names on the secure whitelist, the software module may be allowed to be installed and/or executed on the device. If the software module does not match any of the names on the whitelist, the software module may not be allowed to be installed and/or executed on the device. Furthermore, an alarm or other notification may be issued, for example, by sending communications to one or more other devices (e.g., user devices) on the TMN 100 and/or aurally, visually or physically on the device itself (e.g., using sound, light, text and/or vibration) or to a connected device attached to the device.

In some embodiments, a secure blacklist (not shown) of software modules that are not permitted to be installed on the device may be included in the secure objects 425. For example, the producer of an SIID or other device may store a digitally signed and/or hashed list of unauthorized software modules within the NVM 424, possibly in encrypted form. The CIA logic 416 may be configured to determine whether any software modules on the device are also included on the blacklist, for example, by decrypting and/or verifying the blacklist using the corresponding master security credential 423 (or similar), and comparing the name (or other identifier) of the software module to the names or other identifiers of the software modules included in the blacklist. If a software module matches one of the names on the blacklist, the software module may not be allowed to be installed and/or executed on the device. Furthermore, an alarm or other notification may be issued, for example, as described in more detail elsewhere herein.

The secure ICS credential 431 may be used to establish a secure communication channel between an SIID and other devices of an ICS, for example, in accordance with a datagram transport layer security (DTLS) protocol, over which RT and IRT data may be securely exchanged in encrypted form. The private shared key (PSK) may be generated as a TPM object and/or generated by the secure credential service 117. It is advantageous to store the PSK securely inside the PLC without public exchange of the PSK. This may be provided by downloading the PSK into the PLC during personalization. In such a case, the HSM will create the PSK.

One or more other secure credentials 432 may be included in the NVM 424 and used as part of validating one or more software modules, establishing secure communications or performing one or more other security-related functions.

In some embodiments, one or more components of the security module 313, for example, the CIA logic 416, the secure component 418 and/or the NVM 424, and/or sub-components thereof, may be implemented as part of a portable component 414, such as an insertable card, stick, dongle or other relatively small, portable piece of computer hardware connectable to (e.g., a port of) an SIID, ICS device, user device, gateway or other device of a TMN. Use of the portable component 414 or the like may be desirable on a device, for example, if the device (e.g., PLC) is produced by a different entity (e.g., Siemens, Rockwell Automation, Phoenix Contact, Schneider Electric, ABB) than the entity (e.g., MyOmega and MYNXG® Affiliates) that provides one or more of the secure components described herein.

The portable component 414 may be configured with one or more communication interfaces to enable physical and/or wireless interconnection with a remainder of the security module 313 and a device on which the security module 313 resides, e.g., an SIID. For example, the portable component 414 may be configured with a USB port and/or NFC, BT, BT LE or other technologies that enable such communications. The portable component 414 may be locally coupled to the device for which the portable component 414 will be used, the device including the remainder of the security module components.

In some embodiments, functionality of the portable component 414 and in particular the secure component 418 may be integrated within one or more devices on a TMN (e.g., the user devices 141, 140) and the functionality described may reside as an integrated part of such devices. The software services provided by the security module 313 then may be implemented as part of the firmware, operating system, application framework and/or application software of the device in which the portable component is connected.

In some embodiments of the system described herein, a data model for managing connected devices in a TMN may be provided. The data model may include a plurality of object types and attribute types that may be used to design and represent objects for managing connected devices in a TMN. An object may be considered an instance of an object type, and may be defined by an ID (e.g., name) and one or more constituent objects and attributes. The constituent objects and attributes enable a user to associate information defined by the objects and attributes to the object of which the objects and attributes are a member. An attribute may be considered an instance of an attribute type, and be defined by an ID (e.g., name) and a value for the attribute type.

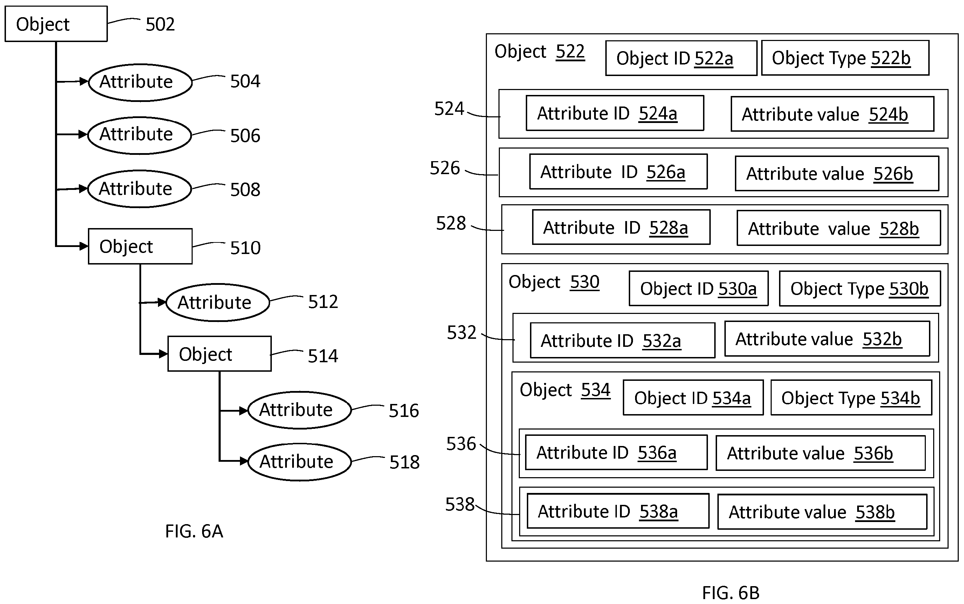

FIG. 6A is a block diagram illustrating an example of a data object 502 for managing connected devices in a TMN, according to embodiments of the system described herein. Other data objects (often referred to herein as simply "objects") for managing connected devices in a TMN, including variations of the data object 502, are possible and are intended to fall within the scope of the invention. It should be appreciated that any number of data objects may be defined and used to managing connected devices in a TMN. The data object 502 may include attributes 504, 506, 508, another object 510, and/or one or more additional other objects and/or attributes. The object 510 may include an attribute 512, another object 514, and one or more other objects and/or attributes. Similarly, the object 514 may include attributes 516, 518 and one or more other objects and/or attributes.

It should be appreciated that the various embodiments of a data model described herein, including one or more data objects (e.g., the data object 502 and other objects defined herein) may be shared and used among multiple entities (e.g. companies), as opposed to being exclusive (e.g., proprietary) to a single entity. As described herein, blockchain technology may be used to ensure the integrity of data objects shared among multiple entities. For example, blockchain technology may be used to implement one or more data objects (e.g., for managing connected devices in a TMN) as part of a secure transaction register (e.g., a distributed ledger).

FIG. 6B is a block diagram illustrating an example of a data structure 524 of a data object (e.g., the data object 502) for managing connected devices in a TMN, according to embodiments of the system described herein. Other data structures of a data object for managing connected devices in a TMN, including variations of the data structure 524, are possible and are intended to fall within the scope of the invention.

The data structure 524 may be for an object 522, which may correspond to the object 502. The object 522 may include and be defined by an object ID (e.g., name) 522a and an object type value 522b, which may be a value representing any of the object types described herein. The object 522 may include and be defined by attributes 524, 526, 528, which may correspond to the attributes 504, 506, 508, respectively. The attributes 524, 526, 528 may include and be defined by attribute IDs 524a, 526a, 528a, respectively, and attribute values 524b, 526b, 528b, respectively. The object 522 also may include and be defined by an object 530 (e.g., the object 510), which may be defined by an object ID 530a and an object type value 530b (which may be a value representing any of the object types described herein), an attribute 532 (e.g., the attribute 512), and an object 534 (e.g., the object 514). The attribute 532 may include and be defined by an attribute ID 532a and an attribute value 532b. The object 534 may include and be defined by an object ID 534a and an object type value 534b (which may be a value representing any of the object types described herein), an attribute 536 (e.g., the attribute 516), and an attribute 538 (e.g., the attribute 518). The attribute 536 may include and be defined by an attribute ID 536a and an attribute value 536b, and the attribute 538 may include and be defined by an attribute ID 538a and an attribute value 538b.

Types of objects may include, but are not limited to, a product, a company, a site, a connected device, a system, a rule, a process and a person. In some embodiments, other types of objects may be defined. A product object type represents a product, which may be a physical product (e.g., a package of goods), a virtual product (e.g., software application) or even a service (e.g., delivery service). A company object type may represent a business entity (e.g., a legal entity), which may serve in different roles (e.g., OEM, supplier, consumer, etc.) in different contexts, which may be reflected in values of attributes defined for the company. A site object type may be used to define and represent a physical place defined by a geographical location (i.e., area), for example, a site at which an ICS is deployed. A connected device object type may be used to define and represent any connected device that may be managed by a TMN and/or controlled by an ICS, including any type of connected device described herein. It should be appreciated that a connected device object type may be used to define and represent not only connected devices monitored or controlled by a sensor, monitoring device and/or ICS device (e.g., an SIID and/or PLC), but also the sensor, monitoring device and/or ICS device itself.

A system object type may be used to define and represent a system with the ability to maintain records such as, for example, a traditional enterprise resource planning (ERP) system to manage financial information and other information of a company, e.g., an ERP system made available from SAP or Oracle, a customer relationship management (CRM) system, e.g., a CRM system made available from salesforce.com, a produce lifecycle management (PLM) system and/or energy management system (EMS) to control production and manufacturing processes, e.g., those made available from Siemens, or any suitable combination of the foregoing. In some embodiments of a data model as described herein, the data model may be configured to enable interfacing with one or more such systems; i.e., to be able to map and exchange objects and/or data thereof between systems.

A rule object type may be used to define and represent a rule, which may define conditions and actions corresponding to the conditions, i.e., actions to take if the conditions are met. Rules may be used to define smart contracts as described herein. A process object type may be used to define and represent a process, for example, a structured and repeatable workflow. A person object type may be used to define and represent a human being. In some embodiments of the system described herein, a data model includes one or more attribute types for defining attributes for an object. Attribute types may include, for example, a group attribute type, a role attribute type, a state attribute type, a safety attribute type, a security attribute type, a quality attribute type, a supply attribute type, a finance attribute type, a technical attribute type, and a basic attribute type. In some embodiments, other attribute types are included.

A relation group attribute type is an attribute linking master data and data structures to each other. For example, a relation could be something like X belongs to Y. Possible relations are: Assignment, Commissioning, Installation, Hierarchy, Classification and Successor. Assignment is a virtual process that assigns a TMN field component such as, for example, a gateway (e.g., an MYNXG® Edge device provided by MyOmega and the MYNXG® affiliates), SIID, sensor or monitoring device (e.g., an MYNXG® Sense device provided by MyOmega and the MYNXG® affiliates), to something, such as, for example, a customer, partner, user, and/or blockchain. Commissioning is a physical process that links product information, a transportation unit, a TMN field component and customer information and allows the monitoring of supply chain processes. Commissioning does not change elements involved, but instead, combines the elements. Commissioning is a relation that is temporary, for example, a product being filled into a connected device. Installation is a physical process where TMN field components are installed at products/connected devices and where additional products/connected devices are integrated. The involved TMN field components, connected devices and/or products may create a new TMN (e.g., IoT) subsystem that is further monitored. Hierarchy is a relation where one is part of another; for example, something is packed and is part of loading a product on a pallet. Classification is a relation where connected devices are grouped. For example, a classification might be that particular products are hazardous and belong to a classified group of connected devices, such as, for example, explosive gasses. Successor is a relation where one is replaced by another. For example, all products with product number Y are replaced on a given date by the product with product number Z.

The role attribute type may be used to define a role for a person, including, for example, the capabilities and/or responsibilities of a person for an object. For example, the role attribute may be used to define a role with respect to (i.e., in association with) a particular process at a company site. The state attribute type may be used to define a state attributes for an object to manage connected devices in a TMN. The safety attribute type may be used to define one or more safety attributes for an object to manage connected devices in a TMN. The security attribute type may be used to define one or more security attributes for an object to manage connected devices in a TMN. For example, the security attribute may be used to specify confidentiality, integrity and availability (CIA) attributes for such objects.

The quality attribute type may be used to define one or more quality attributes for an object to manage connected devices in a TMN. For example, the quality attribute type may be used to specify attributes of products and processes. The supply attribute type may be used to define one or more supply attributes for an object (e.g., a good) to manage connected devices in a TMN. The supply attribute may be particularly useful in managing a supply chain. The finance attribute type may be used to define one or more finance attributes for an object to manage connected devices in a TMN. For example, finance attributes may include any attributes having to do with finance or trade. The technical attribute type may be used to define one or more technical attributes for an object to manage connected devices in a TMN. For example, technical attributes may include a private email address or phone number of a person. The basic attribute type may be used to define one or more basic attributes for an object to manage connected devices in a TMN. Basic attributes may include, for example, basic biographical information about a person, e.g., name, address, city, state, ZIP code.

A plurality of different complex data objects may be defined using various combinations of the object types and attribute types described herein, which then may be used by one or more components of a TMN to manage connected devices, as described in more detail elsewhere herein. For example, as an illustrative embodiment, a person object (i.e., an instance of a person object type) may be defined for a TMN using one or more different attribute types and/or object types as follows:
- One or more basic attributes may be defined, including, for example: first name; given (i.e., family) name, address information (e.g., ZIP code, city/town, street name, street number);
- One or more technical attributes may be defined, including, for example, personal (i.e., private) email address(es), business (i.e., company) email address(es); personal cell phone number; and business cell phone number;
- One or more role attributes may be defined, including, for example:
   ∘ Employer (e.g., company, government organization, education institution or individual) of the person,
   ∘ Position (e.g., rank) within employer,
   ∘ Competencies, e.g., for what processes or connected devices the person has competencies,
   ∘ User access rights to information and/or processes within a TMN, e.g., as an MYNXG® user within am MYNXG® network made available by MyOmega or MYNXG® affiliates
- One or more security attributes may be defined for the person, for example:
   ∘ a user password to gain access (which may be stored in encrypted mode) or might be provided by a user authentications service or software e.g. OAuth 2.0 which would provide tokens to grant access,
   ∘ subscriber identity module (SIM) data and identifier, which may be used as attributes for other objects to associate the person with the other objects,
- One or more safety attributes may be defined for the person, for example:
   ∘ an IMEI of a cell phone of the person; classifying the cell phone for usage in hazardous areas e.g. according to NEC 500 /505 or ATEX classifications.
- One or more site objects, and process objects for each site object, may be defined for a person.

As another illustrative embodiment, a company object (i.e., an instance of a company object type) may be defined for a TMN using one or more different attribute types and/or object types as follows:
- One or more basic attributes may be defined including, for example, the country in which the company is incorporated;
- One or more finance attributes may be defined including, for example, a governmental (e.g., trade) registration number, or a tax ID (e.g., a VAT number)
- One or more site objects may be defined for sites of the company, where each site object may have one or more attributes defined including, for example:
   ∘ One or more basic attributes, for example, site address information, e.g., ZIP code, town/city, street name, street number; and
   ∘ One or more technical attributes, for example, GPS coordinates of the site, site maps, installation blue prints; WIFI networks on site, cells of wireless phone networks covering at least part of the site

As another illustrative embodiment, a process object (i.e., an instance of a process object type) may be defined for a TMN using one or more different attribute types and/or object types as follows:
- One or more safety attributes specifying, for example, a safety classification of a process, e.g., for hazardous environments, which could be used, for example, in defining a rule object;
- One or more product objects specifying one or more products involved in the process, each of the one or more product objects including, for example:
   ∘ One or more basic attributes including, for example, a unique product ID, e.g., according to the GS1 product naming conventions as specified as of the date of filing at https://www.gs1.org/ and/or in related documents.
   ∘ One or more quality attributes, e.g., specifying values for one or more quality metrics of the product
- One or more connected device objects specifying one or more connected devices involved in the process, each connected device object including, for example, one or more technical attributes, e.g., a unique ID of the connected device within the TMN, a product ID and/or serial number.
- One or more rule objects specifying one or more rules (e.g., conditions plus actions) for the process
- One or more role attributes specifying one or more roles, including for example, the competences needed to execute the process (e.g., through competence profiles, the requirements of person may be specified.

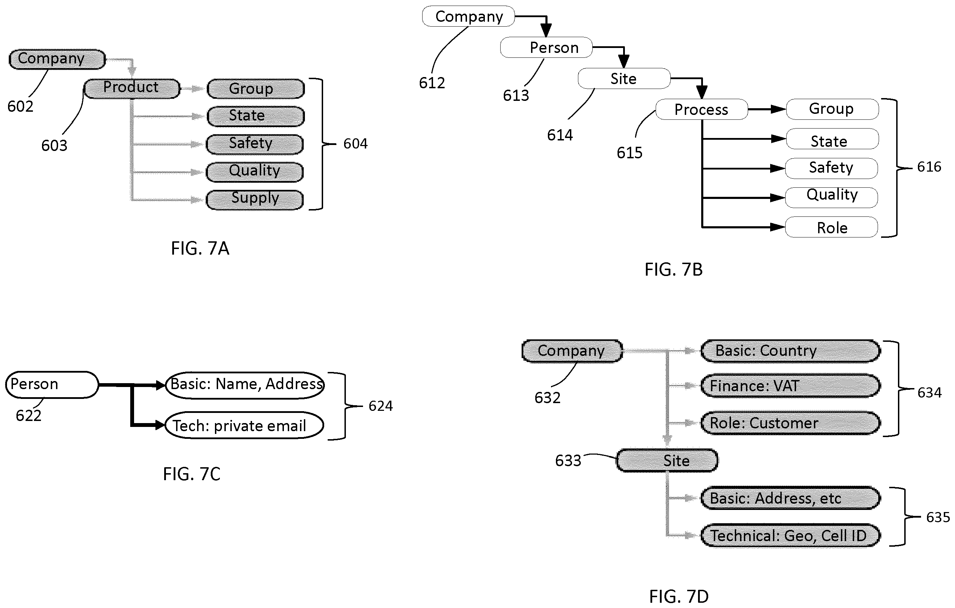

A variety of different objects may be defined, including any of those depicted in relation to FIGs. 7A-7H. FIGs. 7A-7H illustrate examples of data objects, according to embodiments of the system described herein. Accordingly, the discussion of objects herein, including test, arrangement, manipulation, etc. generally refers to the objects illustrated in FIGs. 7A-7H and the corresponding discussion.

FIG. 7A illustrates a product object 603, for a product offered by a company represented by company object 602, the product being defined to have attributes 604.

FIG. 7B illustrates a person object 613 for a person associated with a company represented by a company object 612, and a process object 615 for a process for which the person has competencies at a site represented by a site object 614, the site associated with the company represented by the company object 612. The process object 615 has multiple attributes 616, including a role that may specify competencies of the person with respect to the process.

FIG. 7C illustrates an example of a person object 622 having basic and technical attributes 624. In some embodiments of the system described herein, the person object 622 has a minimum of attributes that may be required to be defined for a person object to be able to be used in a TMN, such as the TMN 100.

FIG. 7D illustrates an example of a company object 632 with attributes 634, including a role attribute indicating that the company represented by the company is a customer. A site object 633 defines a site associated with the company represented by the company object 632. The site object 633 includes basic and technical attributes 635. In some embodiments of the system described herein, the site object 633 has a minimum of attributes that may be required to be defined to be able to be used in a TMN, such as the TMN 100).

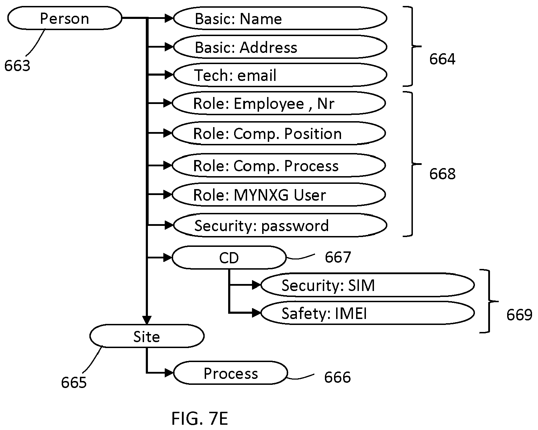

FIG. 7E illustrates an example of a person object 663, including an associated site object 665 having an associated process object 666. A plurality of attributes 664, 668 are defined for the person object 663. Some of the attributes 664 are for data related to the GPRS (General Data Protection Regulation) being adopted by European countries. The person object 663 may also be associated with a connected device object 667 having attributes 669 corresponding to mobile related data. In some embodiments of the system described herein, the objects and attributes illustrated for the person object 663 in FIG. 7E represent a minimum of object and attributes that are required to be defined for a person object to be able to be used to provide a threshold level of access control and security for a site on a TMN, such as the TMN 100.

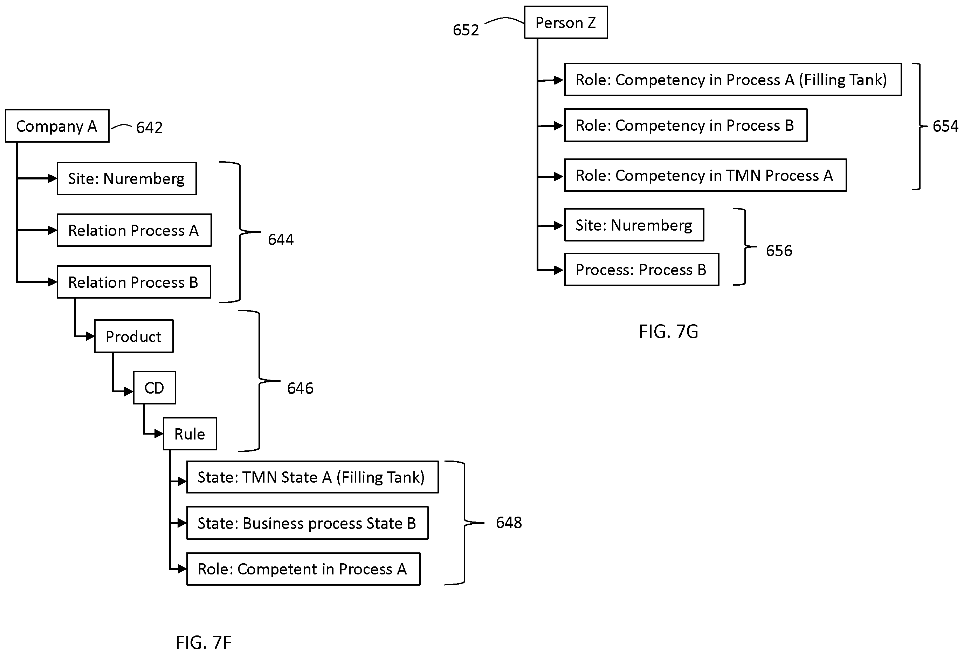

FIG. 7F illustrates an example of a company object 642 representing a company A. The company object has a plurality of associated objects 644 including a site object and a relation process A and a relation process B, which indicate that Process A and Process B are carried out by the company. Process B is shown as having associated objects 646 including a product, a connected device, and a rule. The rule object has associated objects 648 corresponding to different required states and a required competency (role) of a person carrying out the process.

FIG. 7G illustrates an example of a person object 652 having associated object 654 corresponding to roles (competencies) of the person object 652. There may also be other objects 656 associated with the person object 652 including an associated site and an associated process.

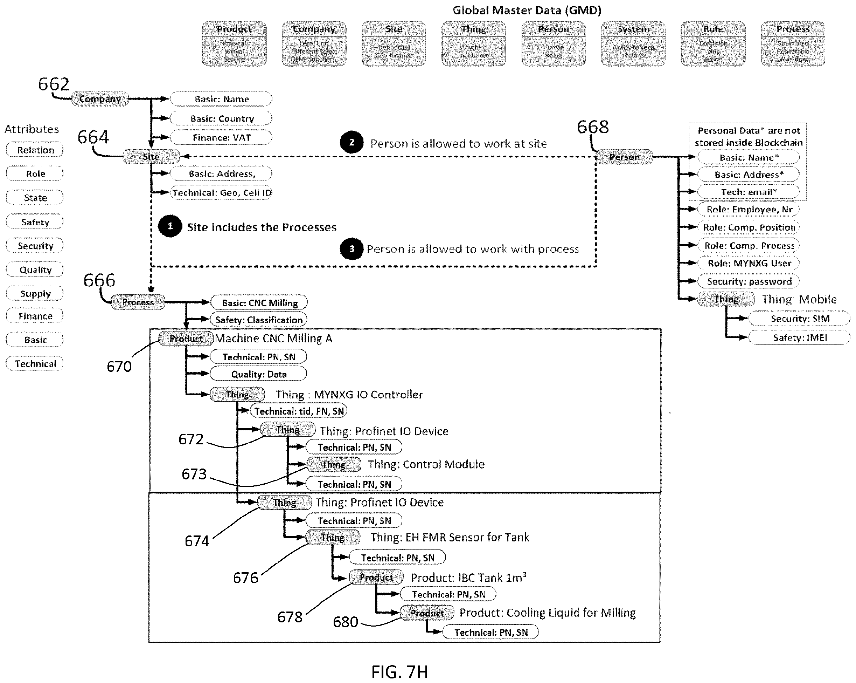

FIG. 7H illustrates relation hierarchy and relationship assignments for a company object 662. The company has a corresponding object 664 for a site of the company and a corresponding object 666 for a particular process performed by the company at the particular site. Another object 668 for a person includes a plurality of associated objects for the person including name, address, etc. as well as various roles for the person and data for the mobile phone of the person. There are various relationships between the objects 664, 666, 668. For instance, there is a hierarchical relationship between the object 664 corresponding to the site and the object 666 corresponding to the process; the process is performed at the site. Also, there is an assignment relation between the object 664 corresponding to the site and the object 668 corresponding to the person; the person is assigned (allowed to) work at the site (or not). Similarly, there is an assignment relation between the object 666 corresponding to the process and the object 668 corresponding to the person; the person is assigned (allowed to) work with the process (or not).

As illustrated in FIG. 7H, the process represented by process object 666 is a CNC milling process involving an ICS that includes a controller SIID, namely the MYNXG® IO Controller, represented by a product object 670; and two other SIIDs, namely, the PROFINET IO devices represented by connected device objects 672, 674 (labeled "Thing" in FIG. 7H). The SIID represented by the connected device object 672 includes a control module represented by a connected device object 673 (labeled "Thing" in FIG. 7H). The SIID represented by the connected device object 674 includes and/or is directly connected to an EH FMR sensor for a tank, which is represented by a connected device object 676 (labeled "Thing" in FIG. 7H). The EH FMR sensor is connected to, and may monitor and control, an IBC tank represented by a product object 678. The IBC tank may hold a cooling liquid for milling, represented by a product object 680.

As is described in more detail elsewhere herein, one or more applications or logic executing on one or more of the components of a TMN, such as the TMN 100, which may be provided by one or more applications and/or services in a TMN cloud (e.g., the transformation layer 102 on the TMN cloud 101), may use data objects created using the object types and/or attribute types of the data model described herein. For example, such data objects and one or more components of the security module 313, executing on an SIID, user device, gateway, server and/or other device, may be used to manage, possibly remotely, one or more aspects of an ICS, including, for example, monitoring and controlling connected devices, managing communication flow between ICS devices and a TM cloud and between ICS devices themselves, for example, in accordance with SIID management applications 107, ICS management applications 108 and other business processes and workflow applications defined in the transformation layer 102.

It should be appreciated that the data objects described herein may be created once, and reused (and modified) by multiple different organizations (e.g., companies or other business entities, government organizations and educational organizations), for example different organizations controlling an OMN, TMN and/or ICS, of different organization on whose behalf such OMNs, TMNs and/or ICSs are provided. Such data objects may be communicated or shared between organizations through the use of blockchain technology as described herein, where such communication may be performed reliably and efficiently, for example, by employing the streamlined blockchain communication sequence as described herein.

The data objects described herein may be used in combination with the systems and blockchain techniques described in relation to FIGs. 1-5 to implement one or more methods described herein.

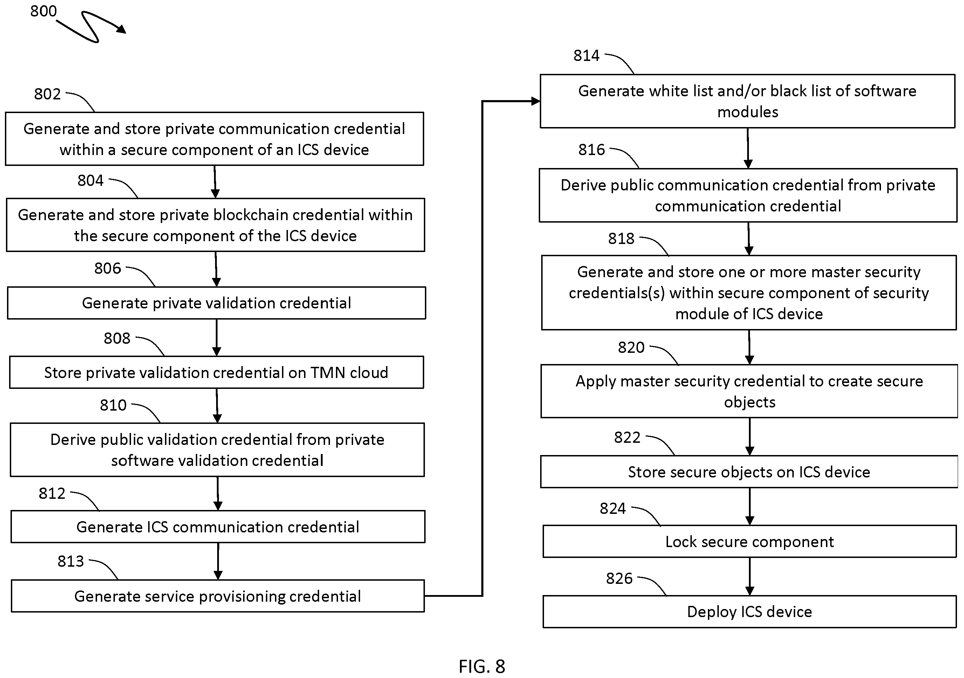

FIG. 8 is a flowchart 800 illustrating configuring an ICS device for secure operation, according to embodiments of the system described herein. Other mechanisms for configuring an ICS device for secure operation, including variations of the processing illustrated by the flowchart 800, are possible and are intended to fall within the scope of the invention. The processing illustrated by the flowchart 800 may be performed during production (e.g., manufacturing) of the ICS device.

Processing begins at a step 802 where a private communication credential, such as the private communication credential 420 described elsewhere herein (controller private key), may be generated and stored within a secure component of an ICS device, such as the secure component 418 (e.g., a TPM) of the security module 313 of the SIID 123. Following the step 802 is a step 804 where a private blockchain credential such as the private blockchain credential 422 described elsewhere herein, may be generated and stored within the secure component of the ICS device.

Following the step 804 is a step 806 where a private validation credential, such as the SVC 119 described elsewhere herein, may be generated, for example, by the secure credential service 117. Following the step 806 is a step 808 where the private validation credential is stored on a TMN cloud, such as the cloud 101, described elsewhere herein. Following the step 808 is a step 810 where a public validation credential may be derived from and/or generated based on the private validation credential. For example, the private validation credential may be a private key and the public validation credential may be a corresponding public key of an asymmetric cryptography scheme using in connection with a PKI.

Following the step 810 is a step 812 where an ICS communication credential may be generated, which may be used to establish a secure communication channel between an SIID and other devices of an ICS, for example, in accordance with a datagram transport layer security (DTLS) protocol, as described in more detail elsewhere herein. Following the step 812 is a step 813 where a service provisioning credential may be generated, which may be used by gateways and other devices to securely deploy services, as described in more detail elsewhere herein. Following the step 813 is a step 814 where a whitelist and/or blacklist of software modules may be generated. The whitelist may be a list of software modules permitted to be executed on the ICS device, and the blacklist may be a list of software modules not permitted to be executed on the ICS device, as described in more detail elsewhere herein.

Following the step 814 is a step 816 where a secure communication credential may be derived from the private communication credential. For example, the communication credentials may be symmetric keys of a symmetric cryptography scheme. Following the step 816 is a step 818 where one or more master security credentials, such as the master security credentials 423 discussed elsewhere herein, may be generated within the secure area of the ICS device, for example, using a random number generator and/or hardware inside of the secure area. Following the step 818 is a step 820 where the master security credential(s) may be used to create secure objects to be used to securely: deploy and execute software on the ICS device, communicate information to and from the ICS device, and store information on the ICS device. For example, the one or more master security credentials 423 may be used to encrypt and/or digitally sign and/or hash the service provisioning credential, public validation credential, communication credential and ICS communication credential and may produce the secure service provisioning credential 426, the secure the validation credential 428, the secure communication credential 430 and the secure ICS credential 431. Furthermore, the one or more master security credentials 423 may be used to encrypt and/or digitally sign and/or hash the generated whitelist to produce the secure whitelist 434 and a secure blacklist.

Following the step 820 is a step 822 where the secure objects may be stored on an ICS device, and may also be stored outside of a secure component. For example, the secure objects 425 may be stored in the NVM 424 of the security module 313 of the SIID 123. Following the step 822 is a step 824 where the secure component of the ICS device may be locked so that the contents of the secure component, including, for example, the private communication credential, private blockchain credential and master security credential, are made unreadable outside of the secure component. Following the step 824 is a step 826 where the ICS device may be deployed, for example, to the ICS 134. Locking the secure area before deployment may prevent an entity, such as a malicious entity but also including, for example, an owner of the ICS device, from ascertaining contents of the secure area, including the aforementioned credentials, after deployment. While the secure objects on the ICS device, including the secure credentials and the encrypted/signed/hashed whitelist and/or blacklist, may be accessed and read, this may only be done by decrypting encrypted objects using the respective master security credential(s), which cannot be read but may be applied within the secure area to perform the decryption.

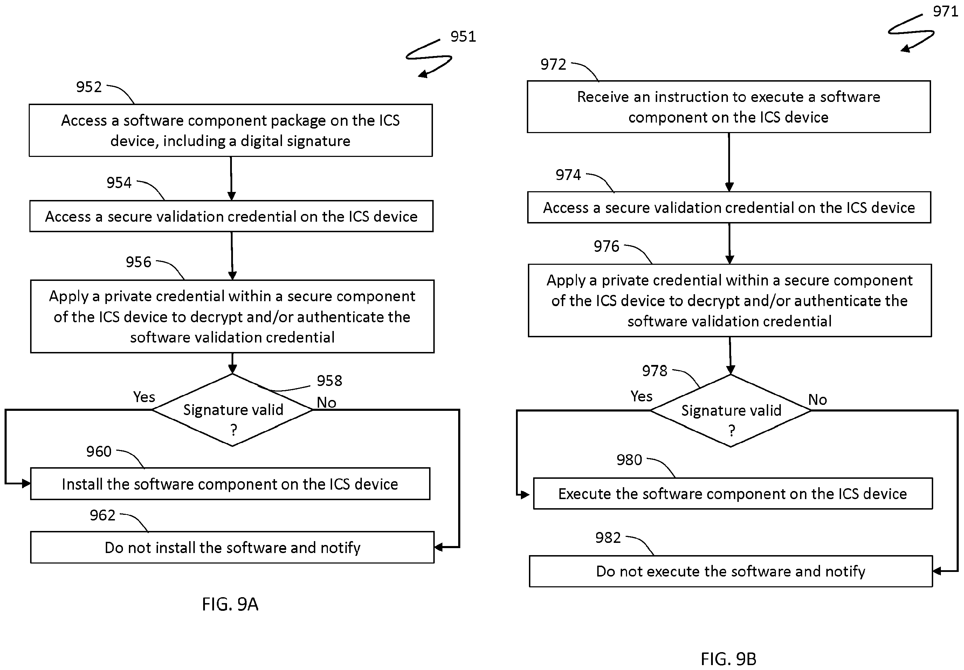

FIG. 9A is a flowchart 951 illustrating securely installing a software component on an ICS device, according to embodiments of the system described herein. Other mechanisms of securely installing a software component on an ICS device, including variations of what is illustrated by the flowchart 951, are possible and are intended to fall within the scope of the invention. The processing illustrated by the flowchart 951 may be performed after the ICS device is installed on an ICS, but prior to installing the software component on the ICS device.

Processing begins at a step 952 where a software component (e.g., as part of an installation package) may be accessed on the ICS device (e.g., the SIID 123), where the software component may be provided with a digital signature and/or hash value by, for example, appending the digital signature and/or hash value. The software component may have been provided on the ICS device when the ICS device was installed or may have been communicated (e.g., downloaded) to the ICS device, for example, in a secure fashion using any of the secure communication mechanisms described herein. Following the step 952 is a step 954 where a secure validation credential may be accessed on the ICS device. For example, the secure validation credential 428, described elsewhere herein, may be accessed from the NVM 424. The secure validation credential may be in an encrypted form and/or may be provided with a mechanism for verifying the validity/authenticity of the secure validation credential. Following the step 954 is a step 956 where a private credential may be applied within a secure area on the ICS device to decrypt and/or authenticate the secure validation credential. For example, the master security credential 423 may be applied within the secure component 418 to decrypt the secure validation credential 428. Alternatively, the master security credential 423 may be used to authenticate the secure validation credential 428.

Following the step 956 is a step 958 where the secure validation credential may be used to determine if the digital signature and/or hash value provided with the software is valid using any of a variety of known techniques. For example, the digital signature may be a portion of the software component (or another character string) that was derived using a private key (e.g., the SVC 119) of an asymmetric key pair to construct a digital signature based on the contents of the software. The validation credential may be the public key of the asymmetric key pair and may be used to verify the digital signature. If the digital signature is valid, processing may proceed to a step 960 where the software component may be installed on the ICS device. Otherwise, if it is determined in the step 958 that the digital signature in not valid, then processing proceeds to a step 962 where the software component may not be installed, and one or more entities affiliated with the ICS and/or TMN may be notified.

FIG. 9B is a flowchart 971 illustrating securely executing a software module on an ICS device, according to embodiments of the system described herein. Other methods of securely executing a software module on an ICS device, including variations of the processing illustrated by the flowchart 971, are possible and are intended to fall within the scope of the invention. The processing illustrated by the flowchart 971 may be performed after the software component has been installed on the ICS device, but prior to executing the software component on the ICS device. In some embodiments, even though the software component may have been validated when installed, the processing illustrated by the flowchart 971 may be performed to ensure that the software component has not been tampered with since installation.

Processing for the flowchart 971 begins at a step 972 where an instruction may be received to execute a software component on the ICS device, for example, in response to an event (e.g., user input) or at a preschedule time (e.g., periodically) or possibly when the ICS is first powered on or reset. The software component may have a digital signature and/or a hash value associated therewith to verify the software component. Following the step 972 is a step 974 where a secure validation credential may be accessed on the ICS device. For example, the secure validation credential 428 may be accessed from the NVM 424. The secure validation credential may be in encrypted form. Following the step 974 is a step 976 where a private credential may be applied within a secure area on the ICS device to decrypt and/or authenticate the secure validation credential. For example, the master security credential 423 may be applied within the secure component 418 described elsewhere herein, to decrypt and/or authenticate the secure validation credential 428.

Following the step 976 is a step 978 where the secure validation credential may be used to determine if the digital signature and/or hash value for the software is valid using any of a variety of known techniques. For example, the digital signature may be a portion of the software component (or another character string) that was derived using a private key (e.g., the SVC 119) of an asymmetric key pair to construct a digital signature based on the contents of the software. The secure validation credential 428 may be the public key of the asymmetric key pair and may be used to validate the digital signature. If it is determined at the step 978 that the digital signature is valid, then control transfers to a step 980, which causes (allows) the software component to be executed on the ICS device. Otherwise, if it is determined at the step 978 that the digital signature in not valid, then processing proceeds to a step 982, where the software component is prevented from being executed, and one or more entities affiliated with the ICS and/or TMN may be notified.

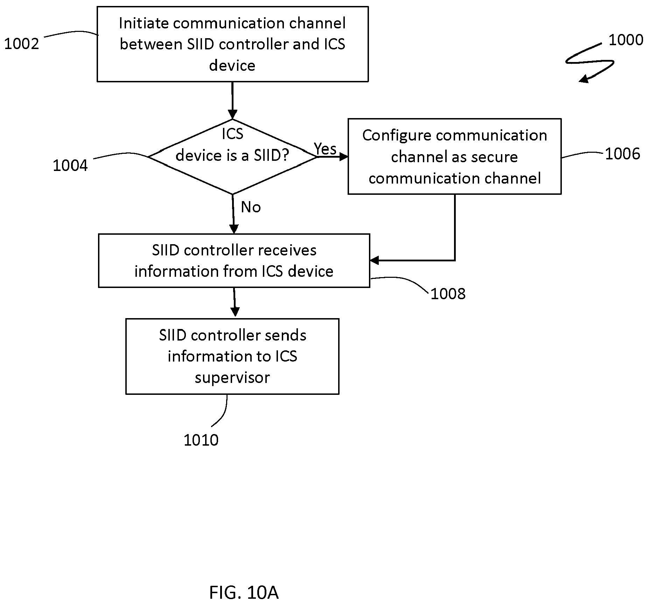

FIG. 10A is a flowchart 1000 illustrating securely communicating information between an ICS and a cloud on a thing management network, according to embodiments of the system described herein. Other methods of securely communicating information between an ICS and a cloud on a thing management network, including variations of the processing illustrated by the flowchart 1000, are possible and are intended to fall within the scope of the invention. The processing illustrated by the flowchart 1000 may be implemented for a controller SIID that, in addition to serving as an interface to a TMN gateway or cloud server, also serves as an ICS controller. See, for example, the SIID 124 of the ICS 134 shown in FIG. 2C and FIG. 2D. Variations of processing illustrated by the flowchart 1000 may be performed by an SIID that does not serve as an ICS controller, for example, the SIID 123 of the ICS 133, illustrated in FIG. 2B.

Processing begins at a step 1002 where a communication channel may be initiated between a controller SIID and an ICS device of an ICS-cloud network (ICN), described elsewhere herein. The communication channel may be initiated in response to an event such as a request received from an ICS supervisor to read data from the ICS device, or by detecting a value of a property of a connected device by the ICS device. For example, the ICS device may initiate the communication channel to communicate a PROFINET alarm. The communication channel also may be initiated in response to a scheduled communication, for example, in accordance with a communication cycle. A communication resulting from such a schedule may be considered a cyclic communication, whereas a communication resulting from an event (e.g., a PROFINET alarm) may be considered an acyclic communication.

Following the step 1002 is a step 1004 where it is determined whether the ICS device is an SIID, in which case the SIID may have a secure ICS credential (e.g., an encrypted PSK) to enable establishment of a secure communication channel. Even in cases in which an ICS device is an SIID, the ICS device may not be configured for communication. In such a configuration, the SIID may communicate information to other TMN components through a controller SIID. It should be appreciated that, even if an ICS device is not an SIID, the ICS device still may be configured with the capability (e.g., with a PSK and necessary logic) to establish a secure communication channel with another ICS device.

If it is determined that the ICS device is an SIID, or that the ICS device otherwise has the capability to establish a secure communication channel, then processing proceeds to a step 1006 where the communication channel may be configured as a secure communication channel. For example, the secure ICS credentials (e.g., a shared private secret) of a controller SIID and another SIID may be used to establish a DTLS communication channel between the two SIIDs. If it is determined that the ICS device is not an SIID, or that the ICS device does not have the capability to establish a secure communication channel, then it may be concluded that the ICS device is not capable of establishing a secure communication channel (even though the controller SIID is so capable), and control transfers from the step 1004 to a step 1008. The step 1008 also may be reached directly from the step 1006.

At the step 1008, the controller SIID may receive information from the ICS device, for example, over a communication channel (secure or not secure). Depending on the system being controlled by the ICS and the desired or needed performance of the system, and on the nature and purpose of the information being received in the step 1008, the information may be received as part of an NRT, RT or IRT communication and the communication channel established in steps 1002, 1004, 1006 may be configured for NRT, IRT and/or IRT communications.

In some embodiments, the ICS device may be configured to encrypt at least portions of the information that the ICS device sends to the controller SIID. For example, the ICS device may be configured to send, and thus the controller SIID may receive in the step 1008, the public information element 390 and the private information element 392, as described in more detail elsewhere herein. That is, ICS devices may be configured to send communications similar to or the same as the communications 388, 394, 395, described in more detail elsewhere herein, to the controller SIID.

The steps 1002, 1004, 1006, 1008 may be performed in response to an event (e.g., user input) or at a prescheduled time (e.g., periodically). Furthermore, the steps 1002, 1004, 1006, 1008 may be performed multiple times prior to performance of a next step 1010, where the controller SIID may send information to an ICS supervisor, for example, in response to an instruction from the ICS supervisor or at a prescheduled time. The information sent to the ICS supervisor may include all of the information that the SIID has received from the ICS device since the SIID last sent information to the ICS supervisor, or it may include a predefined subset of such information, for example, in accordance with one or more ICS and/or SCADA protocols as described herein. It should be appreciated that the steps 1002, 1004, 1006, 1008 may be performed between the controller SIID and multiple ICS devices, and the information sent to the ICS supervisor in the step 1010 may be an aggregation of information received by the ICS supervisor or a subset thereof, for example, in accordance with one or more ICS and/or SCADA protocols. In some embodiments, the step 1008 may be performed multiple times for a single performance of the steps 1002, 1004, 1006. For example, after a communication channel is established, there may be several communications received by the controller SIID from the ICS device while the communication channel remains active (i.e., before it is terminated).

In some embodiments, an SIID serving as interface to a TMN gateway or server is not an ICS controller because the ICS controller is another device on the ICN, as illustrated in FIG. 2A. In such embodiments, the ICS devices may be instructed by the ICS controller (or another entity) to send information to the ICS controller. In such embodiments, the SIID may be configured to monitor the information and receive the information from the ICS devices and/or the ICS controller, but not to control the ICS devices or ICS controller. In such embodiments, the step 1010 would not be performed by the SIID, but rather by the ICS controller.

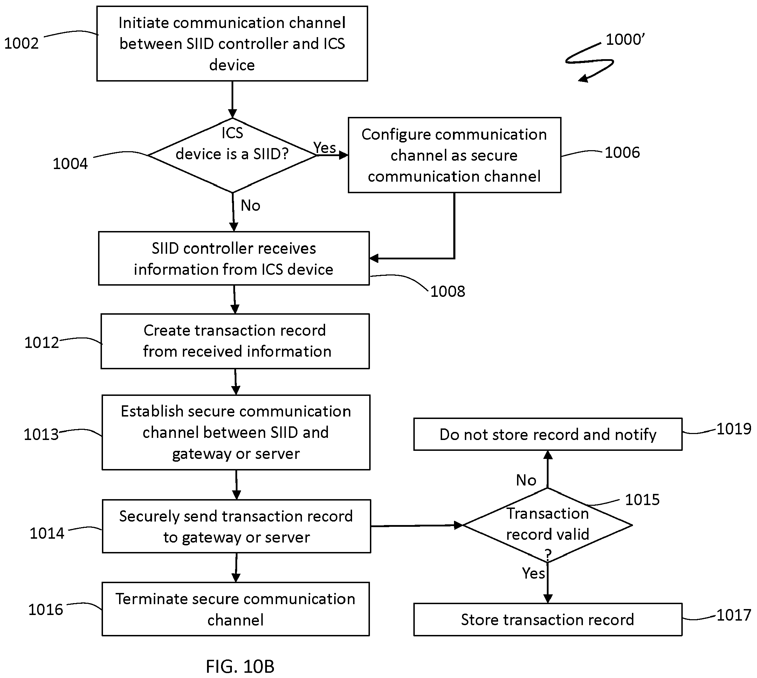

FIG. 10B is a flowchart 1000' illustrating a different embodiment of securely communicating information between an ICS and a cloud on a thing management network. The steps 1002, 1004, 1006, 1008 are described above and correspond to the steps 1002, 1004, 1006, 1008 in the flowchart 1000, described above in connection with FIG. 10A. In the flowchart 1000', following the step 1008 is a step 1012 where the SIID may create a transaction record from the information that the SIID has received from one or more ICS devices, e.g., since the last time the SIID created a transaction record. For example, the SIID may create a secure transaction record as described in more detail elsewhere herein, such as the transaction record 362.

Following the step 1012 is a step 1013 where a secure communication channel may be established between the SIID and a gateway or cloud server of a TMN. For example, the SIID may use the private communication credential 420, described elsewhere herein, to establish a TLS communication channel with a gateway or server. In some embodiments, a secure communication channel already may have been established between the SIID and gateway or server, which remains active, in which case the step 1013 may not be performed. Following the step 1013 is a step 1014 where the SIID may securely send the transaction record to a gateway or a server over the secure communication channel, such as a TLS communication channel.

It should be appreciated that, in some embodiments, the SIID may not create a transaction record in the step 1012 that is similar to or the same as transaction record 362. That is, rather than aggregating information received from devices into a transaction record, the SIID may simply pass along (i.e., forward) the information the SIID receives from ICS devices to a gateway or server (which then may aggregate as described), for example, over the secure communication channel established in the step 1013. In such embodiments, if the information received from the ICS devices is not encrypted, the SIID may encrypt the information, or portions thereof, and may forward along to a gateway both encrypted and non-encrypted information, for example, as the public information element 390 and the private information element 392, described in more detail elsewhere herein.

Following the step 1014 is a step 1016 where the secure communication channel between the SIID and the server or gateway may be terminated. Furthermore, although not illustrated in FIG. 10B, at some point, the communication channel(s) between the controller SIID (or non-SIID controller) and the ICS device(s) may be terminated, for example, after a last performance of the step 1008 for a given communication cycle.

Before, after, or concurrently to performance of the step 1016, it may be determined whether the transaction record is valid in a step 1015 using, for example, the security service 113, discussed elsewhere herein. For example, the security service 113 may apply a blockchain certification credential corresponding to a private blockchain credential of the SIID that created the transaction record to validate that the transaction record was indeed generated by the purported SIID. If the transaction is determined to be valid, control transfers from the step 1015 to a step 1017 where the transaction is stored. For example, the transaction record may be made part of a blockchain transaction register, e.g., a distributed ledger specific to the ICS. If it is determined at the step 1015 that the transaction record is not valid, then control transfers from the step 1015 to a step 1019 where the record is not stored and one more entities affiliated with the ICS and/or TMN may be notified.

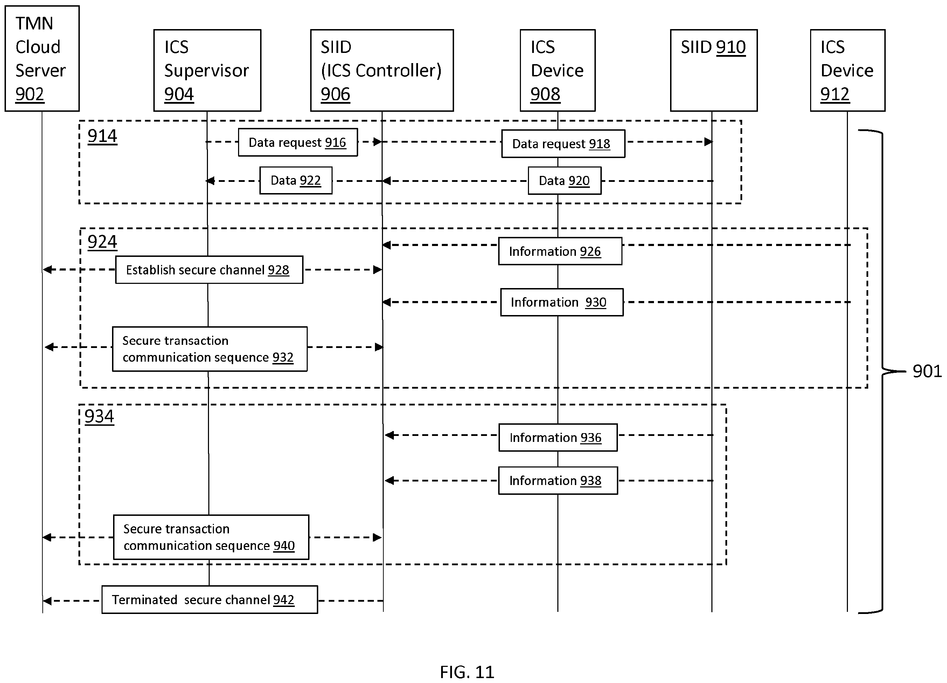

FIG. 11 is a timing diagram illustrating a sequence of communications 901 involving an ICS on a TMN, according to embodiments of the system described herein. Other sequences of communications involving an ICS on a TMN, including variations of sequence of communications 901, are possible and are intended to fall within the scope of the invention. In the embodiment of FIG. 11, the system components may correspond to a system similar to the system reflected in FIG. 2C, in which at least portions of an ICS are part of a TMN, an SIID 906 is a controller SIID of an ICS, and an ICS supervisor is part of an OMN and not part of the TMN. It should be appreciated that in other embodiments, another ICS device may serve the role of ICS controller and the ICS supervisor may be part of the TMN, for example, as part of a gateway of the TMN

The communications may include NRT transactions, including an NRT transaction 914, and RT transactions, including two RT transactions 924, 934, where the RT transaction 934 may be a secure transaction from end to end, and where the RT transaction 924 may not be a secure transaction from end to end, as is described in more detail below. The NRT transaction 914 may include multiple communications configured in accordance with an ICS protocol, for example, PROFINET. The NRT transaction 914 may use an ICS supervisor 904 to send a data request 916 (e.g., a Read IO Data Object instruction) to a controller SIID 906, which may instruct an SIID 910 to read data. In the embodiment illustrated in FIG. 11, the SIID 906 is a controller SIID; however, it should be appreciated that, in other embodiments, communications with an ICS supervisor 905 (e.g., as part of the NRT transaction 914) may be handled by another ICS device configured as an ICS controller.

In response to receiving the data request 916, the controller SIID 906 may send a data request 918 (e.g., a Read IO Data Object instruction) to the SIID 910. The SIID 910 may be configured to send, in response to the data request 918, data 920 to the controller SIID 906, where the data may include latest values of a predefined set of properties of one of more connected devices directly coupled to and controlled by the SIID 910. The controller SIID 906 then may send data 922, including at least the information included in the data 920, to the ICS supervisor. In some embodiments, the data 920 transmitted from the SIID 910 to the controller SIID 906 may be formatted the same as, or similar to, one of the communications 388, 394, 395, and may include the public information elements 390, 396, 397, respectively, and the private information elements 392, 398, 399, respectively, described in more detail elsewhere herein.

In some embodiments, even though the controller SIID 906 and the SIID 910 are capable of establishing secure communication channels, the controller SIID 906 and the SIID 910 do not do so for the NRT transaction 914, for example, in accordance with an ICS protocol. In other embodiments, the controller SIID 906 and the SIID 910 may establish a secure communication channel over which the controller SIID 906 and the SIID 910 exchange the data request 918 and the data 920. Furthermore, in an embodiment in which the ICS supervisor is implemented as part of a TMN component, e.g., a gateway, or is otherwise configured to exchange secure communications, the controller SIID 906 and the ICS supervisor 904 may establish a secure communication channel over which the controller SIID 906 and the ICS supervisor 904 exchange the data request 916 and the data 922. The RT transaction 924 may include multiple communications. A communication channel may be established (or may already exist) between the ICS device 912 and the controller SIID 906. If the ICS device 912 does not have the capability to establish a secure communication channel, because the ICS device 912 is not an SIID, then the established communication channel may not be secure. The ICS device 912 may send information 926 to the controller SIID 906 over the channel. The information 926 may be information sent according to a predefined schedule, or may be the result of an event, for example, the occurrence of a condition for a connected device, e.g., detection of a property value above or below a threshold, or the detection of the existence of a property value at all. For example, the information may be sent as part of an Alarm in accordance with PROFINET.

Alarms may be caused by a change of state of a channel and/or when a channel is disconnected. An alarm may be issued when diagnostic data is first created and/or when a last diagnostic data entry is released. An alarm may also signal when a module or submodule is plugged or pulled, when the wrong module or submodule is plugged, when a process limit is reached or for other possible events, such as when an alarm condition is cleared. In some embodiments, the communication including the information 926 transmitted from the ICS device 912 to the controller SIID 906 may be formatted the same as, or similar to, one of communications 388, 394, 395, and include the public information elements 390, 396, 397, respectively, and the private information elements 392, 398, 399, respectively, described in more detail elsewhere herein.

In response to the information 926 being received (e.g., if the information is received in response to an Alarm or other event), or at a predetermined time, the controller SIID 906 may engage in a transaction 928 to establish a communication channel with a TMN cloud server 902. For example, the transaction 928 may include the controller SIID 906 using the private communication credential 420 to establish a TLS communication channel with the TMM cloud server 902, e.g., engaging in a TLS handshake using known techniques. Concurrently to (or after) the transaction 928, the ICS device 912 may send additional information 930 to the controller SIID 906, for example, an indication that a condition no longer exists, e.g., an Alarm release message in accordance with PROFINET. Once a TLS connection is established, any activity which is selected may initiate a communication using the TLS connection.

After the secure communication channel has been established by the transaction 928, the controller SIID 906 may engage in a secure transaction communication sequence 940 in order to transmit information to the TMN cloud server 902 that has been received at the controller SIID 906 since the last time the controller SIID 906 transmitted information to the TMN cloud server 902 (e.g., the information 926, 930). For example, the sequence 932 may include using the private blockchain credential 422 to implement a streamlined blockchain communication sequence, as described in more detail elsewhere herein, with the TM cloud server 902.

The RT transaction 934 also may include multiple communications. A communication channel may be established (or may already exist) between the SIID 910 and the controller SIID 906. A secure communication channel may be established between the SIID 910 and the controller SIID 906, for example, in accordance with DTLS. The secure communication channel may be established using the secure ICS credential 431 (e.g., an encrypted shared secret) on each of the controller SIID 906 and the SIID 910. The SIID 910 may send the information 936 to the controller SIID 906 over the channel. The information 936 may be information sent according to a predefined schedule, or may be the result of an event, for example, the occurrence of a condition for a connected device; e.g., detection of a property value above or below a threshold, or the detection of the existence of a property value at all. For example, the information may be sent as part of an Alarm in accordance with PROFINET. In some embodiments, the communication including the information 936 transmitted from the SIID 910 to the controller SIID 906 may be formatted the same as, or similar to, one of the communications 388, 394, 395, and include the public information elements 390, 396, 397, respectively, and the private information elements 392, 398, 399, respectively, described in more detail elsewhere herein.

For the RT transaction 934, the secure communication channel established in the transaction 928 may still be active. The controller SIID 906 may engage in a secure transaction communication sequence 940 over the secure communication channel in order to transmit information to the TMN cloud server 902 that has been received at the controller SIID 906 since the last time the controller SIID 906 transmitted information to the cloud server 902 (e.g., the information 936, 938). For example, the sequence 932 may include using the private blockchain credential 422 to implement a streamlined blockchain communication sequence, as described in more detail elsewhere herein, with the TM cloud server 902. At a sequence 942, the secure communication channel between the controller SIID 906 and the TMN cloud server 902 may be terminated.

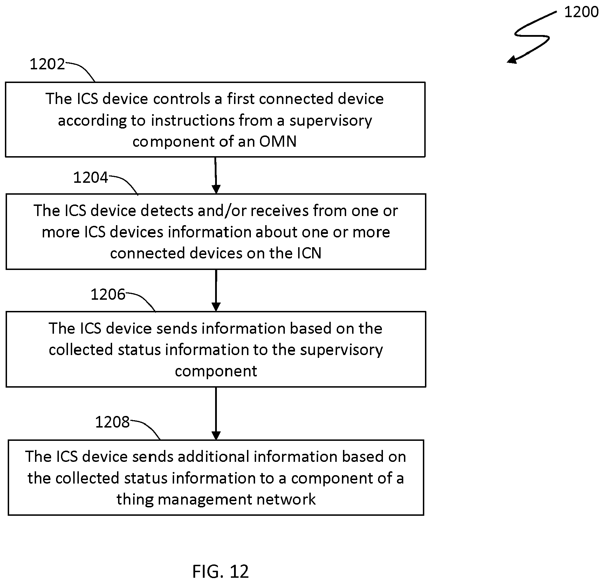

FIG. 12 is a flowchart 1200 illustrating a method of an ICS device communicating information, according to embodiments of the system described herein. Other methods of an ICS device communicating information, including variations of the processing illustrated by the flowchart 1200, are possible and are intended to fall within the scope of the invention. The processing illustrated by the flowchart 1200 may be performed on an ICS (e.g., the ICS 133 or the ICS 134) for which at least a portion of the ICS is part of a TMN, such as the TMN 100' or the TMN 100", and connected thereto by an SIID, and at least a portion of the ICS is part of an OMN including components, such as the ICS supervisor 202, that are not part of the TMN

Processing begins at a step 1202 where an ICS device may control at least a first connected device according to instructions received from a supervisory component of an OMN. For example, an ICS supervisor of an OMN may provide commands/data to an ICS device in accordance with a PROFINET protocol. In some embodiments, in addition to the ICS device controlling at least the first connected device according to instructions received from the supervisory component of an OMN, or as alternative thereto, the ICS device may control the at least first connected device according to instructions received from a TMN, independent of the OMN. That is, the ICS may be controlled exclusively by an OMN or by a TMN, or may be controlled by both the OMN and TMN in a coordinated fashion. The ICS device may be an ICS controller and may be an SIID, as described in more detail elsewhere herein.

Following the step 1202 is a step 1204 where the ICS device may detect and/or receive from one or more other ICN devices information about one or more connected devices in the ICS. Following the step 1204 is a step 1206 where the ICS device may send (e.g., report) to a supervisory component of the OMN a first set of information based on the information detected and/or received. The first set of information may be all of the detected and/or received information or a subset thereof and may be selected and/or formatted in accordance with an ICS protocol, e.g., PROFINET. Furthermore, the first set of information may be sent in response to an event, for example, the detection of a certain property value on an ICS device or a request from the supervisory component or may be sent according to a predefined schedule. The first set of information may be sent directly to an ICS supervisor or other component of the OMN by the ICS device itself, for example, if the ICS device is an ICS controller, or may be sent indirectly to the supervisory component via another ICS device serving as an ICS controller for the ICS.

Following the step 1206 is a step 1208 where the ICS device may send (e.g., report) to a component (e.g., gateway or cloud server) of a TMN a second set of information based on the information detected or received by the ICS device. The second set of information may be all of the detected and/or received information or a subset thereof, and may be selected and/or formatted in accordance with techniques described herein, for example, using a streamlined blockchain communication sequence. The second set of information may be sent directly to a gateway or cloud component of the TMN by the ICS device itself, for example, if the ICS device is an SIID configured to serve as an interface to the TMN cloud. The second set of information may be sent indirectly from the ICS device to a TMN gateway or cloud server via another SIID on the ICS if the ICS device is not configured to serve as an interface to the TMN cloud.

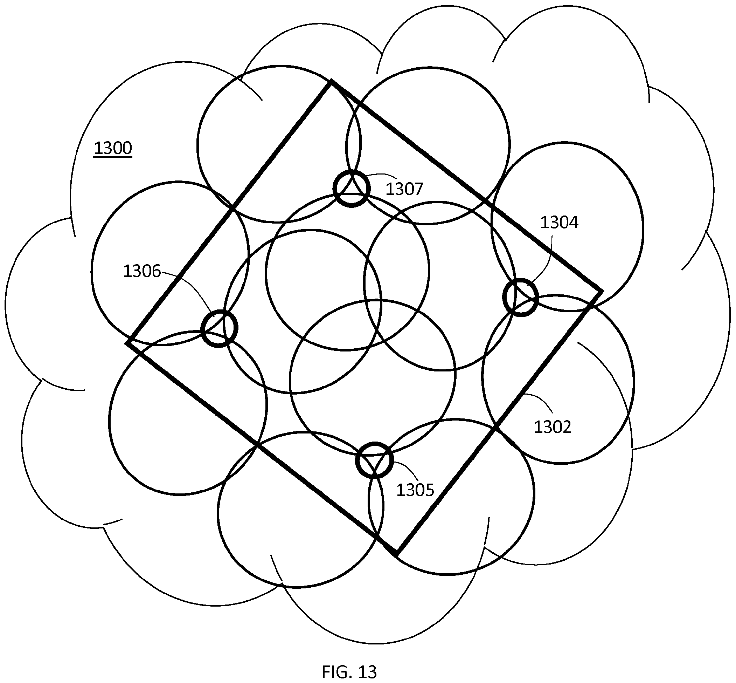

FIG. 13 shows a private dedicated cellular network 1300 that provides cellular communication (e.g., 5G communication) for an industry campus 1302. The dedicated cellular network 1300 may be provided by four local/private cellular base stations 1304-1307, although, of course, any number of base stations may be used depending upon a variety of functional factors, such as area of coverage, desired redundancy and throughput, desired signal strength, etc. The industry campus 1302 may be an area that services a particular company, a particular industry, or a group of industries and possibly other businesses that may or may not be closely related. It is also possible for the industry park 1302 to include one or more private residences, possibly for people that work in the industry park 1302. The base stations 1304-1307 may be part of the private dedicated cellular network 1300 which may use 5G technology and may allow the reservation of bandwidth through, for example, a dedicated bandwidth (e.g., 3,700 - 3,800 MHz) and system resources, such as a private dedicated cellular network defined by the Bundesnetzagentur in Germany. In some embodiments, the dedicated cellular network 1300 uses TDD (Time Division Duplex) in contrast with a conventional public cellular network that uses FDD (Frequency Division Duplex). Using different communication mechanisms may minimize inference between the networks. Of course, other private cellular networks are also possible and even other types of networks with different configurations may be used. The dedicated cellular network 1300 may use security credentials that are similar (or identical) to security credentials used by conventional commercial cellular networks including an operator code, an operator code credential, a cryptographic authentication key, and/or SIM card data. The cryptographic authentication key may be used in a cellular mobile device that accesses the dedicated cellular network. The SIM card data may include an integrated circuit card ID, a mobile station international subscriber directory number, or an international mobile subscriber identity.

Each of the base stations 1304-1307 may provide cellular coverage to a particular portion of the industry campus 1302 so that all of the industry campus 1302 is covered by at least one of the base stations 1304-1307 and at least some portions of the industry campus 1302 are covered by two or more of the base stations 1304-1307. Devices located in the industry campus 1302 may communicate via the base stations 1304-1307 using the dedicated cellular network 1300. The devices may be the user devices 140-142 of FIG. 2A, which could include conventional cellular mobile phones or tablets. The devices could also be one or more of the ICS devices 133-135, one or more of the gateways 119-121, or any other appropriate devices, such as devices described elsewhere herein. The devices in the industry campus 1302 may communicate with each other, with the cloud 101, and with other devices via the dedicated cellular network 1300, possibly in combination with other networks either within or outside the industry campus 1302.

In some instances, the ability to communicate with more than one of the base stations 1304-1307 provides redundancy that protects against failure of a single component. Moreover, multiple communication paths allow optimization of communication bandwidth to support prioritizing data communication with components (e.g., control devices) within the industry campus 1302. Also, it is possible to use the dedicated cellular network 1300 to provide redundancy for a (possibly preexisting) wired network so that components within the industry campus 1302 may communicate either using the wired network or the dedicated cellular network 1300. Note that, in addition to communication path redundancy, additional redundancy may be provided by using redundant control devices to protect against failure and/or inadequate bandwidth (i.e., lack of resource capacity) of one of the control devices.

The core services layer 110 of the cloud 101 may include components that provide control information to the devices in the industry campus 102 using the dedicated cellular network 1300. The data that is exchanged may be stored as one or more transaction records (e.g., transaction blocks within a blockchain), and may be part of a transaction register, as described in more detail elsewhere herein. It is also possible to use a blockchain mechanism like that described elsewhere herein for one or more settings including redundancy, resource capacity, and quality of service (QoS) settings.

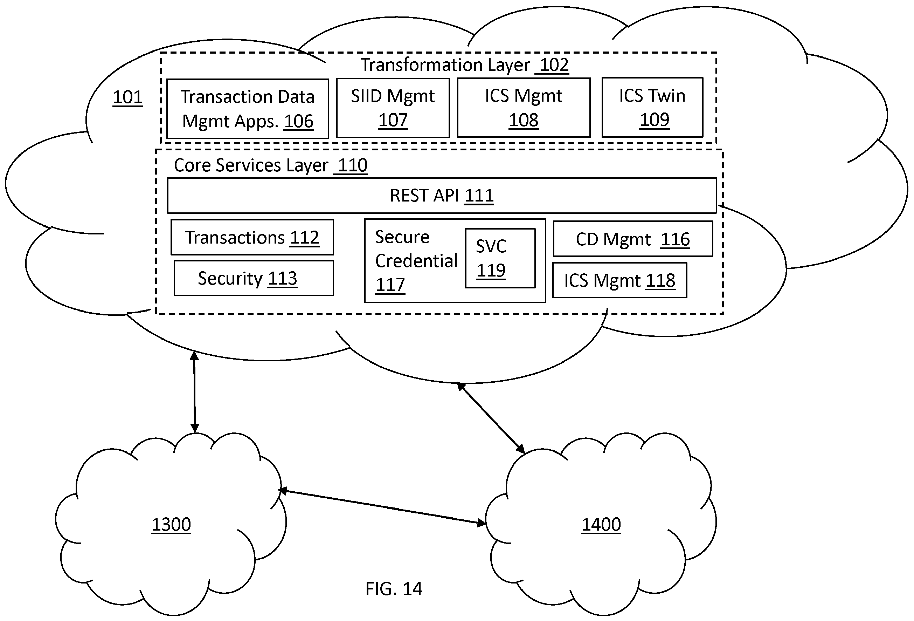

Referring to FIG. 14, the dedicated cellular network 1300 is shown as communicating directly with the cloud 101, described elsewhere herein. In some embodiments, the entire cloud 101 or a portion of the cloud 101 may be part of a dedicated cellular network 1300' that is similar to the dedicated cellular network 1300, but includes the cloud 101. It is also possible for the dedicated cellular network 1300 to communicate with one or more other networks 1400, such as a public non-dedicated cellular network, the Internet, a private or public non-cellular network, or some combination thereof. In such a case, the dedicated cellular network 1300 may communicate with the cloud 101 through the one or more other networks 1400. Note that the communication through the other network(s) 1400 may be in addition to, or instead of, direct communication between the dedicated cellular network 1300 and the cloud 101.

In an embodiment herein, the dedicated cellular network 1300 transmits data at a quality of service level comparable to quality of service provided for voice communication in a public commercial cellular network, which is a QoS Class Identifier (QCI) level of 6 (or similar). That is, sufficient resources (e.g., bandwidth, priority, latency, etc.) are provided to transmit data on the dedicated cellular network 1300 so that the data transmission (e.g., exchanging data with a PLC) is comparably in quality to voice transmission in a conventional, commercial, non-dedicated cellular network. Note that, since the dedicated cellular network 1300 is not used primarily for voice communications, then transmitting data at a QCI level of 6 does not interfere with or adversely impact any expected voice quality for the dedicated cellular network 1300. Generally, a scalable subset of resources of the dedicated cellular network 1300 are reserved for industrial control systems (e.g., control devices) in the industry campus 1302, including being reserved for communication between the industrial control systems and the cloud 101.

In embodiments where the other network(s) 1400 are used in connection with the dedicated cellular network 1300, the system described herein provides an overall quality of service by mapping cellular quality of service values (e.g., QCI = 6) to comparable IP network quality of service values (e.g., PCP = 4 or 5). The cellular network quality of service corresponds to the IP network quality of service. Thus, data travelling through the networks 1300, 1400 experiences comparable quality of service irrespective of the type of network (cellular or IP) that the data is traversing. The quality of service may be controlled, at least in part, by components of the ICS management service 118, which is described elsewhere herein.

Users may enter and leave the industry campus 1302 with user devices, such as mobile phones or tablets, that switch between a public cellular network and the dedicated cellular network 1300 depending on a location of the user device (e.g., in range of the dedicated cellular network 1300 or not) as well as possibly settings provided on the user devices. For example, on Android mobile phones, it is possible to set up multiple user profiles that operate somewhat independently (e.g. Enterprise Mobility Management (EMM) service). Thus, a user may have a first profile for accessing a public cellular network, such as the T-Mobile cellular network, and may have a second profile for accessing the dedicated cellular network 1300. A user may switch between the profiles by manually actuating controls on the cellular mobile phone. It is also possible to have the cellular mobile phone switch automatically in response to the user entering and leaving the industry park 1302.

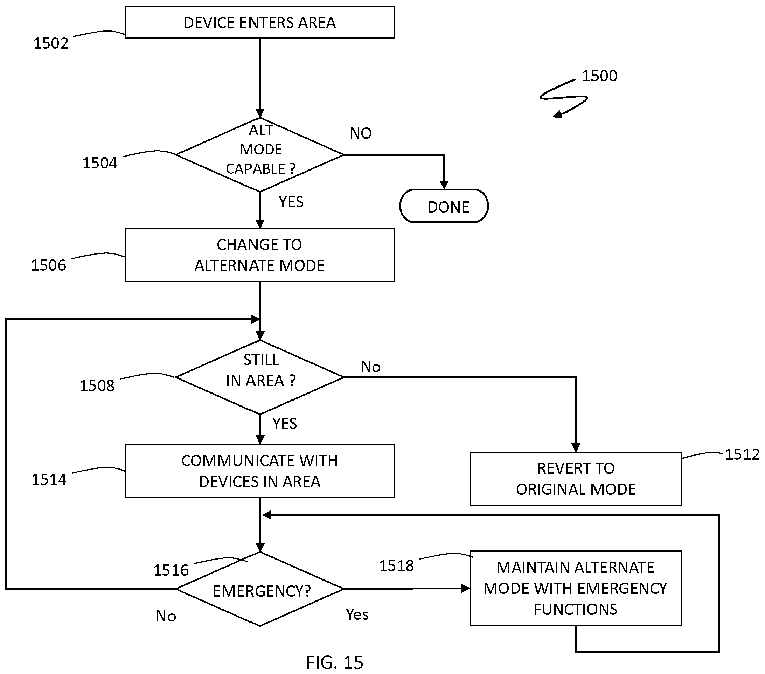

Referring to FIG. 15, a flowchart 1500 illustrates processing performed in connection with a user device entering and leaving the industry park 1302. Processing begins at a first step 1502 where the user device enters the industry park 1302, which may be determined, for example, when the user device detects one or more of the base stations 1304-1307 of the dedicated cellular network. In some cases, it is possible for a user to present the user device to a reader, such as an NFC reader, to signify entering (and/or leaving) the industry park 1302. In some embodiments, the user device may be specifically tracked after entering the industry park 1302. Tracking may include using location monitoring and tracking with, for example, WIFI signals, mobile telephony signals, GPS signals and perhaps other technology. In some instances, BT (bluetooth) communication may be activated to detect one or more BT beacons that collectively define one or more wireless perimeters that may be used for tracking. In addition, the user device may be configured with a digital site map on which locations may be marked to assist a user.

Following the step 1502 is a test step 1504 where it is determined if the user device that is entering the industry park 1302 is capable of operating in an alternative mode where the user device communicates using the dedicated cellular network 1300 in connection with controlling other devices and obtaining information from the other devices, as described in more detail elsewhere herein. In some cases, the user device may communicate exclusively using the dedicated cellular network 1300. In other instances, the user device may communicate using the dedicated cellular network 1300 in addition to using other networks, such as one or more of a local WiFi network, a non-dedicated (public) cellular network, Bluetooth, etc.

If it is determined at the test step 1504 that the user device is not capable of operating in an alternative mode using the base stations 1304-1307, then processing is complete. Otherwise, control transfers from the test step 1504 to a step 1506 where the user device is transformed from an original mode to the alternative mode to communicate with other devices in the industry park 1302 using the base stations 1304-1307. In an embodiment herein, the user device may use an alternative profile, described elsewhere herein, in connection with changing modes. Thus, for example, the user device may be a cellular mobile phone or a tablet with cellular capabilities that may have a first (original mode) profile corresponding to conventional use (e.g., the user communicates using a conventional non-dedicated cellular network) and having a second (alternative mode) profile corresponding to communicating with other devices in the industry park 1302 using the base stations 1304-1307. In some cases, transitioning from the original mode to the alternative mode includes disabling one or more capabilities (e.g., features) of the user device while one or more other capabilities of the user device are allowed to remain enabled. For example, WIFI communication capabilities, the usage of cameras, the usage of interfaces such as (micro) USB and/or the usage of other interfaces to connect other devices or storage media may be disabled on the user device, whereas other capabilities, for example, mobile telephony, GPS, NFC and BT, may remain enabled on the user device. In some embodiments, the alternative mode may include controlling the user device so that the user device is not capable of being powered down and/or set to permanent idle modes. In some embodiments, the user device may be configured with an ability to read a QRC label and/or an RFID UHF tag on goods or other things while the user device is at the industry park 1302. The different modes may use different credentials or may share at least some credentials.

Following the step 1506 is a test step 1508 where it is determined if the user device is still in the area of the industry park 1302. Since the user device may be carried by a user that may move about, it is possible for the user device to leave the area (i.e., the industry park 1302). Note also that is possible for a user to actively check out of the area by, for example, actuating the user device, presenting the user device to a reader such as an NFC reader, etc. If it is determined at the test step 1508 that the user device is leaving (or has already left) the area of the industry park 1302, then control transfers from the test step 1508 to a step 1512 where the user device is switched from the alternative mode back to the original mode of the user device (e.g., switched to a conventional mobile phone accessing a conventional non-dedicated cellular network). A transaction may have been recorded to indicate capabilities that were enabled or disabled upon arrival at the industry park 1302 and/or actions that were taken with respect to the same. The transaction record may be stored at a server and/or at a gateway and/or by exception (e.g. in case of power outage or service interruption states of the gateway/cloud) securely on the user device, for example, as one or more blockchain transaction records. The transaction record may be accessed as part of the step 1512 to determine how to restore capabilities of the user device to place the user device in the original mode. Following the step 1512, processing is complete.

In some cases, the departure of the user device from the industry park 1302 may be recorded. For example, a gateway device located at the industry park 1302 may exchange one or more communications with a server (e.g., in accordance with the streamlined blockchain communication sequence) resulting in a transaction record of the user device departing the industry park 1302 being recorded in a secure transaction register. In some embodiments, in addition to the departure itself being recorded, information detected or determined (e.g., by the user device) during the visit of the user device, but not reported to a gateway and/or server during the visit, may be reported to the gateway and/or server and recorded, for example, in a same or similar manner as the reporting and recording of the departure of the user device.

In some embodiments, the user device may continue to be monitored after departure from the industry park 1302. For example, in some embodiments, the user of the user device may be involved in the transportation of goods or some other activity (e.g., which may be defined by a process object) for which it is desirable to continue to track the location of the user and/or the state of the goods, user device, monitoring or other thing involved in the transportation of the good (e.g., container, tank, pallet, packaging) even after the user device has left the industry park 1302. For example, the user device may be used by a truck driver who transports goods to/from the industry park 1302. Following the step 1512, processing is complete.

If it is determined at the test step 1508 that the user device is still in the area of the industry park 1302 (and thus should remain in the alternative mode), then control transfers from the test step 1508 to a step 1514 where the user device communicates with other devices of the industry park 1302. The communication may include any appropriate exchange of data, including using the user device to signify approval of component (e.g., a process or state of something) at the industry park 1302. The user device may also receive information, including state information, from one or more devices at the industry park 1302. The user device may also provide control information, including starting and stopping industrial processes, making adjustments, etc. Note also that GPS information from the user device may be used in connection with exchanging data so that, for example, the user device is required to be proximal to a location of an industrial component in order to provide related control of the component or adjustments or approvals for the component. Further, in some embodiments, the user device does not directly communicate with other devices of the industry park, but the communication flow is directed via a gateway and/or the cloud. Redirection of communication via gateways and/or the cloud is foreseen as some user devices might not reach security standards required for the industry park 1302. The gateways/cloud would then work as a "security master" adding security to the communication between the user device and other devices of the industry park.

In some embodiments, a status of a user device with respect to one or more of the other devices in the industry park 1302 may be determined. For example, one or more data objects associated with the user device and/or the industry park 1302 may be accessed, for example, from a gateway and/or server. A user (person) object may specify a site object for the industry park 1302, and one or more process objects associated with the user object, and specify one or more role attributes. The objects and attributes may collectively define one or more competencies of the user with respect to one or more processes in the industry park 1302. A separate company object may include one or more site objects, and one or more process objects, product objects, and rule objects for the company site, in relation to the one or more processes. The user object and the company object may be compared to determine the status of the user with respect to the one or more products and processes specified for the industry park 1302, for example, the permissions the user has with respect to places and other devices at the industry park 1302.

A status of the user and/or the user device with respect to the industry park 1302 or portions thereof may be determined, for example, by accessing one or more pertinent data objects (e.g., person/user object, site object, company object, etc.) and analyzing and comparing the attribute value of each, including, for example, safety and role attributes, to determine the status of the user and/or the user device with respect to a particular location. For example, pertinent data objects may define qualifications of a user for certain work with processes or corresponding other devices. The following are some examples:
1. A person/user object may specify qualifications of a person in detail using the following attributes and objects:
   a. Role attributes: Competent Process (specifying processes for which the person is competent), Safety Operations (e.g., according to Zones 0,1,2 of the hazardous environments as classified under NEC 500, NEC 505 and ATEX, which may be indicated to the user with Red, Yellow, Green Zones.);
   b. Safety attributes: IMEI (International Mobile Equipment Identity), to specify the user device of the person/user according to Zones 0,1,2 of the hazardous environments as classified under NEC 500, NEC 505 and ATEX, which may be indicated to the user with Red, Yellow, or Green marked user devices.
   c. Site and Process objects to define the detailed access rights (e.g., via NFC codes, or via QRC labels) of the person/user.
2. A process object may specify process requirements in detail using the following attributes and objects:
   a. Safety attributes to provide process safety classifications; and
   b. Products, devices, and rules to be applied for the process.
3. A company object is used to specify the mobile telephony, WIFI and geo-fencing attributes for a site, including:
   a. Site objects specifying technical attributes of co-ordinations, one or more mobile cell IDs of the site, etc., Technical co-ordinations and Mobile Cell ID
   b. Site objects specifying a technical attribute of a WIFI ID
   c. Site objects specifying site maps, geofencing areas and BT barriers.

It should be appreciated that the determination of the status of the user and/or the user device with respect to the area may have been performed prior to the detection of proximity to the area.

In some embodiments, in response to detection of proximity, for example, to a restricted or hazardous area (via geo-fencing or a BT barrier), one or more alerts may be issued. The one or more alerts may include a written electronic communication to one or more entities, for example, a gateway and/or server, security personnel and/or administrators of the industry park 1302, or to the user device, for example, as an email message, text message or other notification that may pop-up on the screen of the user device. The one or more alerts may include playing a sound (e.g., a ringtone) on the user device or vibrating the user device. The one or more alerts may also include a sound external to the user device (e.g., of a horn, buzzer or siren) and/or a visual indication on the physical premises (e.g., a blinking light, or the closing or lowering of a door, gate or barrier). In some embodiments, a gateway may be installed near (e.g., just outside) of a hazardous or restricted area, and include or be coupled to one or more physical devices (e.g., lights, speakers, doors, gates) that are physically close to the gateway. The gateway may control an alert being issued using one of the physical devices in response to the above-described proximity detection.

Whether or not to issue an alert, and the type of alert to issue, may depend on a safety classification of the area and a status of the user and/or user device with respect to the classification. For example, a hazardous or restricted area may have a safety classification of "Yellow" or "Red" or have no safety classification. Furthermore, the user may have a safety attribute object defined with respect to the area (e.g., in a person object of the user associated with the area), for example, or "Red", "Yellow" or none. Similarly, the user device may have a safety attribute defined for the area as well, e.g., a mobile safety equipment rating of Zone 1 or Zone 2. If the safety classification of the user is sufficient (i.e., qualified for red and yellow access, and the area has a safety classification of yellow), then no alert may issue. However, if the user is only qualified (via a safety attribute) for yellow, and the area has a safety classification of red, an alert may issue. The type (e.g., severity, and whether a sound, visual indication and/or electronic notification) of the alert may depend on any one or more of: the safety classification of the area; the safety qualification of the user; the safety qualification of the user device, the difference (e.g., in priority/severity) between any two of these attributes, and perhaps other factors (e.g., time of day, day of week, etc.). The issuance of an alert may be communicated and stored as a blockchain transaction record to/on one or more components of the TMN 100 per techniques described in more detail elsewhere herein.

In some embodiments, issuing alerts may be considered a first line of defense in preventing a user from access a restricted, perhaps dangerous, area of the industry park 1302. Other techniques and mechanisms for preventing such access, including locks and/or access codes, may serve as a second (or more) line of defense. In some embodiments, in response to the detection of proximity, one or more other devices in the area or that allow access to the area (e.g., a lock on a door or gate, or a vehicle, machine or device) may be locked or unlocked. Whether or not to lock or unlock a lock mechanism may depend on a safety classification of the area and a status of the user and/or the user device with respect to the classification, for example, in a manner similar to that described elsewhere herein.

In some cases, in response to detection of proximity of the user device, the user may be provided one or more access codes to access an area using the one or more codes, or not be provided the one or more access codes so that the user may not access the area. Whether or not to provide the access codes may depend on a safety classification of the area and a status of the user and/or user device with respect to the classification, for example, in a manner similar to that described elsewhere herein.

It should be appreciated that one or more communications may be transmitted as part of a block chain transactions.

Following the step 1514 is a test step 1516 where it is determined if an emergency situation exists. In an embodiment herein, the system may release the user device from the alternative mode in response to an emergency situation (e.g., a user dials "911" or "112" on a mobile phone). If so, then control transfers from the test step 1516 to a step 1518 where emergency mode functionality is maintained. In some cases an emergency situation may be detected by the mobile phone itself, e.g. in cases where a human may show symptoms of heart attacks and/or loss of consciousness due to a critical condition in the industry park or due to attacks on a person (e.g. guard). Such cases may be detected by a mobile phone operating in a trunked radio mode and utilizing movement sensors/physical sensors (e.g. watches) connected with the mobile device to detect outage of pulsation, breathing and/or movement. At the step 1518, the user device operates in an alternative mode using the base stations 1304-1307 of the industry park 1302 to trigger an alarm to the cloud that provides the GPS data like trunked radio services with dead man's control. Following the step 1518, control transfer back to the test step 1516 to determine if the alternative/emergency mode should be maintained (i.e., the emergency situation still exists). If so, control transfers to the step 1518 where the device remains in alternate mode with emergency functions activated (e.g. GPS, Sensor functions, camera functions) considering the ATEX NEC certifications of the respective device (if applicable). In some embodiments, the step 1516 may only be performed if an emergency call itself does not trigger an unsafe/dangerous situation. Otherwise, if it is determined at the test step 1516 that there is no emergency, then control transfers from the test step 1516 back to the step 1508, discussed above, for another iteration.

It should be appreciated that any of the processing illustrated herein may be performed by an SIID residing on an ICS of a TMN, in combination with logic executing on one or more other components and data structures of the TMN described herein. Also, in some embodiments, the security module 127 may be implemented as, or include one or more components or functionality of, the security module 313 described in relation to FIG. 3 and FIG. 5. The performance and security of the system described herein, including SIIDs, user devices, gateways and servers in the cloud 101, may be enhanced using security modules like the security module 127 or the security module 313 for data security operations. One or more of the security modules 127, 313 may be integrated into an SIID. The role of an SIID may be different in different ICSs.

Various embodiments discussed herein may be combined with each other in appropriate combinations in connection with the system described herein. Additionally, in some instances, the order of steps in the flowcharts, flow diagrams and/or described flow processing may be modified, where appropriate. Further, various aspects of the system described herein may be implemented using software, firmware, hardware, a combination of software, firmware and/or hardware and/or other computer-implemented modules or devices having the described features and performing the described functions.

Software implementations of the system described herein may include executable code that is stored on one or more computer readable media and executed by one or more processors. Each of the one or more computer readable media may be non-transitory and include a computer hard drive, ROM, RAM, flash memory, portable computer storage media such as a CD-ROM, a DVD-ROM, a flash drive, an SD card and/or other drive with, for example, a universal serial bus (USB) interface, and/or any other appropriate tangible or non-transitory computer readable medium or computer memory on which executable code may be stored and executed by a processor. In some embodiments of the system described herein, one or more computer media may be, include, or be included within a security module (which may include a TPM or SE) of a server, gateway, monitoring device, user device or other component of a TMN, as described in more detail elsewhere herein, providing a secure environment for storing, executing and updating software implementations of the system described herein. The system described herein may be used in connection with any appropriate operating system.

Other embodiments of the system described herein will be apparent to those skilled in the art from a consideration of the specification or practice of the system disclosed herein. It is intended that the specification and examples be considered as exemplary only, with the true scope and spirit of the invention being indicated by the following claims.

## Claims

1. A method of communicating between components that are part of an Internet Protocol (IP) network and a control device, comprising:
coupling the IP network to a dedicated cellular network;
the control device communicating directly with network components of the dedicated cellular network; and
transferring data between the components and the control device at a quality of service levels that corresponds to a quality of service level provided for voice communications in a non-dedicated cellular network.

2. The method of claim 1, wherein the IP network includes a cloud having core services that provide control signals to the control device.

3. The method of claim 2, further comprising at least one of the following:
• quality of service parameters are prioritized by an ICS management component of the core services of the cloud;
• the ICS management component provides cellular network services parameters that are used to control the core services of the cloud and the quality of service parameters;
• a subset of resources of the dedicated cellular network are reserved for industrial control systems;
• reserving communication and network resources for communication between the control device and the cloud;
• combining redundant network resources for communication between the control device and the cloud;
• the redundant network resources include base stations of the dedicated cellular network.

4. The method of claim 1, further comprising:
using a blockchain to provide an audit trail of settings of the network components, wherein the settings are for at least one of: a redundancy network, resource capacity settings, and quality of service parameters used in the dedicated cellular network.

5. The method of claim 1, wherein the quality of service levels include quality of service levels for the dedicated cellular network and separate quality of service levels for the IP network that are harmonized with the quality of service levels for the dedicated cellular network.

6. The method of claim 1, wherein security credentials used by the dedicated cellular network include at least one of: an operator code, an operator code credential, a cryptographic authentication key, or SIM card data.

7. The method of claim 6, wherein the cryptographic authentication key is used in a cellular mobile device that accesses the dedicated cellular network.

8. The method of claim 6, wherein the SIM card data includes at least one of: an integrated circuit card ID, a mobile station international subscriber directory number, or an international mobile subscriber identity.

9. A method of a user device accessing a dedicated cellular network, comprising:
providing the user device with a first mode corresponding to the user device communicating via a non-dedicated cellular network;
providing the user device with a second mode corresponding to the user device communicating via the dedicated cellular network; and
the user device switching from the first mode to the second mode in response to the user device being in proximity of the dedicated cellular network.

10. The method of claim 9, wherein each of the modes corresponds to a separate profile provided with the user device.

11. The method of claim 9, wherein the user device is presented to an NFC reader to signify being in proximity to the dedicated cellular network.

12. The method of claim 9, wherein a dedicated cellular network is provided as part of an industry campus having a plurality of other devices that provide industrial control functionality.

13. The method of claim 12, wherein, in the second mode, the user device exchanges data with at least some of the other devices.

14. The method of claim 13, wherein the user device provides approvals for components of the industry campus.

15. The method of claim 9, wherein the dedicated cellular network uses Time Division Duplex communication and the non-dedicated cellular network uses Frequency Division Duplex communication.
